Europäisches Patentamt

European Patent Office

Office européen des brevets

(19)

(11) Veröffentlichungsnummer: **0 192 225**
**A2**

(12) # EUROPÄISCHE PATENTANMELDUNG

(21) Anmeldenummer: 86102042.8

(22) Anmeldetag: 18.02.86

(51) Int. Cl.⁴: **G 05 D 23/19**
**F 24 D 19/10**

(30) Priorität: 18.02.85 DE 3505600
18.02.85 DE 3505601
18.02.85 DE 3505602
18.02.85 DE 3505603

(43) Veröffentlichungstag der Anmeldung:
27.08.86 Patentblatt 86/35

(84) Benannte Vertragsstaaten:
AT BE CH DE FR GB IT LI NL SE

(71) Anmelder: HAPPEL GmbH & Co.
Südstrasse
D-4690 Herne 2(DE)

(72) Erfinder: Kantner, Alexander, Dipl.-Phys. Dr.rer.nat.
Paul-Windgassen-Strasse 99
D-5630 Remscheid 11(DE)

(74) Vertreter: Patentanwaltsbüro Cohausz & Florack
Postfach 14 01 47
D-4000 Düsseldorf 1(DE)

(54) Verfahren und Vorrichtung zur Regelung der Temperatur in Räumen.

(57) Die Erfindung betrifft ein Verfahren zur Regelung der Temperatur in Räumen, die Heiz- oder Kühleinrichtungen mit Thermostatventilen aufweisen. Die Heiz- oder Kühleinrichtungen werden von einer zentralen Wärme- oder Kältequelle gespeist. Die von den Thermostatventilen beeinflußte Differenz der Vor- und Rücklauftemperatur wird im Gesamtmassenstrom ermittelt und entsprechend die Wärme- oder Kältequelle gesteuert. Für die Differenz der Vor- und Rücklauftemperatur ist ein Sollwert-Band angelegt, innerhalb dessen die zulässigen Werte der Temperaturdifferenz liegen. Das gesamte Sollwert-Band mit der Ober- und Untergrenze ist entsprechend den Anforderungen verschieblich, und in den Bereichen außerhalb des Sollwert-Bandes ist derjeweilige Ist-Wert zum Soll-Wert hin regelbar.

FIG. 1

EP 0 192 225 A2

# COHAUSZ & FLORACK

### PATENTANWALTSBÜRO

### SCHUMANNSTR. 97 D-4000 DÜSSELDORF 1

Telefon: (02 11) 68 33 46          Telex: 0858 6513 cop d

**PATENTANWÄLTE:**

Dipl.-Ing. W. COHAUSZ  ·  Dipl.-Ing. R. KNAUF  ·  Dipl.-Ing. H. B. COHAUSZ  ·  Dipl.-Ing. D. H. WERNER

0192225

— 1 —

13.02.1986
45256EP

HAPPEL  GmbH & Co.

D-4690 Herne 2

### Verfahren und Vorrichtung
### zur Regelung der Temperatur in Räumen

Die Erfindung betrifft gemäß einem ersten übergeordneten Erfindungsgedanken ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und die von den Thermostatventilen beeinflußte Differenz der Vor- und Rücklauftemperatur im Gesamtmassenstrom ermittelt und entsprechend die Wärme- oder. Kältequelle gesteuert wird und ist gemäß einem zweiten übergeordneten Erfindungsgedanken auf eine Vorrichtung zur Regelung der Temperatur in Räumen,
die Heiz- oder Kühleinrichtungen mit Thermostatventilen aufweisen,
wobei die Heiz- oder Kühleinrichtungen von einer zentralen
Wärme- oder Kältequelle gespeist werden und die von den Thermostatventilen beeinflußte Differenz der Vor- und Rücklauftemperatur im
Gesamtmassenstrom ermittelt und entsprechend die Wärme- oder Kältequelle gesteuert wird, mit einer Einrichtung zur Messung der Differenz der Vor- und Rücklauftemperatur im Gesamtmassenstrom und einer
Regeleinrichtung, durch welche in Abhängigkeit von der Messung derselben die Zu- oder Abfuhr von Wärmeenergie an das bzw. von dem
Wärmeträgermedium beeinflußbar ist, gerichtet, die sich vorzugsweise
zur Durchführung des Verfahrens nach dem ersten übergeordneten Erfindungsgedanken eignen soll.

Hierbei umfaßt der Begriff des Regelns (im späteren meist auch temperieren genannt) sowohl das Heizen als auch das Kühlen von Räumen,
welche ihrerseits Aufenthaltsräume für Menschen oder Tiere oder aber
auch Lagerräume für empfindliche Güter oder Maschinen bzw. Apparaturen, wie beispielsweise Computer oder dergleichen, oder aber auch
Räume sein können, in denen bestimmte Behandlungen an toter Materie
oder aber auch an Lebewesen, wie beispielsweise Bakterien- oder
Virenkulturen oder dergleichen, vorgenommen werden sollen, die in
solchen Fällen üblicherweise als Zuchträume bezeichnet werden. Entsprechend werden solche Räume entweder durch mit einer Wärmequelle
(im späteren meist auch Wärmeerzeuger genannt) verbundene Heizeinrichtung (im späteren meist auch Heizkörper genannt) oder aber durch
mit einer Kältequelle (im späteren meist auch Kälteerzeuger) verbundene Kühleinrichtungen geregelt (bzw. im späteren meist auch
temperieren genannt), wobei diese Heizeinrichtungen (Heizkörper)
oder Kühleinrichtungen jeweils mit Thermostatventilen (im späteren
meist auch automatisch wirkende Drosseleinrichtungen genannt) ausgerüstet sind.

Bei zu beheizenden Aufenthaltsräumen für Menschen wird bislang die Temperatur in diesen durch Steuerung der Temperatur des Wärmeträgermediums im Heizungsvorlauf (Vorlauftemperatur) einerseits und durch Regelung der Raumtemperatur andererseits beeinflusst. Die Anpassung der Vorlauftemperatur des Heiznetzes an den Wärmebedarf eines zu beheizenden Raumes oder eines Hauses erfolgt durch eine sogenannte außentemperatur- oder witterungsgeführte Vorlauftemperatursteuerung, bei der in Abhängigkeit von der durch einen Außentemperaturfühler erfaßten Außentemperatur mit Hilfe einer als "Heizkurve" bezeichneten Heizkennlinie die entsprechende Vorlauftemperatur gewählt wird. Hierbei ist man bemüht, die Heizkennlinie in jedem Fall so zu legen, daß sämtliche automatischen Drosseleinrichtungen der an das Heiznetz angeschlossenen Heizkörper, die bevorzugt in Form der weitverbreiteten thermostatischen Heizkörperventile ausgebildet sein können, die meistens einen Dehnstoffregler enthalten, in ihrem Regelbereich arbeiten. Daraus ergeben sich aber erhebliche Abweichungen zwischen der Sollkennlinie und der vom Heizungsinstallateur eingestellten Kennlinie. Erfahrungsgemäß pflegt nämlich der Heizungsinstallateur, da einerseits die nichtlineare Abhängigkeit der Außentemperatur von der Vorlauftemperatur nur durch eine Schar von Heizkennlinien wiederzugeben ist, wobei ihm der individuelle Zusammenhang von Außentemperatur und Vorlauftemperatur nicht bekannt ist, und andererseits auch noch weitere heizungsanlagenspezifische und/oder durch die Eigenheiten des zu beheizenden Raumes bzw. Hauses als Gesamtheit einer Vielzahl von Räumen bedingte Einflußgrößen zu berücksichtigen sind, vorsorglich eine hohe Kennlinie zu wählen, um sicherzustellen, daß die Vorlauftemperatur ausreichend hoch ist, um auch unter extremen Betriebsbedingungen, die einerseits durch extreme Schwankungen der Außentemperatur und andererseits durch extreme Anforderungen an die Raumtemperatur und nicht zuletzt durch ihm im einzelnen nicht bekannte ungünstige Eigenschaften des die zu beheizenden Räume bildenden Gebäudes und/oder der Heizungsanlage insbesondere bezüglich Wärmeverlusten durch Wärmeableitung und/oder -abstrahlung einerseits und/oder Wärmeaufnahme durch beispielsweise Sonneneinstrahlung andererseits, und zwar dies möglicherweise auch noch gleichzeitig bezüglich unterschiedlich gelegener Räume bedingt sein können, die gewünschten Raumtemperaturen zu gewährleisten. Abgesehen davon, daß somit das Einschätzen der Art der benötigten Heizkennlinie dem Heizungsinstallateur überlassen bleibt und damit ungeachtet einer etwaigen Möglichkeit nachträglicher Korrekturnachstellung hinsichtlich seiner Güte allein von dessen individueller Erfahrung abhängt, ist erfahrungsgemäß auf diese Weise nicht einmal eine brauchbare Annäherung an eine den tatsächlichen individuellen Verhältnissen gerecht werdende Sollkennlinie erreichbar, vielmehr sind häufig sogar beträchtliche Fehler durch falsches Einschätzen der Steilheit der Kennlinienkurve und deren Nullpunktes die Folge. Ein weiterer Mangel ist die schlechte Einstellsystematik. Abgesehen davon, daß häufig eine Anpassung der Heizkennlinie an die Gegebenheiten im über die Heizungsanlage mit Wärmeenergie bedienten Verbraucherkreis gar nicht möglich ist, ist für die Einstellung der jeweiligen Heizkennlinie die Kenntnis der Verhaltensweise der gesamten Heizungsanlage in bezug auf die Abhängigkeit ihrer einzelnen Betriebsparameter von den relevanten äußeren Einflußgrößen über mindestens zwei Heizperioden, d. h. zwei bis drei Jahre, unerläßlich. Hierdurch gestaltet sich die Optimierungsanpassung der Heizkennlinie schwierig und langwierig, und die nachteiligen Folgen hiervon sind unnötig hohe Stillstands- und Abstrahlungsverluste sowohl des Wärmeerzeugers, z. B. eines Heizkessels, als auch der Rohrleitungen des Heiznetzes. Nachteilig ist ferner, daß außentemperaturunabhängige Einflußgrößen, wie beispielsweise die Lüftungsgewohnheiten der Bewohner, die Sonneneinstrahlung durch Fensterflächen oder die Abwärme elektrischer Geräte, wie z. B. von Kühlschränken, Elektroherden oder Kopiergeräten oder dergleichen, bei bekannten witterungsgeführten Vorlauftemperatursteuerungen selbst bei verhältnismäßig präzise eingestellten Heizkennlinien systembedingt nicht berücksichtigt werden können.

Es ist ersichtlich, daß es sich bei solchen bekannten Vorlauftemperatursteuerungen bezüglich der Raumtemperatur um reine Steuerungen handelt, da eine Rückmeldung der Raumtemperatur fehlt.

Im Rahmen der individuellen Raumtemperaturregelung hat man daher zur individuellen Beeinflussung der Raumtemperatur in den einzelnen Räumen den Heizkörpern jeweils eine automatisch wirkende Drosseleinrichtung zugeordnet, die den in den jeweiligen Heizkörper eintretenden Massenstrom des Wärmeträgermediums in Abhängigkeit der Raum-Ist-Temperatur von einer Raum-Soll-Temperatur regelt. Diese selbsttätig wirkenden Drosseleinrichtungen können als Kombination eines Heizkörperventils mit auf dieses wirkendem Regelgerät mit Sollwertgeber, Temperaturfühler und Regler ausgebildet sein, es haben jedoch hierfür zusammenfassend als Heizkörperthermostat bezeichnete thermostatische Heizkörperventile weitverbreiteten Anklang gefunden, die meist als Dehnstoffregler oder aber als Dehnkörperregler mit einem als gekapselter und gasgefüllter Wellrohrkörper ausgebildeten Dehnkörper ausgeführt sind. Diese automatisch wirkenden Drosseleinrichtungen regeln zwar jeweils selbsttätig die Raumtemperatur, wobei der Massenstrom des den jeweiligen Heizkörper durchfließenden Wärmeträgermediums selbst eine Funktion der Regelabweichung, der Vorlauftemperatur, des in der gesamten Heizungsanlage herrschenden Drucks und nicht zuletzt auch spezieller Kenngrößen des Thermostatventils ist, sie sind jedoch proportional wirkende Regler und können die Raumtemperatur wegen der bleibenden Regelabweichung in der Größenordnung von in ungünstigen Fällen sogar bis zu 6 K nur ungenau auf den gewünschten Temperaturwert einregeln. Diese treten systembedingt dann auf, wenn die empirisch gewählte Heizkurve aufgrund ungünstiger Auslegung oder Wahl oder aufgrund von Fremdeinflüssen nicht dem tatsächlichen Angebot an Wärmeenergie entspricht. Dies führt nicht selten zu dem Bedürfnis, lüften zu müssen, das seinerseits wieder zu erfahrungsgemäß nicht unerheblichen Energieverlusten zu führen pflegt.

Und zwar erfaßt die über die automatisch wirkenden Drosseleinrichtungen arbeitende Einzelregelung eines jeden mit einem Heizkörper mit einer solchen Drosseleinrichtung ausgestatteten Raumes die auf diesen bzw. in diesem wirkenden außentemperatur- bzw. witterungsunabhängigen Fremdeinflüsse vorstehend beschriebener Art, jedoch wird systembedingt die Vorlauftemperatur nicht optimal, d. h. in jedem Falle auf einem zu hohen Wert, gefahren. Hierdurch ergeben sich die unerwünschten Kessel- und Rohrleitungsverluste. Beide sind nämlich vornehmlich abhängig vom arithmetischen Durchschnitt der Temperatur der Vorlaufleitung und der Temperatur der Rücklaufleitung, der wiederum wesentlich bestimmt wird durch die Vorlauftemperatur. Wenn hier die Vorlauftemperatur zu hoch gewählt ist, was bei einer außentemperatur- bzw. witterungsgeführten Vorlauftemperatursteuerung aus Gründen zuverlässiger Bedienung aller Räume mit dem erforderlichen Wärmeenergienachschub bevorzugt wird, ergeben sich erfahrungsgemäß beachtliche Energieverluste über der Betriebszeit.

Um hier zumindest in gewissem Maße Abhilfe zu schaffen, hat man bereits sogenannte Raumtemperaturkorrekturaufschaltungen vorgesehen. Bei diesen wird in einem Referenzraum ein Raumthermostat vorgesehen, der die allen herrschenden Einflüssen unterliegende Raum-Ist-Temperatur desselben mißt und dafür sorgt, daß dann, wenn in diesem Referenzraum die Raum-Soll-Temperatur erreicht oder überschritten wird, die Vorlauftemperatur durch Ausschalten des Kessels zurückgenommen wird, während andererseits ein Einschaltsignal für den Kessel von diesem Raumthermostaten her solange bestehen bleibt, wie eine Differenz zwischen Raum-Ist-Temperatur und Raum-Soll-Temperatur dieses Referenzraumes gemessen wird.

Abgesehen von den durch das Erfordernis einer zusätzlichen Verkabelung zwischen Referenzraumthermostat und Kesselsteuerung (Vorlauftemperatur-Steuerung) bedingten Unannehmlichkeiten bezüglich Arbeitsaufwand und/oder benötigter Montagezeit und/oder Schmutzanfall und insbesondere auch aus allen angesprochenen anderen Gesichtspunkten nicht unbeträchtlichen Kosten ist eine solche Raumtemperaturkorrekturaufschaltung auch aus im eigenen System liegenden Gründen unbefriedigend. Einerseits nämlich ist bereits das Maß der jeweiligen Änderung der Vorlauftemperatur in Abhängigkeit von der Abweichung der Referenzraum-Ist-Temperatur von der Referenzraum-Soll-Temperatur nicht anders als nur empirisch zu wählen, unterliegt also grundsätzlich der Möglichkeit nicht unbeträchtlicher Fehler bereits in der Wahl der Abhängigkeit der Vorlauftemperatur von der genannten Referenzraum-Temperatur-Abweichung, und zum anderen steht man vor der praktisch kaum lösbaren Schwierigkeit der Auswahl des Referenzraums selbst. Wird nämlich, was aus Gründen der Sicherstellung ausreichenden Wärmeenergienachschubs zu allen anderen Räumen zu empfehlen wäre, als Referenzraum ein im allgemeinen verhältnismäßig kühler Raum bzw. ein Raum mit vergleichsweise hohem Wärmeverlust gewählt, so wird einerseits die Vorlauftemperatur für den Einzelbedarf der anderen – insbesondere aus Gründen der beschriebenen Fremdeinflüsse wärmeren – Räume zu hoch gewählt und lassen sich praktisch in jenen Räumen die dort auftretenden Fremdeinflüsse nicht nutzen, um die Vorlauftemperatur abzusenken. Wird hingegen als Referenzraum ein verhältnismäßig warmer Raum bzw. ein Raum mit verhältnismäßig geringem Wärmeverlust gewählt, so ist es nicht auszuschließen, daß insbesondere aufgrund von Fremdeinflüssen der beschriebenen Art, möglicherweise aber auch außentemperatur- bzw. witterungsbedingten Einflüssen, wie beispielsweise eines Kälteinbruchs, die anderen Räume unterversorgt werden. Ein solcher Zustand ist natürlich höchst unerwünscht und ermöglicht im übrigen gleichfalls nicht die individuelle Berücksichtigung der genannten außentemperatur- bzw. witterungsunabhängigen Fremdeinflüsse. In beiden Fällen ist die notwendige Folge eine systembedingt nicht vermeidbare Wärmeenergievergeudung.

Diese Probleme einer sich somit allenfalls für Beheizung grundsätzlich relativ gleichmäßig warmer Räume oder einer extrem geringen Zahl unterschiedlich warmer Räume eignenden Raumtemperaturkorrekturaufschaltung bekannter Art werden noch gravierender, wenn es gilt, das Heizungsverhalten für eine Vielzahl von Raumgesamtheiten, wie beispielsweise der jeweils mehrere Räume unterschiedlicher Temperaturanforderungen aufweisenden Wohnungen eines Mehrfamilienhauses, in dem angesprochenen Sinne zu optimieren. Hier nämlich stellt sich zusätzlich das Problem, welche der Wohnungen einen Referenzraum erhalten soll oder, wenn jede einen Referenzraum für sich erhalten sollte, welcher der einzelnen Referenzräume hinsichtlich seiner Raum-Soll-Ist-Temperatur-Abweichung Vorrang haben soll. Abgesehen davon, daß eine solche Korrekturaufschaltung eine höchst aufwendige und kostenintensive Vorranglogik benötigen würde, könnte sie die in sie zu setzenden Erwartungen praktisch kaum erfüllen, weil dies zur Voraussetzung hätte, daß bereits vorab eine Einigung über das zulässige Maß der Referenzraum-Soll-Ist-Temperatur-Abweichung getroffen wurde. Ist dies nämlich nicht der Fall, so muß aus den gleichen Gründen, wie vorstehend für den Fall einer einzigen Wohnung mit mehreren Räumen erläutert, eine Vorabentscheidung darüber getroffen werden, ob der auf die geringste oder der auf die größte Soll-Ist-Temperatur-Abweichung eingestellte Referenzraum die Führungsfunktion für die Veränderung der Vorlauftemperatur übernehmen soll. Unter diesen Umständen aber wird es für die überwiegende Art und Zahl von Einsatzfällen eher zu empfehlen sein, auf eine solche Raumtemperaturkorrekturaufschaltung überhaupt zu verzichten.

Angesichts dieser vielfältigen Schwierigkeiten hat man bereits auf unterschiedliche Weise versucht, eine echte Regelung der Wärmeenergie-Zufuhr in Abhängigkeit vom Bedarf zu verwirklichen. Hierfür hat man versucht, aus einzelnen für das Betriebsverhalten des Heizungsvorganges bestimmenden Größen, wie beispielsweise der Rücklauftemperatur zusätzlich zur schon immer als Steuerungsgröße benutzten Vorlauftemperatur und/oder der Differenz von Vorlauf- und Rücklauftemperatur gegebenenfalls unter weiterer Berücksichtigung in ihrer Größe und Einflußsystematik willkürlich angenommener Einflußgrößen, wie der einen oder anderen der vorstehend genannten außentemperatur- bzw. witterungsunabhängigen Fremdeinflußgrößen, Gesetzmäßigkeiten zu abstrahieren, von denen zu erwarten ist, daß sie mit möglichst guter Genauigkeit die sich bei natürlichem Verhalten der Heizungsanlage einstellenden Verhältnisse weitestgehend annähern.

Zu diesem Zwecke wurde für den speziellen Sonderfall einer mit einem Heizkessel mit im Ein-Aus-Betrieb arbeitendem Brenner und dem Kessel nachgeschaltetem Mischer betriebenen Heizungsanlage versucht, durch vereinfachende Annahmen einen mathematischen Algorithmus aufzustellen, der für die Behandlung in einem Mikrocomputer so geeignet ist, daß mittels dessen die Mischerstellung geregelt werden kann, wobei dieser Algorithmus mit lediglich Temperaturwerten auskommt, die einfach im Betrieb zu messen sind. Dieser Algorithmus soll, um eine Möglichkeit zu schaffen, in Abhängigkeit von der Differenz von Vorlauf- und Rücklauftemperatur Einfluß auf die Mischerstellung und damit die in das Heizungssystem eingespeiste Wärmeleistung nehmen zu können, dem Produkt aus einer Konstanten, der Differenz von Vorlauf- und Raum-Ist-Temperatur sowie der Differenz von Raum-Soll-Temperatur und Raum-Ist-Temperatur entsprechen. Abgesehen davon, daß ein solcher Algorithmus Gültigkeit allenfalls in einem sehr begrenzten Bereich haben kann, ist die Abweichung des Raumtemperaturwertes von dem am Thermostatventil des Raumheizkörpers eingestellten Raumtemperatur-Sollwert ihrerseits eine ebenfalls variable Größe, so daß es nicht möglich ist, die Regelung der Mischerstellung und damit der Vorlauftemperatur mit Hilfe der Differenz von Vorlauf- und Rücklauftemperatur vorzunehmen. Daher sieht dieser bekannte Vorschlag vor, eine nach der Differenz von Vorlauf- und Raum-Ist-Temperatur normierte Temperaturdifferenz einzuführen, die dann nur noch dem Produkt aus der genannten Konstanten und der Differenz der Raum-Soll-Temperatur und der Raum-Ist-Temperatur, also der Abweichung der gemessenen Raumtemperatur von der Solltemperatur, entspricht. Daraus ergibt sich – naturgemäß immer nur unter Hinnahme der zugrundeliegenden vereinfachenden Annahmen und in dem resultierenden engen Geltungsbereich – eine eine Proportionalität zwischen der Vorlauftemperatur und der Rücklauftemperatur wiedergebende geradlinige Verknüpfung dieser beiden Temperaturen. Damit will dieser bekannte Vorschlag die Vorlauftemperatur und damit die Menge der zugeführten Wärmeenergie bzw. die Wärmeleistung steuern.

0192225

Abgesehen davon, daß die diese Beziehung bestimmenden Konstanten frei zu wählen sind, ohne daß es hierfür logische Bezugspunkte gäbe, wodurch auch die diesen Steueralgorithmus bestimmende Kurvensteilheit ohne jeden Anspruch auf auch nur annähernde Übereinstimmung mit den in der Wirklichkeit des Betriebes einer Heizungsanlage auftretenden Verhältnissen willkürlich gewählt werden muß, kann eine über diesen Algorithmus gesteuerte Heizungsanlage weder anfahren noch in einem Betriebszustand, in dem die zugeführte Wärmeenergie ungefähr dem von der Anlage geforderten Verbrauch entspricht, ausreichend stabil arbeiten. Bereits aus prinzipieller Sicht muß es bei einer solchen Betriebsweise zu Mitkopplungen und damit Regelschwingungen kommen, die nach diesem bekannten Vorschlag durch nicht beschriebene, angeblich geeignete Maßnahmen im Programm des Mikrocomputers unterbunden werden sollen. Selbst wenn dies möglich sein sollte, könnte dies allenfalls für wiederum sehr eng begrenzte Regelbereiche gelten und würde dies mit sich bringen, daß das gesamte Steuerungsverhalten noch weiter von dem je nach Heizungsanlage, Klimazone, Ortslage, Bauphysik und Nutzergewohnheiten unterschiedlichen e-Funktionen folgenden wirklichen Verhalten einer solchen Heizungsanlage abweicht.

Eine andere bekannte, als Regelung bezeichnete Verfahrensweise versucht diesen Nachteilen dadurch zu begegnen, daß bei einer Heizungsanlage, die über einen Kessel oder eine Wärmepumpe mit Wärmeenergie versorgt wird, die Vorlauftemperatur so geändert wird, daß die Differenz zwischen Vorlauf- und Rücklauftemperatur auf einem vorgegebenen Sollwert gehalten wird, wobei dieser Sollwert wiederum als Funktion der Rücklauftemperatur vorgegeben ist und mit steigender Rücklauftemperatur konstant bleiben oder bevorzugt linear zunehmen kann. Die Veränderung der sich im Betrieb einstellenden Differenz von Vorlauf- und Rücklauftemperatur erfolgt dabei über eine Veränderung der Vorlauftemperatur, während die Rücklauftemperatur die Funktion der Führungsgröße übernimmt. Zur entsprechenden Nachführung der Vorlauftemperatur wird bei einer Ausführung dieser bekannten Heizungsanlage mit einem im Ein-Aus-Betrieb arbeitenden Kessel und diesem nachgeschaltetem Drei-Wege-Mischer die Mischerstellung verändert und bei einer anderen Ausführungsform dieser bekannten Heizungsanlage mit gleichfalls diskontinuierlich arbeitendem Kessel ohne nachgeschalteten Mehrwege-Mischer die Zufuhr von Betriebsenergie zum Brenner des Kessels getaktet unterbrochen bzw. wieder aufgenommen. Zur Vermeidung der Anfahrschwierigkeiten der erstbeschriebenen bekannten Heizungsanlage wird unterhalb einer vorgegebenen Rücklauftemperatur, also in einem vorgegebenen Anfahrbereich, mit konstantem Sollwert der Vorlauftemperatur gefahren. Hierfür ist es erforderlich, in der Vorlaufleitung ein von der Differenz von Vorlauf- und Rücklauftemperatur abhängiges Mengenbegrenzungsventil einzuschalten und stromabwärts von diesem Vorlauf- und Rücklaufleitung mit einer Rückmischleitung zu verbinden, in der eine konstante Strömungsdrossel angeordnet ist. Andererseits ist es auch möglich, unterhalb eines vorgegebenen Wertes der Rücklauftemperatur die Differenz zwischen Vorlauf- und Rücklauftemperatur nicht etwa linear zu verkleinern, was - wie vorstehend beschrieben - durch Konstanthaltung der Vorlauftemperatur erfolgt, sondern diesen durch die Differenz von Vorlauf- und Rücklauftemperatur gegebenen Sollwert selbst konstant zu halten. In allen Fällen erfolgt dann für oberhalb des die Beendigung des Aufheizvorganges markierenden Grenzwertes der Rücklauftemperatur liegende Werte derselben eine ansteigende Nachführung des durch die Differenz von Vorlauf- und Rücklauftemperatur gegebenen Sollwertes.

Ersichtlich umgeht diese bekannte Lösung somit das Unvermögen des erstbeschriebenen bekannten Vorschlages, die Heizungsanlage anfahren zu können, und zwar dies dadurch, daß hier bewußt auf eine regelungs- bzw. steuerungstechnische Beeinflussung der Anlage für die Dauer des Anfahrvorganges verzichtet wird, vielmehr für diesen ein willkürlich gewähltes Verhalten vorgegeben wird. Für den Zustand angefahrenen Betriebes der Heizungsanlage weist diese bekannte Lösung jedoch im wesentlichen die gleichen nachteiligen Eigenschaften auf wie der vorher beschriebene bekannte Vorschlag. Auch hier nämlich wird eine lineare Abhängigkeit der Sollgröße von der Rückmeldegröße, nämlich hier der Rücklauftemperatur, willkürlich erzwungen und deren funktionsbestimmende Konstanten, nämlich Sockelbetrag und Steilheit, gleichfalls willkürlich und ohne jede erkennbare logische Bezugnahme auf natürliche Betriebswerte oder Eigenschaften der Heizungsanlage vorgegeben. Die notwendige Folge hiervor ist auch hier ein unerwünschtes Mitkopplungsverhalten mit kaum zu beherrschenden nervösen Schwingungsreaktionen, und zwar dies aus Gründen der Konzeption dieser bekannten Lösung über deren gesamtem Betriebsbereich der Rücklauftemperatur. Die dieser bekannten Konzeption zugrundeliegende Annahme, daß mit steigender Rücklauftemperatur auch stets die Differenz zwischen Vorlauf- und Rücklauftemperatur zunehmen müßte und umgekehrt oder aber auch konstant bleiben könnte, ist allenfalls für stationäre Betrachtung gültig, im tatsächlichen Betriebsverhalten einer Heizungsanlage, das stets dynamisch ist, ist es jedoch der Regelfall, daß diese angenommene Beziehung nicht stimmt, also durchaus bei höheren Rücklauftemperaturen vergleichsweise niedrigere Temperaturdifferenzen zwischen Vorlauf und Rücklauf auftreten können und umgekehrt bei verhältnismäßig tiefen Rücklauftemperaturen sogar sehr hohe Differenzen zwischen Vorlauf- und Rücklauftemperatur zu verzeichnen sein können. Und gerade dies führt zu jenen unerwünschten Mitkopplungen im Betriebsverhalten. Und weiterhin ist ersichtlich diese bekannte Lösung nicht universell einsetzbar. Beispielsweise für Wärmepumpen oder aber für im Ein-Aus-Betrieb arbeitende Kessel mit keiner oder nur geringer Vorlage an Wärmeträgermedium und entsprechend geringer Wärmespeicherkapazität ist diese bekannte Lösung unbrauchbar. Die Ausführungsform dieser bekannten Lösung mit Beeinflussung der Zufuhr der Betriebsenergie zum diskontinuierlich arbeitenden Brenner, die ohne Mehrwege-Mischer auskommen soll, ist grundsätzlich auf eine gewisse Mindest-Wärmespeicherkapazität angewiesen und kann auch bei deren Vorhandensein nur höchst unbefriedigend arbeiten. Wird nämlich beispielsweise aufgrund eines erhöhten Wärmebedarfs die Vielzahl der Heizkörper für Durchströmen einer größeren Menge an Wärmeträgermedium geöffnet, so resultiert hieraus eine steigende Rücklauftemperatur und damit ein geringer werdender Meßwert der Temperaturdifferenz zwischen Vorlauf und Rücklauf. Nach der Konzeption dieser bekannten Lösung bedeutet dies eine Anforderung von mehr Wärmeenergie vom Kessel her. Dieser jedoch muß auf seinen Speicher arbeiten und kann die erforderliche Wärmeenergie (Wärmeleistung) erst abgeben, wenn sein Speicher ausreichend aufgeladen ist. Nicht selten aber ist zu verzeichnen, daß die Parameter des Heizungssystems sich während dieser Aufladezeit so verändert haben, daß nunmehr der frühere Bedarf nicht mehr benötigt bzw. der Speicher jetzt seine aufgeladene Wärmeenergie nicht mehr los wird. Dies führt außer zu einem ungünstigen Regelverhalten zu nicht unbeträchtlichen Energieverlusten mit entsprechender Unwirtschaftlichkeit des Betriebes einer solchen bekannten Heizungsanlage.

Weiterhin ist für ein Heizungssystem gattungsgemäßer Art mit einem Kessel als Wärmeerzeuger mit einem im Ein-Aus-Betrieb arbeitenden Brenner mit über einen Mikrorechner gesteuerter Zufuhr seiner Betriebsenergie, bei der zudem auch noch die Vorlaufleitung und die Rücklaufleitung über eine mit einem eingebauten Überströmventil als Begrenzer für den im Vorlauf fließenden Massenstrom versehene Überströmleitung in Verbindung stehen, vorgeschlagen worden, über einen verhältnismäßig komplizierten Rechenalgorithmus, der demgemäß auch eine einigermaßen aufwendige Implementierung im Mikrorechner bedingt, aus der Differenz von Vorlauf- und Rücklauftemperatur des Wärmeträgermediums, die im übrigen wahlweise noch mit einem Verstärkungsfaktor multipliziert werden kann, um eine Tages- und eine Nachtsteuerung realisieren zu können, durch Addition eines die durch den Kessel bedingte minimale Vorlauftemperatur repräsentierenden Wertes einen Sollwert für die Vorlauftemperatur zu bilden und diesen mit dem gemessenen Istwert desselben zu vergleichen und bei Feststellung einer Abweichung beider den Istwert durch Ein- und Ausschalten des Brenners nachzuregeln, wobei davon ausgegangen wird, daß der die Nachtsteuerung des Brenners gegenüber dessen Tagessteuerung bestimmende Verstärkungsfaktor, mit dem die Differenz von Vorlauf- und Rücklauftemperatur multipliziert wird, eine gebäudespezifische Stellgröße ist. Obgleich sich auch bei dieser bekannten Lösung eine lineare Abhängigkeit der Vorlauftemperatur von der Rücklauftemperatur ebenso wie der Differenz von Vorlauf- und Rücklauftemperatur von der Rücklauftemperatur mit allen bereits im Zusammenhang mit den anderen bekannten Lösungen beschriebenen nachteiligen Folgen ergibt, ist die Wirkung dieser bekannten Lösung eine andere als bei der letztbeschriebenen. Hier nämlich erzwingt das zwischen Vorlauf- und Rücklaufleitung eingeschaltete Überströmventil einen praktisch konstanten Massenstrom im Heizkörperkreislauf, indem immer dann, wenn mindestens eines der thermostatischen Heizkörperventile aufgrund einer Änderung des Wärmebedarfs im jeweils zugeordneten Raum drosselt, ein der damit erzwungenen Verringerung des Massenstroms des Wärmeträgermediums entsprechender Anteil zwangsweise über das Überströmventil unmittelbar in den zum Rücklauf gehörigen Kesseleinlauf zurückgespeist wird. Dies aber bedeutet hier, daß in solchen Fällen zu großen Wärmeangebotes an die Heizkörper die Rücklauftemperatur nicht etwa fallen würde, wie bei der vorher beschriebenen bekannten Lösung, sondern hier aufgrund der Zuspeisung von Vorlaufanteil über das Überströmventil steigt. Die Folge davon ist, daß hier die Vorlauftemperatur für steigende Rücklauftemperatur und nicht für fallende Rücklauftemperatur zurückgenommen werden muß. Zwar versucht diese bekannte Lösung somit von den sich daraus, daß der Massenstrom im Heizkörperkreis praktisch nicht zu beherrschen ist, bei den vorher beschriebenen bekannten Lösungen ergebenden nachteiligen Folgen dadurch loszukommen, daß zwangsweise dieser Massenstrom konstant gehalten wird, jedoch erkauft diese bekannte Lösung dies durch eine gefährliche Rekursion ihres zugrundeliegenden Rechenalgorithmus. Dieser nämlich sieht vor, daß aus den Meßwerten von Vorlauftemperatur und Rücklauftemperatur ein Sollwert für die Vorlauftemperatur gebildet und anschließend mit diesem Sollwert der sich tatsächlich einstellende Istwert der Vorlauftemperatur verglichen wird. Liegt eine Abweichung vor, so ist der Istwert der Vorlauftemperatur an deren Sollwert durch Ein- und Ausschalten des Brenners anzugleichen. Dadurch aber generiert sich aus dem zugrundeliegenden Algorithmus notwendigerweise ein neuer Sollwert für die Vorlauftemperatur. Mit anderen Worten heißt dies, daß jede Regel-

änderung automatisch einen neuen Sollwert der Vorlauftemperatur nach sich zieht. Dies aber führt notwendigerweise zu Instabilitäten der gesamten Regelung. Diesem systemimmanenten Nachteil kann auch nicht der weitere Vorschlag dieser bekannten Lösung Abhilfe schaffen, die Differenzbildung aus Vorlauf- und Rücklauftemperatur in der Umlaufzeit des Wärmeträgermediums entsprechenden periodischen Zeitabständen und nicht sogleich vorzunehmen. Diese bekannte Lösung erreicht somit trotz ihres durch das Überströmventil und dessen Montage bedingten Mehraufwandes weder das ihr gesetzte Ziel noch einen brauchbaren Vorteil gegenüber den anderen bekannten Lösungen.

Allen diesen bekannten Lösungen ist weiterhin gemeinsam, daß sie im Prinzip keine echten Regelungen darstellen, denn sie benutzen zur Bildung ihrer jeweiligen Sollwerte stets die Rückmeldegröße, indem entsprechend dem jeweiligen zur Verwendung kommenden Rechenalgorithmus diese Rückmeldegröße für die Bildung des Sollwertes bestimmend wird. Das aber bedeutet nichts anderes, als daß der Sollwert stets abhängig ist von der Rückmeldegröße und damit seine Generierung eine Funktion des Istzustandes des Heizungssystems wird, mit anderen Worten also der Sollwert stets in dem Sinne nachgezogen wird, daß er dem jeweiligen Istwert nachläuft. Eine Regelung aber ist dadurch bestimmt, daß für sie definiert ist, was Istwert und was Sollwert ist, mithin der Sollwert stets vom Istwert unterscheidbar und unabhängig zu sein hat, weil sich nur auf diese Weise eine Abweichung des Istwertes vom Sollwert auf Eliminierung derselben regeln läßt.

In diesem Sinne aber stellen sämtliche bekannten Lösungen nicht Regelungen, sondern Steuerungen dar, wobei sie als Rückmeldegrößen keine wie auch immer gearteten unabhängigen Informationen des Heizungssystems benutzen, sondern Größen, die eigentlich keine echten Informationen über den Wärmebedarf des zu beheizenden Gebäudes zu tragen geeignet sind, denen jedoch pseudo-empirische Zusammenhänge aufgepfropft werden, die ihrerseits zudem auch noch - wie vorstehend bereits dargelegt - allenfalls Annäherungen an das tatsächliche Funktionsverhalten der miteinander gemäß der jeweiligen angenommenen algorithmischen Verknüpfung mit allen entsprechenden durch Näherungsannahmen bedingten Fehlern sind. Diese somit nur Steuerungen darstellenden bekannten Lösungen erweisen sich somit in mancherlei Hinsicht den bekannten außentemperatur- bzw. witterungsgeführten Steuerungen sogar noch unterlegen. Letztere arbeiten zwar bekanntlich nicht gerade besonders wirtschaftlich, sie unterliegen jedoch nicht - wie die beschriebenen bekannten Lösungen ohne Führung über die Außentemperatur - dem gefürchteten und praktisch nicht zu vermeidenden Mitkopplungsverhalten, das die erforderliche Stabilität einer Regelung ausschließt. Wenn nämlich beispielsweise aufgrund zusätzlicher Wärmelieferung durch einen oder mehrere der beschriebenen außentemperatur- bzw. witterungsunabhängigen Fremdeinflüsse bei den bekannten Lösungen ohne Außentemperaturführung der Istwert der Führungsgröße, wie beispielsweise der Vorlauftemperatur oder der Differenz von Vorlauf- und Rücklauftemperatur, steigt, so wird automatisch auch der Sollwert für die betreffende Größe angehoben, was aufgrund der zugrundegelegten Funktionsverknüpfung von Sollwert und Rückmeldegröße wiederum zu einer solchen Veränderung der Rückmeldegröße führt, die ihrerseits eine weitere Veränderung des Sollwertes in der gleichen Richtung veranlaßt. Dies aber wäre ein Mitkopplungsverhalten gegen unendlich, das ein Ausbrechen der Regelung zur Folge hätte. Im umgekehrten Falle, beispielsweise eines zusätzlichen Wärmebedarfs etwa durch plötzlich geöffnete Fenster oder aber eines starken Kälteeinbruchs oder dergleichen, würde die Rückmeldegröße eine Verringerung der Wärmezufuhr fordern und aufgrund ihrer funktionalen Verknüpfung mit dem Sollwert diesen senken, um als Folge hiervon ihrerseits sich zu verringern und dadurch eine Nachführung des Sollwertes in Abhängigkeit von ihrer eigenen Änderung und im gleichen Sinne wie dieselbe zu erzwingen. Die Folge hiervor wäre, daß bei diesen bekannten Lösungen ohne Außentemperaturführung das gesamte Heizsystem unvermeidbar in einen Betriebszustand mit ständig ausgeschaltetem Wärmeerzeuger fährt und keine Möglichkeit mehr hat, selbst eine Wiederaufnahme oder Erhöhung der Wärmezufuhr zu sich selbst zu veranlassen.

Und schließlich ist allen diesen bekannten Lösungen auch noch gemeinsam, daß sie jeweils nicht für alle Arten von Heizungsanlagen, wie gleichzeitig für solche mit kontinuierlich befeuertem Wärmeerzeuger oder diskontinuierlich befeuertem bzw. betriebenem Wärmeerzeuger mit oder ohne Speicher und/oder mit oder ohne nachgeschaltetem Mehrwege-Mischer, und schon gar nicht für Kühlanlagen geeignet sind.

Der Vollständigkeit halber sei auch noch erwähnt, daß diese bekannten Lösungen zwar jeweils eine Möglichkeit angeben, von einem Tagesbetrieb auf einen Nachtbetrieb umzuschalten, sie sind jedoch sämtlich nicht dafür geeignet, stark unterschiedliche Wärmeanforderungen in einzelnen Räumen zu erfüllen, wie beispielsweise in einem bestimmten Raum über den bzw. die diesem zugeordneten Heizkörper eine besonders hohe Temperatur im Sinne eines Komfortbetriebes aufrechtzuerhalten, während andere Räume auf vergleichsweise sehr niedriger Temperatur zu halten sind. Zwar haben die automatischen Drosseleinrichtungen der den einzelnen Räumen zugeordneten Heizkörper jeweils eigene Sollwertgeber für die jeweilige Raumtemperatur, jedoch können erfahrungsgemäß Heizungsanlagen gemäß diesen bekannten Lösungen nicht einen Heizbetrieb optimal fahren, bei dem in einem Raum oder einer Vielzahl von Räumen eine sehr hohe Temperatur und in einem anderen Raum oder einer Vielzahl solcher anderer Räume davon wesentlich unterschiedliche niedrigere Temperaturen aufrecht erhalten werden sollen, da bei diesen bekannten Steuerungen, auch wenn sie als Regelungen bezeichnet werden, das gesamte System nur für einen Betriebszustand ausgelegt werden kann. In einem solchen Falle von Auslegung für beispielsweise einen normaler Wärmeanforderung entsprechenden Betrieb, der stets eine Begrenzung der in einem beliebigen zu beheizenden Raum maximal erzielbaren bzw. aufrechterhaltbaren Raumtemperatur zur Folge hat, kann zwar in einem gewissen Rahmen, der durch die Stellspanne der einzelnen Sollwertgeber für die Raumtemperatur vorgegeben ist, die Raumtemperatur in den einzelnen Räumen unterschiedlich gehalten werden, jedoch ist es in solchen Fällen nicht möglich, einen Raum oder mehrere Räume auf sehr hoher Temperatur zu halten (Komfortbetrieb für diesen Raum bzw. diese Räume), wie das beispielsweise im Wohnbereich für Zimmer mit kranken oder rekonvaleszenten Benutzern oder im industriellen Bereich für spezielle Zuchträume mit Brutfunktion der Fall sein kann. Eine Auslegung für solchen Komfortbetrieb ist bei diesen bekannten Lösungen vom Prinzip her nicht möglich. Dadurch aber ist auch jede Möglichkeit für eine im Interesse einer weitestgehenden Universalität der Anpassungsmöglichkeiten an anlagen- und/oder bauspezifische sowie klimazonen- und/oder ortslagenbedingte und besonders auch benutzerspezifische Parameter an sich wünschenswerte Umschaltung von einer Betriebsart, die zwar höhere Wärmeverluste in Kauf nimmt, dabei aber in einem Raum oder mehreren oder allen Räumen die Aufrechterhaltung einer wesentlich höheren Temperatur ermöglicht, auf einen beispielsweise als Nachtabsenkungs- oder Frostschutzbetrieb zu bezeichnenden Betrieb, der in Zeiten geringen Wärmebedarfs in den betreffenden Räumen minimale Wärmeverluste garantiert, mit oder ohne eine oder mehrere zwischengeschaltete Betriebsstufe(n) bei diesen bekannten Lösungen ausgeschlossen.

Der Erfindung liegt somit die Aufgabe zugrunde, mit einfachen und kostengünstigen Mitteln unter Vermeidung der Nachteile der für Heizen bekannten Lösungen eine bedarfsweise sowohl für Heizen als auch für Kühlen unabhängig von der Art des Wärme- bzw. Kälteerzeugers mit kontinuierlichem oder diskontinuierlichem Betrieb und unabhängig davon, ob die Wärme- bzw. Kälteleistung dem im Heizungs- bzw. Kühlmittelvorlauf befindlichen Wärmeträgermedium kontinuierlich oder diskontinuierlich zugeführt wird, gleichermaßen einsetzbare Möglichkeit zu schaffen, die Raumtemperaturen einer Vielzahl von zu beheizenden bzw. zu kühlenden Räumen individuell jeweils auf einem gewünschten Wert zu halten, und zwar dies in dem Sinne optimal, daß Vorteile nicht nur hinsichtlich der Universalität der Einsetzbarkeit für Einrohr- oder Zweirohrheizungen bzw. -kühlungen mit oder ohne kontinuierlich oder diskontinuierlich arbeitendem Mehrwege-Mischer, sondern auch ökonomischer Art in bezug auf insbesondere Vereinfachung von Produktion, Lagerhaltung, Distribution, niedrigen Gestehungspreis, Vereinfachung der Montage, Erweiterung des technischen Einsatzfeldes und Nachrüstbarkeit und schließlich auch technischer Art erzielbar sind, indem bereits bei der Ersterstellung einer Heizungs- oder Kühlanlage nach der Erfindung Planung und Einsatz der Regeleinrichtung derart möglich sein soll, daß erstmalig schon in diesem Stadium auf eine etwa beabsichtigte Erweiterung oder aus irgendwelchen Gründen vorgesehene zukünftige Umrüstungen, wie beispielsweise nachträglichen Einbau einer Wärmepumpe oder Kältemaschine zusätzlich zu einem ursprünglich vorgesehenen Wärme- bzw. Kälteerzeuger anderer Art, Rücksicht genommen werden kann, oder aber die Nachrüstung einer Klimaanlage zusätzlich zu einer vorhandenen Heizungsanlage oder umgekehrt einer Heizungsanlage zusätzlich zu einer vorhandenen Kühlanlage oder aber auch die Nutzung einer für Winterbetrieb vorhandenen Heizungsanlage als im Sommerbetrieb arbeitende Kühlanlage ermöglicht wird, wobei in allen Fällen mit erheblichen arbeits- und schmutzmäßigen Belastungen verbundene Umrüstungsarbeiten bezüglich Kabelverlegungen etc. weitestgehend vermeidbar sein sollen. Dabei soll gleichzeitig die Möglichkeit gegeben sein, jederzeit wunschgemäß von einer Betriebsart, die die Aufrechterhaltung einer bei Heizung sehr hohen bzw. bei Kühlung sehr tiefen Temperatur in einem Raum oder mehreren oder allen an das Heizungs- bzw. Kühlungssystem angeschlossenen Räumen gewährleistet, mit oder ohne Zwischenschaltung eines Betriebszustandes oder mehrerer Betriebszustände mit bei Heizung geringerer bzw. bei Kühlung höherer erreichbarer Raumtemperatur, jedoch auch geringeren Wärmeverlusten durch Wärme- bzw. Kälteableitung und/oder -abstrahlung auf eine Betriebsart umschalten zu können, bei der aufgrund bei Heizung sehr niedriger bzw. bei Kühlung sehr hoher benötigter Raumtemperaturen die Wärmeverluste minimal gehalten werden können.

Dies wird durch die Erfindung in überraschend einfacher und wirtschaftlicher Weise dadurch erreicht, daß gemäß dem auf ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und die von den Thermostatventilen beeinflußte Differenz der Vor- und Rücklauftemperatur im Gesamtmassenstrom ermittelt und entsprechend die Wärme- oder Kältequelle gesteuert wird, gerichteten ersten übergeordneten Erfindungsgedanken daß für die Differenz der Vor- und Rücklauftemperatur ein Sollwert-Band angelegt ist, innerhalb dessen die zulässigen Werte der Temperaturdifferenz liegen, daß das gesamte Sollwert-Band mit der Ober- und Untergrenze entsprechend den Anforderungen verschieblich ist und daß in den Bereichen außerhalb des Sollwert-Bandes der jeweilige Ist-Wert zum Soll-Wert hin kontinuierlich regelbar ist. Dabei kann in Fortführung der Erfindung zweckmäßig eine Abweichung der Differenz von Vorlauf- und Rücklauftemperatur des Wärmeträgermediums über die obere Grenze des vorgegebenen Sollwert-Bandes hinaus durch Verringerung und eine Abweichung dieser Temperaturdifferenz unter die untere Grenze des vorgegebenen Sollwert-Bandes durch Vergrößerung der in den Heizungs- bzw. Kühlmittelvorlauf eingespeisten Wärme- bzw. Kälteleistung eliminiert werden.

Die Eliminierung der Differenz des Ist-Wertes zum Sollwert-Band kann dabei je nach Anwendungsfall stetig kontinuierlich, oder quasi kontinuierlich, oder diskontinuierlich (z. B. durch Ein- und Ausschalten) erfolgen.

Der auf eine Vorrichtung zur Regelung der Temperatur in Räumen, die Heiz- oder Kühleinrichtungen mit Thermostatventilen aufweisen, wobei die Heiz- oder Kühleinrichtung von einer zentralen Wärme- oder Kältequelle gespeist werden und die von den Thermostatventilen beeinflußte Differenz der Vor- und Rücklauftemperatur im Gesamtstrom ermittelt und entsprechend die Wärme- oder Kältequelle gesteuert wird, mit einer Einrichtung zur Messung der Temperatur des Wärmeträgermediums am Eintritt in den Heizungs- bzw. Kühlmittelvorlauf
(Vorlauftemperatur) und einer Einrichtung zur Messung der Temperatur
des Wärmeträgermediums in der die die einzelnen Heizkörper bzw.
Kühleinrichtungen durchströmenden Einzelmassenströme desselben zusammenfassenden Rücklaufleitung (Rücklauftemperatur) und einér Einrichtung zur Ermittlung der Differenz dieser beiden Temperaturen sowie einer Regeleinrichtung, durch welche in Abhängigkeit von dieser
aus den Meßwerten von Vorlauf- und Rücklauftemperatur des Wärmeträgermediums ermittelten Temperaturdifferenz die Zu- oder Abfuhr
von Wärmeenergie an das bzw. von dem Wärmeträgermedium beeinflussbar
ist, gerichtete Erfindungsgedanke kennzeichnet sich durch eine
Regeleinrichtung mit einstellbaren Sollwertgebern für je einen eine
obere und eine untere Grenze eines Sollwert-Bandes der Differenz von
Vorlauf- und Rücklauftemperatur bildenden oberen und unteren Sollwert derselben und einer über eine Impulsleitung mit der ihrerseits
über je eine Meßwertleitung mit den Einrichtungen zur Messung von
Vorlauf- und Rücklauftemperatur verbundenen Einrichtung zur Ermittlung der Differenz von Vorlauf- und Rücklauftemperatur verbundenen Vergleichseinrichtung zur Bestimmung der Abweichung dieser
Differenz von Vorlauf- und Rücklauftemperatur über die obere
und/oder unter die untere Grenze ihres Sollwert-Bandes sowie mit
einem über eine Steuerleitung mit einer Einrichtung zur
Beeinflussung der in den Heizungs- bzw. Kühlmittelvorlauf
eingespeisten Wärmeleistung verbundenen Stellbefehlgeber.

Hierbei ist hervorzuheben, daß unter dem Begriff der Grenze des
Sollwert-Bandes der Differenz von Vorlauf- und Rücklauftemperatur
des Wärmeträgermediums, nämlich der oberen ebenso wie der unteren
Grenze desselben, eine betragsmäßige Größe dieser Temperaturdifferenz zu verstehen ist, wobei es auf das sich aus der Definition als
Differenz von Vorlauftemperatur und Rücklauftemperatur des Wärmeträgermediums ergebende positive oder negative Vorzeichen nicht ankommt. Abweichung über die obere Grenze des Sollwert-Bandes bedeutet
demgemäß stets eine Abweichung zu einem größeren Betrag der Differenz von Vorlauf- und Rücklauftemperatur und eine Abweichung unter die untere Grenze des Sollwert-Bandes eine Abweichung zu einem kleineren Betrag dieser Temperaturdifferenz hin. Eine besonders vorteilhafte Folge hiervon ist, daß, nachdem schon erstmalig eine bisher nicht für möglich gehaltene Lösung für das sich bei Heizbetrieb und das sich bei Kühlbetrieb stellende Problem vorgeschlagen wird, diese Lösung auch noch durch ein für sowohl Heizen als auch Kühlen gemeinsames Verfahren und eine entsprechend ausgebildete Vorrichtung gelöst wird, und daß darüber hinaus dadurch, daß es erfindungsgemäß lediglich auf die betragsmäßige Größe der als Führungsgröße für die Regelung verwandten physikalischen Größe in Form der Differenz von Vorlauf- und Rücklauftemperatur des Wärmeträgermediums ankommt, etwaige Implementierungsfehler oder Fehlleitungen von Impulsen im Zuge der Weiterverarbeitung von Messwerten der relevanten Temperaturgrößen weitestgehend bedeutungslos werden.

Es ist ersichtlich, daß durch die Erfindung erstmalig eine Möglichkeit geschaffen wird, ein Heizungsverfahren so führen zu können, daß eine echte Regelung mit einem von einer Rückmeldegröße unabhängigen Sollwert vorliegt, wobei nach der Konzeption der Erfindung die Funktion des Sollwertes nicht etwa durch einen konstanten oder gar in irgend einer Form gemäß einer irgendwie gearteten Abhängigkeit nachgeführten Wert einer der für das Heizungsverfahren bestimmenden physikalischen Größen, sondern in Form eines Sollwert-Bandes vorgegeben wird, und zwar dies spezifisch in Form eines durch eine obere Grenze und eine untere Grenze der Differenz von Vorlauf- und Rücklauftemperatur bestimmten Sollwert-Bandes. Zudem bietet die Konzeption der Erfindung erstmalig die Möglichkeit, mit den gleichen Verfahrensschritten und gleichen Mitteln eine solche echte Regelung in praktisch voller Universalität ungeachtet der Art der Ausbildung der Heizungsanlage insbesondere hinsichtlich der Art der Erzeugung bzw. Einbringung der erforderlichen Wärmeleistung zu verwirklichen, wobei es grundsätzlich gleichgültig ist, ob beispielsweise der Wärmeerzeuger als für kontinuierlichen oder aber für Ein-Aus-Betrieb ausgelegter Kessel mit oder ohne als Wärmespeicher dienender Wärme-

trägermediums-Vorlage sowie mit oder ohne nachgeschalteter Mehrwege-Mischeinrichtung oder aber als entsprechend konzipierte Wärmepumpe ausgebildet ist. Dabei ist besonders hervorzuheben, daß die Erfindung sich nicht nur erstmalig gleichermaßen auch für Kühlanlagen eignet, sondern bei diesen geradezu gegenüber Heizungsanlagen noch gesteigerte Vorteile erbringt. Bereits die Beseitigung der eingangs beschriebenen Nachteile bekannter Lösungen für den Betrieb von Heizungsanlagen durch die Erfindung stellt eine wesentliche Weiterentwicklung der Technik auf dem Gebiet des Heizens dar, es gelten jedoch sämtliche für eine Heizungsanlage gattungsgemäßer Art dargelegten Gesichtspunkte in noch schwerwiegenderem Maße für Kühlen. Dies hat seinen prinzipiellen Grund darin, daß Kälteerzeuger, wenn sie als mit elektrischer Energie angetriebene Kompressionskältemaschinen ausgeführt sind, eine Leistungszahl von 2 bis 3 und, wenn sie als gas- und/oder dieselmotorisch betriebene Kompressions- oder als Absorptionskältemaschinen ausgeführt sind, eine Leistungszahl bzw. ein Wärmeverhältnis von 0,4 bis 0,6 haben, während entsprechende Wärmeerzeuger eine Leistungszahl bzw. ein Wärmeverhältnis haben, die bzw. das prinzipiell um 1 größer ist. Das aber bedeutet, daß grundsätzlich eine Wärmepumpe immer einen besseren Wärmewirkungsgrad hat als eine Kältemaschine einen Kältewirkungsgrad, bei der die in Form von Kälteleistung abgegebene Leistung bezogen auf den Energieeinsatz immer kleiner ist. Entsprechend ist die Erzeugung von Kälteleistung grundsätzlich sehr viel kostspieliger als die von Wärmeleistung.

Anzustreben ist daher aus energetischer Sicht für Kühlbetrieb eine möglichst hohe Vorlauftemperatur des Wärmeträgermediums bei möglichst geringer Temperaturspreizung über den einzelnen Kühleinrichtungen, um die gewünschte niedrige Raumtemperatur zu erreichen oder zu erhalten. Führung der Vorlauftemperatur des in einer Kühlanlage befindlichen Wärmeträgermediums über die Außentemperatur ist somit genauso wenig optimal, wie eine Führung der Vorlauftemperatur des Wärmeträgermediums einer Heizungsanlage über die Außentemperatur, wie vorstehend erläutert. Wenn nämlich die Außentemperatur eine zu niedrige Vorlauftemperatur in der Kühlanlage vorschreibt, müßten die automatisch wirkenden Drosseleinrichtungen zu stark drosseln, so daß sich für den Kälteerzeuger ein zu hoher Betriebsenergie-Einsatz ergibt, und zwar dies ganz abgesehen davon, daß unterhalb gewisser Temperaturen des im Kühlbereich arbeitenden Wärmeträgermediums bei Raumkühlung eine Luftentfeuchtung zu zusätzlichem Energieaufwand und entsprechenden nicht unerheblichen Zusatzkosten führt, prinzipiell auch deshalb, weil die Leistungszahl bzw. das Wärmeverhältnis des Kälteerzeugers bei tiefen Wärmeträgermediums-Temperaturen (Kühlmitteltemperaturen) und hohen Außentemperaturen in gleicher Weise abfällt wie die Leistungszahl bzw. das Wärmeverhältnis einer Wärmepumpe einer Heizungsanlage bei tiefen Außentemperaturen und hoher Vorlauftemperatur. Es würde also ein gleiches Maß an Verschlechterung der Leistungszahl bzw. des Wärmeverhältnisses, das für eine Wärmepumpe allenfalls noch tolerierbar ist, für eine Kältemaschine zu untragbaren Verhältnissen führen. Sogar für einen mit Gas oder Öl oder elektrischer Energie betriebenen Kessel wäre ein schlechterer Wirkungsgrad aus Energie- und Kostensicht eher tolerierbar als für eine Kältemaschine.

Es ist ersichtlich, daß sich gerade aufgrund dieses prinzipiellen Unterschiedes des Kühlverfahrens gegenüber dem Beheizen vom Räumen alle vorstehend für Heizen als nachteilig erläuterten Verhältnisse für Kühlen noch in jeder Hinsicht ungünstiger auswirken.

Die Lösung nach der Erfindung garantiert im Gegensatz zu bekannten Lösungen mit dem vorstehend bereits beschriebenen gefürchteten Mitkopplungsverhalten mit den dadurch resultierenden Gefahren für die Stabilität der Verfahrensführung erstmalig nicht nur ein funktionsfähiges Anfahrverhalten, sondern auch eine zuverlässige Stabilität eines zudem auch noch eine echte Regelung verwirklichenden Betriebsverfahrens, wobei nicht nur ein Außentemperaturfühler nicht erforderlich, sondern sogar unerwünscht ist, im übrigen aber wesentliche Eingriffe in eine bestehende Anlage ebenso unnötig sind wie die Ausstattung einer die Erfindung verwirklichenden Heizungs- bzw.

Kühlanlage im Ersterstellungsfall, da die Erfindung von der Seite des Anschlusses von Meßgeräten für verfahrensführende physikalische Größen mit einfachen Temperaturfühlern auskommt, die auch im Wege von Außenbandagen auf die betreffenden das Wärmeträgermedium führenden Leitungen aufgebracht werden können. Die auf diese Weise aus vielfältigen Gründen durch die Erfindung erzielbaren Vorteile hinsichtlich Vereinfachung und Erleichterung der Montage und Einsparung von Arbeitszeit und Schmutzbelästigungen und die damit insgesamt einhergehende Steigerung der Wirtschaftlichkeit nicht nur aus dem Gesichtspunkt einer Möglichkeit der erheblichen Senkung des Gestehungspreises, sondern auch der Einsparung von Betriebskosten liegen auf der Hand. Nicht unerwähnt in diesem Zusammenhang aber dürfen die Möglichkeiten für gravierende Einsparungen an für die Verfahrensführung aufzuwendender Wärme- bzw. Kälteenergie bleiben, durch welche erfindungsgemäß der Wärme- bzw. Kältewirtschaftswirkungsgrad erheblich gesteigert werden kann.

Ein weiterer Vorteil der Erfindung ist darin zu sehen, daß für diese ein wie auch immer gearteter Rechenalgorithmus nicht erforderlich ist, vielmehr die Erfindung mit der höchst einfachen Anweisung auskommt, daß immer dann, wenn die Führungsgröße in Form der Differenz von Vorlauf- und Rücklauftemperatur die eine Grenze des erfindungsgemäßen Sollwert-Bandes überschreitet, ein bestimmter Einfluß auf die Stellgröße in Form der Zuführung von Wärme- bzw. Kälteenergie zum Heizungs- bzw. Kühlmittelvorlauf genommen wird, während bei Ausscheren dieser Führungsgröße über die andere Grenze ihres Sollwert-Bandes hinweg die gleiche Stellgröße eben in der anderen Richtung beeinflusst wird. Während also alle bekannten Lösungen statisch deterministisch arbeiten, das heißt in diesem Sinn mit formal beschreibendem Algorithmus und - wie schon ausgeführt - unzulänglich linearen Beziehungen, die dynamisch keinerlei Gültigkeit haben und entsprechend mit der Überwindung von systemimmanenten Schwierigkeiten zu kämpfen haben, geht die Erfindung von einem ganz anderen Ansatz, der viel eher als ein dynamisch stochastischer zu bezeichnen ist, aus und überwindet gerade wegen seines innewohnenden dynamischen Prinzips, das für alle Zeiten gültig ist und niemals zu irgendeiner Instabilität neigen kann, alle vorgenannten Schwierigkeiten und heimst dabei aufgabengemäß den Vorteil ein, ohne Messungen von anlagen- bzw. gebäudespezifischen und/oder nutzerbezogenen physikalischen Größen und auch ohne Zuhilfenahme notwendigerweise mehr oder weniger gequälter Rechenalgorithmen jegliche wie auch immer gearteten Außen- und/oder Inneneinflüsse auf den tatsächlichen Wärmebedarf automatisch mitzuberücksichtigen und dadurch einen optimal wirtschaftlichen Betrieb gewährleisten zu können.

Dabei sieht die Erfindung, die grundsätzlich für Einsatz in Verbindung erstmalig auch mit Wärme- bzw. Kälteerzeugern, die im Ein-Aus-Betrieb arbeiten, konzipiert worden ist, gemäß einer speziellen zweckmäßigen Ausgestaltung die Lösungsmöglichkeit für einen zuverlässigen Betrieb sogar einer bisher technisch noch nicht verwirklichten Ausführung solcher Wärme- bzw. Kälteerzeuger vor, nämlich solcher mit extrem geringer Wärmespeicherfähigkeit, wie beispielsweise besonders kleiner Wärmepumpen mit sehr kleinem Wärmetauscher bzw. Kondensator bzw. für gas- oder ölbefeuerte Durchlauferhitzer, sogenannte Thermen oder Geyser. Für solche und ähnliche Einsatzfälle sieht die Erfindung gemäß einem untergeordneten Erfindungsgedanken vor, daß bei Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger als kleinerer Sollwert des Sollwert-Bandes der Temperaturdifferenz eine Temperaturdifferenz gewählt wird, die für Heizbetrieb einem sich nach einer vorgegebenen Zeitspanne nach Ausschaltung der Zufuhr von Betriebsenergie zum Wärme- bzw. Kälteerzeuger einstellenden Maß unter einem vorgegebenen Referenzwert für die Rücklauftemperatur des Wärmeträgermediums und für Kühlbetrieb einem sich nach einer vorgegebenen Zeitspanne nach Ausschaltung der Zufuhr von Betriebsenergie zum Wärme- bzw. Kälteerzeuger einstellenden Maß über einem vorgegebenen Referenzwert für die Vorlauftemperatur des Wärmeträgermediums gewählt wird, wobei diese Temperaturdifferenz sich als Negativ-Temperaturdifferenz darstellt. Dies liegt daran, daß diese Temperaturdifferenz für Heizbetrieb aus der Differenz von willkürlich gewählter Referenztemperatur und der nach Ausschalten der Zufuhr von Betriebsenergie zum Wärmeerzeuger im Verlauf der Zeit weiter abfallenden Vorlauftemperatur gebildet wird, wobei für eine vorbestimmte Zeitspanne ab dieser Beendigung der Zufuhr von Betriebsenergie die Vorlauftemperatur stets einen kleineren Wert als den Referenzwert des Rücklaufs erreicht, mithin der Therm $(T_{Vorlauf(t)} - T_{Ref})$ negativ ist, wohingegen die für Kühlbetrieb relevante Temperaturdifferenz der Differenz von willkürlich gewählter Referenztemperatur und der nach Ausschalten der Zufuhr von Betriebsenergie zum Kälteerzeuger im Verlauf der Zeit über diese Referenztemperatur ansteigenden Rücklauftemperatur entspricht, wobei für eine vorbestimmte Zeitspanne ab dieser Beendigung der Zufuhr von Betriebsenergie die Rücklauftemperatur stets einen größeren Wert als den Referenzwert des Vorlaufs erreicht, mithin auch der Therm $(T_{Ref} - T_{Rücklauf(t)})$ negativ ist. Dabei kann in weiterer zweckmäßiger Ausgestaltung dieses untergeordneten Erfindungsgedankens eine Abweichung der Differenz von Vorlauf- und Rücklauftemperatur des Wärmeträgermediums über die obere Grenze des vorgegebenen Sollwert-Bandes hinaus durch Verringerung und eine Abweichung dieser Temperaturdifferenz (Negativ-Temperaturdifferenz) unter die untere Grenze des vorgegebenen Sollwert-Bandes durch Vergrößerung der in den Heizungs- bzw. Kühlmittelvorlauf eingespeisten Wärme- bzw. Kälteleistung eliminiert werden. Dabei ist darauf hinzuweisen, daß ein Unterschreiten der unteren Grenze des Sollwert-Bandes das Erreichen eines kleineren Wertes der betreffenden Temperaturdifferenz bedeutet. Zur einfachen Festlegung eines zuverlässig funktionstüchtigen Wertes für die Referenztemperatur kann gemäß weiterer zweckmäßiger Fortbildung dieses untergeordneten Erfindungsgedankens als Referenztemperatur für Heizbetrieb die Rücklauftemperatur und für Kühlbetrieb die Vorlauftemperatur des Wärmeträgermediums zu dem Zeitpunkt gewählt werden, zu dem nach Ausschalten der Zufuhr von Betriebsenergie zum Wärme- bzw. Kälteerzeuger die Differenz von Vorlauf- und Rücklauftemperatur des Wärmeträgermediums praktisch ihren Verschwindwert erreicht. Auf diese Weise wird nämlich ohne zusätzliche Maßnahmen ein zu einem bevorzugt beobachteten Zeitpunkt ohnehin anfallender Meßwert zur Bildung der Wiedereinschaltgrenze der Heizungs- bzw. Kühlanlage herangezogen. Es ist ersichtlich, daß durch diesen untergeordneten Erfindungsgedanken ohne Schwierigkeiten und zusätzlichen Aufwand auch für solche Heizungs- bzw. Kühlsysteme ein zweiter Schaltpunkt künstlich geschaffen wird, für die mangels ausreichenden Speicherverhaltens aus ihrem Zeitverhalten ein solcher unabhängig nicht herleitbar wäre.

In weiterer vorteilhafter Fortbildung der Erfindung kann eine Abweichung der Differenz von Vorlauf- und Rücklauftemperatur des Wärmeträgermediums über die obere Grenze des vorgegebenen Sollwert-Bandes hinaus durch Verringerung der in den Heizungs- bzw. Kühlmittelvorlauf eingespeisten Wärme- bzw. Kälteleistung entsprechend dem Maß dieser Abweichung und eine Abweichung der Differenz von Vorlauf- und Rücklauftemperatur des Wärmeträgermediums unter die untere Grenze des vorgegebenen Sollwert-Bandes durch Vergrößerung der in den Heizungs- bzw. Kühlmittelvorlauf eingespeisten Wärme- bzw. Kälteleistung entsprechend dem Maß dieser Abweichung eliminiert werden. Entsprechend kann die Regeleinrichtung einen einerseits über eine Impulsleitung mit der Vergleichseinrichtung und andererseits über eine weitere Impulsleitung mit dem Stellbefehlgeber verbundenen Proportionalregler aufweisen. Es hat sich nämlich überraschend herausgestellt, daß entgegen einem in der Fachwelt bestehenden Vorurteil, daß mit reinem Proportionalregler Heizungsregelungen nicht zweckgerecht zu verwirklichen seien, bei der Erfindung durchaus handelsübliche reine Proportionalregler verwendbar sind, um jedes ungünstige Schwingungsverhalten der Regelvorrichtung nach der Erfindung, das bei dieser ohnehin nicht zu erwarten ist, zuverlässig auszuschalten.

Zur Verbesserung der Genauigkeit der Regelung kann in weiterer zweckmäßiger Ausgestaltung der Erfindung das Gesamtmaß der Abweichung der Differenz von Vorlauf- und Rücklauftemperatur des Wärmeträgermediums über die obere Grenze des vorgegebenen Sollwert-Bandes hinaus im Verlauf der Zeit ermittelt und eine Abweichung dieser Temperaturdifferenz über die obere Grenze dieses Sollwert-Bandes hinaus durch Verringerung der in den Heizungs- bzw. Kühlmittelvorlauf eingespeisten Wärme- bzw. Kälteleistung entsprechend diesem Gesamtmaß der Abweichung dieser Temperaturdifferenz eliminiert und/oder das Gesamtmaß der Abweichung der Differenz von Vorlauf- und Rücklauftemperatur des Wärmeträgermediums unter die untere Grenze des vorgegebenen Sollwert-Bandes im Verlauf der Zeit ermittelt und eine Abweichung dieser Temperaturdifferenz unter die untere Grenze dieses Sollwert-Bandes durch Vergrößerung der in den Heizungs- bzw. Kühlmittelvorlauf eingespeisten Wärme- bzw. Kälteleistung entsprechend diesem Gesamtmaß der Abweichung dieser Temperaturdifferenz eliminiert werden. Entsprechend kann die Regeleinrichtung einen über Impulsleitungen mit der Vergleichseinrichtung und dem Proportionalregler sowie dem Stellbefehlgeber verbundenen Integralregler mit zeitabhängigem Integrierwerk für die Abweichung der Differenz von Vorlauf- und Rücklauftemperatur über die obere Grenze des Sollwert-Bandes derselben hinaus und/oder zeitabhängigem Integrierwerk für die Abweichung der Differenz von Vorlauf- und Rücklauftemperatur unter die untere Grenze des Sollwert-Bandes derselben aufweisen. Hierdurch werden sämtliche Regelabweichungen der Differenz von Vorlauf- und Rücklauftemperatur des Wärmeträgermediums von dem die Führungsgröße bildenden Sollwert-Band, die überhaupt aufgetreten sind, über die Zeit integriert und je nach Größe des Integrals Stellbefehle ausgeführt, was über die Zeit eine besonders genaue Einregulierung in die Sollgröße mit guter Dämpfung bzw. gutem Einschwingverhalten ermöglicht.

Weiterhin sieht eine andere zweckmäßige Fortbildung gemäß einem untergeordneten Erfindungsgedanken zwecks Erzielung nicht unbeträchtlicher Energieeinsparungen vor, daß das Maß der zeitlichen Änderung einer Abweichung der Differenz von Vorlauf- und Rücklauftemperatur des Wärmeträgermediums über die obere Grenze des vorgegebenen Sollwert-Bandes hinaus und/oder der zeitlichen Änderung dieses Maßes zeitlicher Änderung der Abweichung dieser Temperaturdifferenz ermittelt und diese Abweichung dieser Temperaturdifferenz durch Verringerung der in den Heizungs- bzw. Kühlmittelvorlauf eingespeisten Wärme- bzw. Kälteleistung entsprechend diesem Maß der zeitlichen Änderung der Abweichung dieser Temperaturdifferenz bzw. diesem Maß der zeitlichen Änderung dieses Maßes zeitlicher Änderung der Abweichung dieser Temperaturdifferenz eliminiert und/oder das Maß der zeitlichen Änderung einer Abweichung der Differenz von Vorlauf- und Rücklauftemperatur des Wärmeträgermediums unter die untere Grenze des vorgegebenen Sollwert-Bandes und/oder der zeitlichen Änderung dieses Maßes zeitlicher Änderung der Abweichung dieser Temperaturdifferenz ermittelt und diese Abweichung dieser Temperaturdifferenz durch Vergrößerung der in den Heizungs- bzw. Kühlmittelvorlauf eingespeisten Wärme- bzw. Kälteleistung entsprechend diesem Maß der zeitlichen Änderung der Abweichung dieser Temperaturdifferenz bzw. diesem Maß der zeitlichen Änderung dieses Maßes zeitlicher Änderung der Abweichung dieser Temperaturdifferenz eliminiert wird. Entsprechend kann zweckmäßig die Regeleinrichtung einen über Impulsleitungen mit der Vergleichseinrichtung und dem Proportionalregler und/oder gegebenenfalls dem Integralregler sowie mit dem Stellbefehlgeber verbundenen Differentialregler mit einer Einrichtung zur Bestimmung des Maßes der zeitlichen Änderung einer Abweichung der Differenz von Vorlauf- und Rücklauftemperatur über die obere Grenze des vorgegebenen Sollwert-Bandes derselben hinaus und/oder einer Einrichtung zur Bestimmung des Maßes der zeitlichen Änderung einer Abweichung der Differenz von Vorlauf- und Rücklauftemperatur unter die untere Grenze des vorgegebenen Sollwert-Bandes derselben und/oder einer Einrichtung zur Bestimmung der zeitlichen Änderung des Maßes der zeitlichen Änderung einer Abweichung der Differenz von Vorlauf- und Rücklauftemperatur über die obere Grenze des Sollwert-Bandes derselben hinaus und/oder einer Einrichtung zur Bestimmung der zeitlichen Änderung des Maßes der zeitlichen Änderung einer Abweichung der Differenz von Vorlauf- und Rücklauftemperatur unter die untere Grenze dieses Sollwert-Bandes aufweisen.

Gemäß einem anderen untergeordneten Erfindungsgedanken kann in weiterer zweckmäßiger Fortbildung der mit einem Integral-Anteil arbeitenden Regelung nach der Erfindung das Gesamtmaß der Differenz von Vorlauf- und Rücklauftemperatur des Wärmeträgermediums und das Gesamtmaß der der oberen oder der der unteren Grenze des Sollwert-Bandes derselben entsprechenden Differenz von Vorlauf- und Rücklauftemperatur des Wärmeträgermediums im Verlauf der Zeit ermittelt und als Maß für die Optimierung der Verstärkung und/oder der Nachstellzeit und/oder der Vorhaltzeit der Eliminierung der Abweichung der Differenz von Vorlauf- und Rücklauftemperatur des Wärmeträgermediums über die obere bzw. unter die untere Grenze ihres Sollwert-Bandes das Verhältnis dieser beiden Gesamtmaße oder dessen Reziprokwert gewählt werden. Hierfür kann mit Vorzug implementierungstechnisch der Integralregler ein zeitabhängiges Integrierwerk für die Differenz von Vorlauf- und Rücklauftemperatur oder jeweils ein weiteres zeitabhängiges Integrierwerk für die der als Bezugsgröße für die jeweilige Abweichung der Differenz von Vorlauf- und Rücklauftemperatur dienenden oberen oder unteren Grenze des Sollwert-Bandes derselben entsprechende Temperaturdifferenz und die Regeleinrichtung eine jeweils über Impulsleitungen mit beiden Integrierwerken verbundene Einrichtung zur Bildung des Verhältnisses zeitgleicher Ergebnisse beider Integrierwerke oder dessen Reziprokwertes aufweisen.

Hierdurch läßt sich ungeachtet der beschriebenen Möglichkeiten, entweder das Gesamtmaß der Differenz von Vorlauf- und Rücklauftemperatur des Wärmeträgermediums über der Zeit ins Verhältnis zu dem Gesamtmaß der dieser oberen Grenze des Sollwert-Bandes entsprechenden Differenz von Vorlauf- und Rücklauftemperatur im Verlauf der Zeit zu setzen oder durch umgekehrte Verhältnisbildung den Reziprokwert dieses Verhältnisses zu ermitteln oder aber das Gesamtmaß der Differenz von Vorlauf- und Rücklauftemperatur des Wärmeträgermediums im Verlauf der Zeit ins Verhältnis zum Gesamtmaß der dieser unteren Grenze des Sollwert-Bandes entsprechenden Differenz von Vorlauf- und Rücklauftemperatur im Verlauf der Zeit zu setzen oder auch hier den Reziprokwert dieses Verhältnisses zu bilden, eine etwaige Überver-

sorgung der Heizungs- bzw. Kühlanlage zur Normversorgung feststellen. Somit lassen sich höchst einfach und bequem mit kostengünstigen Implementierungsmitteln Energiebilanzen ziehen, darstellen und sogar unmittelbar oder mittelbar nutzen. Insbesondere lassen sich auch zulässige Energieüber- oder -unterversorgungen vorgeben. Das aber bedeutet eine Möglichkeit für die Optimierung der Regelvorrichtung im Sinne einer Schärfung der Empfindlichkeit derselben.

Eine weitere Feinschärfung in dieser Richtung läßt sich dadurch erreichen, daß das Gesamtmaß der Abweichung der Differenz von Vorlauf- und Rücklauftemperatur des Wärmeträgermediums über die obere oder unter die untere Grenze ihres vorgegebenen Sollwert-Bandes und das Gesamtmaß der der Differenz von oberer und unterer Grenze des Sollwert-Bandes entsprechenden Differenz von Vorlauf- und Rücklauftemperatur des Wärmeträgermediums im Verlauf der Zeit ermittelt und beide Gesamtmaße miteinander addiert und als Maß für die Optimierung der Verstärkung und/oder der Nachstellzeit und/oder der Vorhaltzeit der Eliminierung der Abweichung dieser Temperaturdifferenz über die obere bzw. unter die untere Grenze ihres Sollwert-Bandes das Verhältnis dieser Summe zum Gesamtmaß der der Differenz von oberer und unterer Grenze des Sollwert-Bandes entsprechenden Differenz von Vorlauf- und Rücklauftemperatur des Wärmeträgermediums oder der Reziprokwert dieses Verhältnisses gewählt wird. Hierfür kann vorrichtungsseitig zweckmäßig der Integralregler außer einem ersten zeitabhängigen Integrierwerk für die Abweichung der Differenz von Vorlauf- und Rücklauftemperatur über die obere Grenze des Sollwert-Bandes derselben und/oder einem ersten zeitabhängigen Integrierwerk für die Abweichung der Differenz von Vorlauf- und Rücklauftemperatur unter die untere Grenze des Sollwert-Bandes derselben ein weiteres zeitabhängiges Integrierwerk für die der Differenz von oberer und unterer Grenze dieses Sollwert-Bandes entsprechende Temperaturdifferenz sowie eine über Impulsleitungen mit beiden Integrierwerken verbundenen Summiereinrichtung zur Bildung der Summe zeitgleicher Ergebnisse beider Integrierwerke und die Regeleinrichtung eine jeweils über Impulsleitungen einerseits mit dieser und andererseits mit zumindest dem zeitabhängigen Integrierwerk für die der Differenz von oberer und unterer Grenze des Sollwert-Bandes entsprechende Differenz von Vorlauf- und Rücklauftemperatur des Wärmeträgermediums verbundene Einrichtung zur Bildung des Verhältnisses zeitgleicher Ergebnisse dieses Integrierwerkes und der Summiereinrichtung oder des Reziprokwertes dieses Verhältnisses aufweisen. Ersichtlich ergibt sich hierdurch eine besondere Verbesserung der Regelungsschärfe, weil das Integralverhältnis, nämlich das Verhältnis der genannten Gesamtmaße im Verlauf der Zeit, vergleichsweise größer wird.

In weiterer erfinderischer Fortbildung dieses untergeordneten Erfindungsgedankens kann die Verstärkung und/oder die Nachstellzeit und/oder die Vorhaltzeit der Eliminierung der Abweichung der Differenz von Vorlauf- und Rücklauftemperatur des Wärmeträgermediums über die obere bzw. unter die untere Grenze ihres Sollwert-Bandes verändert werden, wenn das Verhältnis der beiden Gesamtmaße einen vorbestimmten Wert überschreitet. Hierfür kann zweckmäßig die Einrichtung zur Bildung des Verhältnisses zeitgleicher Ergebnisse beider Integrierwerke eine einstellbare Impulssperreinrichtung aufweisen, mittels derer die Impulsleitung(en) zu der bzw. den Einrichtung(en) zur Veränderung der Verstärkung des Proportionalreglers und/oder der Nachstellzeit des Integralreglers und/oder der Vorhaltzeit des Differentialreglers erst bei Vorhandensein eines vorbestimmten Wertes des Verhältnisses zeitgleicher Ergebnisse beider Integrierwerke für Impulsdurchgang freigebbar ist bzw. sind. Dies bedeutet die Vorgabe zulässiger Werte für Verstärkung und/oder Nachstellzeit und/oder Vorhaltzeit der auf Eliminierung der Abweichung der Differenz von Vorlauf- und Rücklauftemperatur des Wärmeträgermediums von einer vorbestimmten zugeordneten Grenze ihres Sollwert-Bandes arbeitenden Regelvorrichtung nach der Erfindung. Dies wiederum erbringt erstmals die Möglichkeit einer Art von Selbstlernen der Regelvorrichtung nach der Erfindung, indem sich diese ihre eigenen Regelkonstanten selbst nachstellt. Entsprechend der diesem untergeordneten Erfindungsgedanken zugrundeliegenden untergeordneten weiteren Aufgabenstellung bringt dieser die vorteilhafte Möglichkeit

- 34 -

**0192225**

mit sich, daß jeder beliebige Reglertyp für die der Erfindung zugrundeliegende Aufgabe eingesetzt werden und sogar hinsichtlich seiner Regelungskonstanten beliebig, d. h. auch ungünstig, eingestellt werden kann, da gemäß diesem untergeordneten Erfindungsgedanken dafür gesorgt ist, daß er nach einiger Zeit sich selbst auf das zweckmäßigste Arbeitsfeld eingestellt hat, weil er seine Regelungskonstanten gemäß den Energieversorgungskriterien selbst nachstellt.

Gleiches kann im übrigen durch eine Alternative erreicht werden, gemäß derer die Verstärkung und/oder die Nachstellzeit und/oder die Vorhaltzeit der Eliminierung der Abweichung der Differenz von Vorlauf- und Rücklauftemperatur des Wärmeträgermediums über die obere bzw. unter die untere Grenze ihres Sollwert-Bandes so verändert wird, daß das Verhältnis der beiden Gesamtmaße einen vorbestimmten Wert nicht überschreitet. Hierfür kann zweckmäßig die Einrichtung zur Veränderung der Verstärkung des Proportionalreglers und/oder die Einrichtung zur Veränderung der Nachstellzeit des Integralreglers und/oder die Einrichtung zur Veränderung der Vorhaltzeit des Differentialreglers jeweils eine über eine Impulsleitung mit der Einrichtung zur Bildung des Verhältnisses zeitgleicher Ergebnisse beider Integrierwerke verbundene Einstelleinrichtung aufweisen, mittels derer die zugeordnete Veränderungseinrichtung im Sinne einer Vermeidung des Überschreitens eines vorbestimmten Wertes des Verhältnisses zeitgleicher Ergebnisse beider Integrierwerke nachstellbar ist. Auch diese Variante der Erfindung verwirklicht erstmalig eine Regelung mit Selbstlernen mit den für die vorstehend beschriebene Alternative bereits erläuterten Vorteilen. In beiden Fällen läßt sich der Selbstlernvorgang der Regelung bezüglich der Anpassung ihrer Regelungskonstanten an die jeweiligen Eigentümlichkeiten der Heizungs- bzw. Kühlanlage und/oder der mit dieser zu klimatisierenden Räume im Hinblick auf Betriebsparameter und/oder lage- und/oder klimaspezifische oder benutzereigentümliche Eigenheiten dadurch verbessern, daß die obere und/oder die untere Grenze des Sollwert-Bandes der Differenz von Vorlauf- und Rücklauftempera-

tur des Wärmeträgermediums bereits herstellerseitig leistungsfähigkeitsbedingt und/oder nutzerbedürfnisbezogen gewählt wird. Dies bedeutet die zweckmäßige Möglichkeit einer werkseitigen Vorwahl von für eine bestimmte Heizungs- bzw. Kühlanlage und/oder die Kombination derselben mit einem bestimmten Typ einer Regelungsvorrichtung nach der Erfindung für zweckmäßig erachteten Werten für Verstärkung und/oder Nachstellzeit und/oder Vorhaltzeit, wobei es dann der in letztbeschriebener Weise nach der einen oder anderen Variante derselben ausgebildeten Regelungsvorrichtung nach der Erfindung überlassen bleibt, im Wege des Selbstlernens den Regelvorgang an die genannten Eigentümlichkeiten optimierend anzupassen. Dies bedeutet eine Verbesserung dieser automatischen Optimierung der Regelungsvorrichtung nach der Erfindung insoweit, als durch diese hersteller- bzw. werkseitige Vorgabe einer oder mehrerer Regelungskonstanten die für die Selbstoptimierung der Regelungsvorrichtung erforderliche Zeitspanne besonders kurz gehalten und die damit verbundenen Energieverluste minimiert werden können.

Ersichtlich kann in weiterer Fortbildung der Erfindung mit Vorteil als Wärmeerzeuger ein brennstoffbefeuerter oder mit elektrischer Energie gespeister Kessel und/oder ein primärseitig mit Primärwärmeträgermedium beaufschlagter Wärmetauscher, wie beispielsweise ein Rauchgaskühler oder eine Fernwärmeübergabestation oder ein Ausgangswärmetauscher einer Wärmepumpe und/oder eine Elektrokompressionswärmepumpe und/oder eine gas- oder dieselmotorisch betriebene Wärmepumpe oder Sorptionswärmepumpe bzw. als Kälteerzeuger eine Elektrokompressionskältemaschine und/oder eine gas- oder dieselmotorisch betriebene Kältemaschine oder Sorptionskältemaschine und als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Einrichtung zur Beeinflussung der Zufuhr der Betriebsenergie zum Wärme- bzw. Kälteerzeuger vorgesehen sein. Die mit der Erfindung erzielbare Universalität auch in dieser Richtung ist offenbar.

Für den Spezialfall von Heizungs- bzw. Kühlanlagen mit Zufuhr der Wärme- bzw. Kälteleistung zum Heizungs- bzw. Kühlmittelvorlauf derselben im Ein-Aus-Betrieb, die praktisch ohne oder doch jedenfalls ohne nennenswerten und entsprechend praktisch nicht wirksamen Wärmespeicher arbeiten, wie das insbesondere bei als Therme oder Geyser bezeichneten Durchlauferhitzern oder aber bei Wärmepumpen geringer Leistung mit besonders kleinem als Kondensator arbeitendem Wärmetauscher der Fall sein kann, bei denen also die Veränderung der dem im Heizungs- bzw. Kühlmittelvorlauf befindlichen Wärmeträgermedium praktisch ohne Durchgang durch einen Speicher für dieses zugeführten Wärme- bzw. Kälteleistung durch Ein- und Ausschaltung der Zufuhr der Betriebsenergie zum Wärme- bzw. Kälteerzeuger erfolgt, hat es sich als besonders zweckmäßig erwiesen, wenn gemäß einem die Erfindung vorteilhaft fortführenden untergeordneten Erfindungsgedanken derselben bei Auftreten einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme- bzw. Kälteerzeuger beendet und bei Auftreten einer Abweichung der Differenz von Vorlauf- und Rücklauftemperatur des Wärmeträgermediums unter die einer für Heizbetrieb einem sich nach einer vorgegebenen Zeitspanne nach Ausschaltung der Zufuhr von Betriebsenergie zum Wärme- bzw. Kälteerzeuger einstellenden Maß unter einem Referenzwert für die Vorlauftemperatur des Wärmeträgermediums und für Kühlbetrieb einem sich nach einer vorgegebenen Zeitspanne nach Ausschaltung der Zufuhr von Betriebsenergie zum Wärme- bzw. Kälteerzeuger einstellenden Maß unter einem vorgegebenen Referenzwert für die Rücklauftemperatur des Wärmeträgermediums (Negativ-Temperaturdifferenz) entsprechende untere Grenze ihres vorgegebenen Sollwert-Bandes die Zufuhr von Betriebsenergie zum Wärme- bzw. Kälteerzeuger aufgenommen wird. Die hier entsprechende Vorrichtung nach der Erfindung kennzeichnet sich dadurch, daß dem im Betrieb diskontinuierlich mit Betriebsenergie versorgbaren Wärme- bzw. Kälteerzeuger praktisch kein oder allenfalls ein nur sehr geringer Speicher für das Wärmeträgermedium zu- oder nachgeordnet ist und daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehles als Ein-Aus-Befehle zuführbar sind, wobei jeweils bei Ermittlung einer Abweichung der Differenz von Vorlauf- und Rücklauftemperatur des Wärmeträgermediums über die obere Grenze ihres vorgegebenen Sollwert-Bandes hinaus durch einen Aus-Befehl die Zufuhr von Betriebsenergie zum Wärme- bzw. Kälteerzeuger sperrbar und für Heizbetrieb jeweils bei Ermittlung eines Abfalls der Vorlauftemperatur und/oder der Rücklauftemperatur des Wärmeträgermediums um ein vorgegebenes Maß unter eine vorgegebene Referenztemperatur oder für Kühlbetrieb jeweils bei Ermittlung eines Anstiegs der Vorlauftemperatur und/oder der Rücklauftemperatur des Wärmeträgermediums um ein vorgegebenes Maß über eine vorgegebene Referenztemperatur durch einen Ein-Befehl die Zufuhr von Betriebsenergie zum Wärme- bzw. Kälteerzeuger freigebbar ist.

Für den Spezialfall von Heizungs- bzw. Kühlanlagen mit Zufuhr der Wärme- bzw. Kälteleistung zum Heizungs- bzw. Kühlmittelvorlauf derselben im Ein-Aus-Betrieb, die praktisch ohne oder doch jedenfalls ohne nennenswerten und entsprechend praktisch nicht wirksamen Wärmespeicher arbeiten, hat es sich als besonders zweckmäßig erwiesen, wenn gemäß einem die Erfindung vorteilhaft fortführenden untergeordneten Erfindungsgedanken derselben bei Auftreten einer Abweichung der Differenz von Vorlauf- und Rücklauftemperatur des Wärmeträgermediums über die obere Grenze ihres vorgegebenen Sollwert-Bandes hinaus das Zeitverhältnis der Ein- zur Ausschaltung der Zufuhr von Betriebsenergie zum Wärmeerzeuger entsprechend dem Maß der Abweichung verringert wird und bei Auftreten einer Abweichung der Differenz von Vorlauf- und Rücklauftemperatur des Wärmeträgermediums unter die einer für Heizbetrieb einem sich nach einer vorgegebenen Zeitspanne nach Ausschaltung der Zufuhr von Betriebsenergie zum Wärme- bzw. Kälteerzeuger einstellenden Maß unter einem vorgegebenen Referenzwert für die Rücklauftemperatur des Wärmeträgermediums und für Kühlbetrieb einem sich nach einer vorgegebenen Zeitspanne nach Ausschaltung der Zufuhr von Betriebsenergie zum Wärme- bzw. Kälteerzeuger einstellenden Maß über einem vorgegebenen Referenzwert für die Vorlauftemperatur des Wärmeträgermediums (Negativ-Temperaturdifferenz) entsprechende untere Grenze ihres vorgegebenen Sollwert-Bandes das Zeitverhältnis der Ein- zur Ausschaltung der Zufuhr von Betriebsenergie zum Wärme- bzw. Kälteerzeuger entsprechend dem Maß der Abweichung erhöht wird. Die hier entsprechende Vorrichtung nach der Erfindung kennzeichnet sich dadurch, daß dem im Betrieb diskontinuierlich mit Betriebsenergie versorgbaren Wärme- bzw. Kälteerzeuger praktisch kein oder allenfalls ein nur sehr geringer Speicher für das Wärmeträgermedium zu- oder nachgeordnet ist und daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehles als veränderbare Zeitverhältnisse der Ein- zur Ausschaltung der Zufuhr von Betriebsenergie zum Wärme- bzw. Kälteerzeuger zuführbar sind, wobei jeweils bei Ermittlung einer Abweichung der Differenz von Vorlauf- und Rücklauftemperatur des Wärmeträgermediums über die obere Grenze ihres vorgegebenen Sollwert-Bandes hinaus durch ein kleineres Zeitverhältnis der Ein- zur Ausschaltung der Zufuhr von Betriebsenergie zum Wärme- bzw. Kälteerzeuger entsprechend dem Maß der Abweichung verringerbar und für Heizbetrieb jeweils bei Ermittlung eines Abfalls der Vorlauftemperatur und/oder der Rücklauftemperatur des Wärmeträgermediums um ein vorgegebenes Maß unter eine vorgegebene Referenztemperatur oder für Kühlbetrieb jeweils bei Ermittlung eines Anstiegs der Vorlauftemperatur und/oder der Rücklauftemperatur des Wärmeträgermediums um ein vorgegebenes Maß über eine vorgegebene Referenztemperatur die Zufuhr von Betriebsenergie zum Wärme- bzw. Kälteerzeuger durch ein größeres Zeitverhältnis der Ein- zur Ausschaltung der Zufuhr von Betriebsenergie zum Wärme- bzw. Kälteerzeuger entsprechend dem Maß der Abweichung erhöhbar ist.

Es ist ersichtlich, daß durch die Erfindung somit erstmalig eine bisher für unüberwindlich gehaltene Schwierigkeit nicht nur zuverlässig, sondern auch mit höchst einfachen und wirtschaftlichen Mitteln ausgeschaltet wird, indem nämlich dieser untergeordnete Erfindungsgedanke derselben ein echtes Regelspiel für den Betrieb einer Heizungs- bzw. Kühlanlage beschriebener Ausgestaltung ermöglicht. Die Schwierigkeit für die Regelung solcher Anlagen bzw. Systeme besteht nämlich darin, daß über einen Meßwert der Vorlauftemperatur des Wärmeträgermediums durchaus noch ein Abschaltwert für die Energiezufuhr zum Wärme- bzw. Kälteerzeuger und damit zum Heizungs- bzw. Kühlmittelvorlauf der Anlage gefunden werden könnte, daß aber aufgrund des praktisch speicherlosen Verhaltens solcher Anlagen bzw. Regelsysteme nach dem Abschalten der Zufuhr von Betriebsenergie zum Wärme- bzw. Kälteerzeuger die Vorlauftemperatur praktisch unmittelbar auf den Wert der Rücklauftemperatur abfällt. Es kann also insoweit mit herkömmlichen Mitteln kein Schaltpunkt für das Wiedereinsetzen der Zufuhr von Betriebsenergie zum Wärme bzw. Kälteerzeuger gefunden werden. Erst der letztbeschriebene untergeordnete Erfindungsgedanke bietet hier die Möglichkeit, einen Wiedereinschaltpunkt zuverlässig zu definieren, der somit seinerseits ein Schaltspiel ausreichender Güte für den erfindungsgemäßen Regelungsvorgang gewährleistet.

Eine zweckmäßige Weiterführung dieses untergeordneten Erfindungsgedankens befaßt sich gemäß einer sich der der Erfindung zugrundeliegenden Aufgabe unterordnenden Aufgabe mit der Ermittlung der für eine bestimmte Heizungs- bzw. Kühlanlage solcher spezieller Ausführung aufgrund der Gesamtheit der Einflußgrößen, denen sie unterliegt, optimalen Führungsgröße. Hierfür sieht dieser untergeordnete Erfindungsgedanke vor, daß bei Inbetriebnahme des Verfahrens für Heizbetrieb oder für Kühlbetrieb bei voller Öffnung aller Drosseleinrichtungen die Differenz von Vorlauf- und Rücklauftemperatur des Wärmeträgermediums als minimal mögliche Temperaturdifferenz, die als Inbetriebnahmetemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimal möglichen Temperaturdifferenz und als kleinerer Sollwert eine Temperaturdifferenz willkürlich insbesondere dadurch gewählt wird, daß sie einem um ein willkürlich gewähltes Maß bei Heizbetrieb unter und bei Kühlbetrieb über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen Temperaturdifferenz gewählt wird. Diese Verfahrensweise kann mit Vorzug bei der als "Jungfernfahrt" zu bezeichnenden erstmaligen Inbetriebnahme einer mit der Erfindung ausgerüsteten Heizungs- bzw. Kühlanlage verwirklicht werden und erbringt dann die tatsächlich minimal mögliche Temperaturdifferenz zwischen Vorlauf- und Rücklauftemperatur des Wärmeträgermediums bei voller Öffnung aller Drosseleinrichtungen als die einzige relevante Größe, in der alle auf die Heizungs- bzw. Kühlanlage wirkenden Einflußgrößen enthalten sind, ohne daß diese im einzelnen bestimmt oder gemessen zu werden bräuchten, die aber im wesentlichen abhängig ist von der Anzahl und Art der Heizkörper bzw. Kühleinrichtungen, von deren Verschaltung, dem Druckabfall im gesamten Heizungs- bzw. Kühlmittelkreislauf, der Umwälzpumpe nebst deren Druck-Fördermengen-Charakteristik und der Leistung des jeweiligen Wärme- bzw. Kälteerzeugers. All diese Größen sind in dem Meßwert der Inbetriebnahmetemperaturdifferenz enthalten, so daß dieser eine für den Wärme- bzw. Kälteverbraucher charakteristische Größe darstellt. Diese wiederum läßt sich erfindungsgemäß vorteilhaft nutzen.

Eine zweckmäßige Ausgestaltung der Erfindung gemäß einem anderen untergeordneten Erfindungsgedanken kennzeichnet sich dadurch, daß bei Heizbetrieb für Aufheizen nach einer Abkühlung bzw. bei Kühlbetrieb für Abkühlen nach einer Erwärmung bei voller Öffnung aller Drosseleinrichtungen die Differenz von Vorlauf- und Rücklauftemperatur des Wärmeträgermediums als minimale Temperaturdifferenz, die auch als Anfahrtemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimalen Temperaturdifferenz und als kleinerer Sollwert eine Temperaturdifferenz willkürlich insbesondere dadurch gewählt wird, daß sie einem um ein willkürlich gewähltes Maß bei Heizbetrieb unter und bei Kühlbetrieb über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimalen Temperaturdifferenz gewählt wird. Ein Vergleich von Anfahr- und Inbetriebnahmetemperaturdifferenz bzw. auch von Anfahrtemperaturdifferenz verschiedener Tage untereinander bei sonst gleichen Bedingungen erbringt, wenn die minimal mögliche oder eine bestimmte minimale Temperaturdifferenz nicht mehr erreicht, das heißt stets nur überschritten wird, einen Indikator dafür, daß entweder eine oder mehrere der automatisch wirkenden Drosseleinrichtung(en) defekt ist bzw. sind, indem diese sich aus der Drosselung nicht mehr herausbewegt bzw. -bewegen und somit die minimal mögliche Differenz zwischen Vorlauf- und Rücklauftemperatur des Wärmeträgermediums (Inbetriebnahmetemperaturdifferenz) nicht mehr erreicht wird, oder daß die Umwälzpumpe z. B. über ein bestimmtes Lagerspiel nicht mehr ihre Nennleistung bringt oder aber diese Umwälzpumpe oder das das Wärmeträgermedium führende Leitungsnetz verkalkt ist und somit übermäßige Strömungswiderstände aufgebaut hat und sich deshalb nur noch im Vergleich zur Inbetriebnahmetemperaturdifferenz größere Differenzen von Vorlauf- und Rücklauftemperatur des Wärmeträgermediums einstellen und daher die Inbetriebnahme- und häufig auch die Anfahrtemperaturdifferenz nur noch überschritten werden können. Dabei eröffnet dieser untergeordnete Erfindungsgedanke die Möglichkeit für eine bequeme und kostengünstige Selektierung der einzelnen Fehlerquellen.

Sinkt nämlich der Systemdruck im das Wärmeträgermedium führenden Leitungssystem, der grundsätzlich gemessen zu werden pflegt, und muß Wärmeträgermedium nachgefüllt werden, so liegt eine Leckage in diesem Leitungssystem vor, wobei auch die Umwälzpumpe als solche dazugehört. Muß im Laufe der Zeit der gesunkene Systemdruck durch Nachfüllen von Wärmeträgermedium auf seinen Ausgangswert gebracht werden, ohne daß dadurch der Differenzdruck über der Umwälzpumpe, der sich in einer Veränderung der Differenz von Vorlauf- und Rücklauftemperatur ausdrückt, auf seinen früheren Wert gebracht werden kann, so deutet dies auf eine Erhöhung des Strömungswiderstandes im das Wärmeträgermedium führenden Leitungssystem beispielsweise durch Verkalkung oder Defekt der Umwälzpumpe beispielsweise in Form eines Lagerschadens hin. Sinkt der Systemdruck im wärmeträgerführenden Leitungssystem nicht, so kann nur ein Hängen einer oder mehrerer Drosseleinrichtung(en) oder aber auch ein Absinken der Nennleistung der Umwälzpumpe beispielsweise durch Verschleiß derselben vorliegen. Die Selektierung dieser beiden Störfälle erfolgt dadurch, daß das Raumtemperaturverhalten der einzelnen mit automatisch wirkenden Drosseleinrichtungen augestatteten Heizkörper bzw. Kühleinrichtungen beobachtet wird. Wird festgestellt, daß in einem Raum oder mehreren Räumen, der bzw. die zu temperieren ist bzw. sind, die vorbestimmte Raumtemperatur nicht erreicht wird, so liegt ein Defekt der betreffenden Drosseleinrichtung vor. Ist dies nicht der Fall, wird aber dennoch ein Steigen der Inbetriebnahmetemperaturdifferenz zwischen Vorlauf und Rücklauf des Wärmeträgermediums auf die Anfahrtemperaturdifferenz desselben festgestellt, so kann dies praktisch nur auf einen Defekt der Umwälzpumpe bzw. des Antriebs derselben hinweisen.

Stellt man beim Vergleich von Anfahr- und Inbetriebnahmetemperaturdifferenz oder aber der Anfahrtemperaturdifferenzen verschiedener
Tage untereinander bei sonst gleichen Bedingungen fest, daß die
minimal mögliche oder eine bestimmte minimale Differenz von Vorlauf- und Rücklauftemperatur des Wärmeträgermediums sogar unterschritten wird, so liefert dies den eindeutigen Hinweis darauf, daß
die Wärme- bzw. Kälteerzeuger-Leistung nicht mehr dem zu erwartenden
Wert, beispielsweise der angegebenen Nennleistung oder einer spezifisch eingestellten Soll- bzw. Betriebsleistung, entspricht, was
bei einem Wärmeerzeuger auf beispielsweise einen Brenner- oder
Wärmepumpendefekt bzw. auf verkalkte(n) oder verrußte(n) Wärmeaustauscher und bei einem Kälteerzeuger auf beispielsweise einen Kompressorschaden oder einen Kältemaschinendefekt bzw. auf verkalkte(n)
oder verrußte(n) Wärmeaustauscher hindeutet.

Vorrichtungsseitig wird die Erfindung diesen untergeordneten Erfindungsgedanken dadurch gerecht, daß die Regeleinrichtung eine
Sollwert-Wähleinrichtung mit einer über eine Impulsleitung mit der
Einrichtung zur Ermittlung der Differenz von Vorlauf- und Rücklauftemperatur und/oder über eine Impulsleitung mit der Vergleichseinrichtung zur Bestimmung der Abweichung dieser Differenz von Vorlauf und Rücklauftemperatur von der oberen und/oder unteren Grenze
ihres Sollwert-Bandes verbundenen Detektoreinrichtung zur Ermittlung
der im Verlauf der Inbetriebnahme der Vorrichtung für Heizbetrieb
oder für Kühlbetrieb bei voller Öffnung aller Drosseleinrichtungen
als minimal mögliche Differenz von Vorlauf- und Rücklauftemperatur
des Wärmeträgermediums (Inbetriebnahmetemperaturdifferenz) zu dem
Zeitpunkt, zu dem nach einer Zeitspanne mit praktisch konstantem
Wert dieser Differenz von Vorlauf- und Rücklauftemperatur erstmalig
eine Vergrößerung derselben auftritt, auftretenden Differenz von
Vorlauf- und Rücklauftemperatur und/oder der im Verlauf des Heizbetriebs bei Aufheizen nach einer Abkühlung bzw. im Verlauf des Kühlbetriebs bei Abkühlen nach einer Erwärmung bei voller Öffnung aller
Drosseleinrichtungen als minimale Differenz von Vorlauf und Rücklauftemperatur des Wärmeträgermediums (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und je einer über eine Impulsleitung mit dieser verbundenen einstellbaren Verhältnisgabeeinrichtung als Sollwert-Bildungseinrichtung für die obere bzw. die untere Grenze des Sollwert-Bandes der Differenz von Vorlauf- und Rücklauftemperatur des Wärmeträgermediums sowie jeweils eine über Impulsleitungen einerseits mit der zugeordneten Sollwertbildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Differenz von Vorlauf- und Rücklauftemperatur des Wärmeträgermediums auf sowohl bei Heizbetrieb als auch bei Kühlbetrieb ein Vielfaches dieser minimal möglichen Differenz von Vorlauf- und Rücklauftemperatur des Wärmeträgermediums (Inbetriebnahmetemperaturdifferenz) bzw. dieser minimalen Differenz von Vorlauf- und Rücklauftemperatur des Wärmeträgermediums (Anfahrtemperaturdifferenz) und der zugeordneten unteren Grenze des Sollwert-Bandes der Differenz von Vorlauf- und Rücklauftemperatur auf eine insbesondere dadurch willkürlich wählbare Temperaturdifferenz aufweist, daß diese um ein willkürlich gewähltes Maß bei Heizbetrieb unter und bei Kühlbetrieb über einer vorgegebenen Referenztemperatur liegt, wobei dieses Maß vorzugsweise als ein durch den Reziprokwert des Multiplikators des die obere Grenze des Sollwert-Bandes der Differenz von Vorlauf- und Rücklauftemperatur des Wärmeträgermediums bestimmenden Vielfachen gebildetes Vielfaches dieser minimal möglichen Temperaturdifferenz (Inbetriebnahmetemperaturdifferenz) bzw. dieser minimalen Temperaturdifferenz (Anfahrtemperaturdifferenz) wählbar ist.

Hervorzuheben ist in diesem Zusammenhang, daß man dann, wenn man nach den vorstehend erläuterten Kriterien festgestellt hat, daß es sich im Zuge eines ermittelten Anstiegs der Differenz von Vorlauf- und Rücklauftemperatur des Wärmeträgermediums von ihrem ursprünglichen Inbetriebnahmewert auf einen höheren Wert in Form der sogenannten Anfahrtemperaturdifferenz nur um eine Verkalkung der Anlage handelt, diese durchaus in bisheriger Weise weiterfahren kann, wobei die festgestellte höhere Anfahrtemperaturdifferenz die Bestimmungsfunktion der ursprünglichen Inbetriebnahmetemperaturdifferenz für die Festlegung der Führungsgröße der Regelung in Form des erfindungsgemäßen Sollwert-Bandes übernehmen kann, was den Vorteil erbringt, daß in einem solchen Fall auf einen Service-Techniker verzichtet werden kann.

Weiterhin zeichnet sich die Erfindung gegenüber dem Stand der Technik dadurch aus, daß dem Nutzer derselben durch diese erstmalig die Möglichkeit an die Hand gegeben ist, mit ein und derselben Regelungsvorrichtung nach der Erfindung nach seiner eigenen Wahl und Bestimmung unterschiedliche Betriebsarten zu ihm genehmen Zeiten einstellen zu können, indem für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der minimal möglichen oder minimalen Differenz von Vorlauf- und Rücklauftemperatur des Wärmeträgermediums, vorzugsweise zwischen etwa dem 1,5- bis 2-fachen dieser Temperaturdifferenz, und als kleinerer Sollwert eine Temperaturdifferenz gewählt wird, die bei Heizbetrieb einem um ein vorgegebenes Maß unter und bei Kühlbetrieb um ein vorgegebenes Maß über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums be-

0192225

stimmenden Vielfachen gebildetes Vielfaches dieser minimal möglichen bzw. minimalen Temperaturdifferenz gewählt wird, während für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der minimal möglichen oder minimalen Differenz von Vorlauf und Rücklauftemperatur des Wärmeträgermediums, vorzugsweise zwischen etwa dem 1,2- bis 1,5-fachen dieser Temperaturdifferenz, und als kleinerer Sollwert eine Temperaturdifferenz gewählt wird, die bei Heizbetrieb einem um ein vorgegebenes Maß unter und bei Kühlbetrieb um ein vorgegebenes Maß über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen bzw. minimalen Temperaturdifferenz gewählt wird, andererseits für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem vergleichsweise kleinen Vielfachen der minimal möglichen oder minimalen Differenz von Vorlauf- und Rücklauftemperatur des Wärmeträgermediums, vorzugsweise zwischen etwa dem 1- bis 1,2-fachen dieser Temperaturdifferenz, und als kleinerer Sollwert eine Temperaturdifferenz gewählt wird, die bei Heizbetrieb einem um ein vorgegebenes Maß unter und bei Kühlbetrieb um ein vorgegebenes Maß über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen bzw. minimalen Temperaturdifferenz gewählt wird, während speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend der minimal möglichen oder der minimalen Differenz von Vorlauf- und Rücklauftemperatur des Wärmeträgermediums und als kleinerer Sollwert eine Temperaturdifferenz gewählt wird, die einem um ein vorgegebenes Maß, das mit Vorzug dieser minimal möglichen bzw. minimalen Temperaturdifferenz entspricht, unter einer vorgegebenen Referenztemperatur liegenden Wert entspricht. Entsprechend kann vorrichtungstechnisch die Regeleinrichtung eine Speichereinrichtung, in der mindestens zwei, vorzugsweise mehr, bevorzugte Paarungen von Ober- und Untergrenzen des Sollwert-Bandes der Differenz von Vorlauf- und Rücklauftemperatur, wie beispielsweise für Komfort- , Normal- , Spar- , Nachtabsenkungs- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwertbildungseinrichtungen für die obere bzw. untere Grenze des Sollwert-Bandes der Differenz von Vorlauf- und Rücklauftemperatur oder mit der oder zumindest einer der etwa vorhandenen Programmspeichereinrichtung(en) für die Beeinflussung des Sollwert-Bandes der Differenz von Vorlauf- und Rücklauftemperatur oder mit zumindest einer etwa vorhandenen Verstelleinrichtung für diese oder mit zumindest einem Sollwertgeber verbunden ist. Zweckmäßig können dabei in der Speichereinrichtung die bevorzugten Paarungen von Ober- und Untergrenzen des Sollwert-Bandes der Differenz von Vorlauf- und Rücklauftemperatur mit in Richtung zunehmender Werte dieser Temperaturdifferenz vorzugsweise proportional größer werdendem Unterschied und/oder Verhältnis von jeweiliger oberer und unterer Grenze der Differenz von Vorlauf- und Rücklauftemperatur gespeichert sein. Durch diese Möglichkeit der Wahl der Bänder wird dem Nutzer der Erfindung bzw. dem Betreiber der mit dieser ausgerüsteten Heizungs- bzw. Kühlanlage die Möglichkeit gegeben, diese einerseits mit lokal unterschiedlich verteilten Wärme- bzw. Kältelasten zu fahren, beispielsweise im Heizbetrieb bei Nutzung des Komfort-Bandes, das er im übrigen nicht über das gesamte Jahr zu benutzen braucht, sondern nur nach Wunsch bzw. Bedürfnis, dabei aber eine besondere Wirtschaftlichkeit trotz Offenhaltung aller Möglichkeiten für die Aufrechterhaltung praktisch beliebig hoher Raumtemperaturen in einem Teil der zu beherrschenden Räume dadurch erreichen zu können, daß er zu Zeiten geringeren Wärmebedarfs ein ökonomischerem Betrieb entsprechendes Sollwert-Band, beispielsweise ein Normal- oder Spar-Band, den Regelungsbetrieb bestimmen läßt, bei dem alle anderen Räume mit vergleichsweise viel niedrigeren Wärmelasten bzw. Raumtemperaturen bedient werden. Entsprechendes gilt natürlich auch für Kühlbetrieb. Dabei liegt die besondere Wirtschaftlichkeit darin, daß nicht immer mit der größten Lastspitze gefahren werden muß, sondern man sich für die Zeiten geringerer Wärme- bzw. Kältelast, wie etwa bei Heizbetrieb beispielsweise jahreszeitlich bedingt im Sommerbetrieb und/oder nutzerbezogen bei Nachtabsenkung, mit einem günstigeren Sollwert-Band der Differenz von Vorlauf- und Rücklauftemperatur des Wärmeträgermediums zufrieden geben kann. Dies ist bei herkömmlichen Regelungs- bzw. Steuerungsarten nicht möglich. Hier muß für einen bestimmten zeitlich nur begrenzt auftretenden Bedarfsfall für das ganze Jahr oder auch über die gesamte Tageszeit ausreichend Wärme- bzw. Kälteleistung vorgehalten werden, d. h., daß in den Zeiten ohne diesen Bedarfsfall sehr unwirtschaftlich gefahren wird, oder der Betreiber einer solchen Heizungs- bzw. Kühlanlage muß für jeden Bedarfsfall ständig seine Heizkurve umstellen.

Somit erbringt die Erfindung die Möglichkeit, jederzeit wunschgemäß von einer Betriebsart mit Aufrechterhaltung einer bei Heizbetrieb extrem hohen bzw. bei Kühlbetrieb extrem tiefen Temperatur in einem Teilbereich der mit der betreffenden Heizungs- bzw. Kühlanlage zu bedienenden Räume auf eine andere Betriebsart mit bei Heizbetrieb niedrigerer bzw. bei Kühlbetrieb höherer benötigter Raumtemperatur in dem betreffenden Teilbereich der mit der Heizungs- bzw. Kühlanlage zu bedienenden Räume umschalten zu können, was natürlich die vorteilhafte Folge hat, daß bei solcher Betriebsarten-Umschaltung in dieser Richtung die zu verkraftenden Wärmeverluste sowohl durch Wärme- bzw. Kälteableitung als auch durch Wärme- bzw. Kälteabstrahlung (Wärmeeinstrahlung) geringer werden, wobei erfindungsgemäß weder der Zahl solcher Umschaltvorgänge noch der Art der Umschaltung eine Grenze gesetzt ist, indem nämlich diese Umschaltung von einer Betriebsart auf die andere und wieder zurück auch kontinuierlich erfolgen kann.

Für diskontinuierlich, also im Ein-Aus-Betrieb arbeitende Heizungs- bzw. Kühlanlagen mit Speicher und - wie sich überraschend herausgestellt hat - auch solche mit nur höchst geringem Speichervermögen, bei denen also die Veränderung der dem im Heizungs- bzw. Kühlmittelvorlauf befindlichen Wärmeträgermedium mit oder ohne Durchgang durch einen Speicher für dieses zugeführten Wärme- bzw. Kälteleistung durch Ein- und Ausschaltung der Zufuhr der Betriebsenergie zum Wärme- bzw. Kälteerzeuger erfolgt, sieht ein alternativer untergeordneter Erfindungsgedanke zweckmäßig vor, daß bei Auftreten einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme- bzw. Kälteezeuger beendet und bei Auftreten einer Abweichung der Differenz von Vorlauf- und Rücklauftemperatur des Wärmeträgermediums unter die untere Grenze ihres vorgegebenen Sollwert-Bandes die Zufuhr von Betriebsenergie zum Wärme- bzw. Kälteerzeuger aufgenommen wird. Hier nämlich ermöglicht das Vorhandensein der Wärmespeicherkapazität und - wie sich herausgestellt hat - selbst einer sehr geringen, zeitunabhängig die benötigte genaue Definierung einer Einschaltbedingung für die Zufuhr der Betriebsenergie zum Wärme- bzw. Kälteerzeuger aus dem Temperaturverhalten der Anlage selbst. Über-

raschend dabei ist, daß diese Verfahrensweise ohne zusätzliche Maßnahmen oder Vorkehrungen beispielsweise zur zu bestimmenden Zeiten erfolgenden Beobachtung der Temperatur und/oder Speicherung von Meßwerten derselben, wie etwa einer Referenztemperatur, sogar bei diskontinuierlich arbeitenden Wärme- bzw. Kälteerzeugern mit extrem niedrigem Speichervermögen anstandslos einsetzbar ist, zumal nicht ohne weiteres zu erwarten ist, daß selbst eine sehr geringe Restspeicherkapazität für die Auslösung der Einschaltbedingung ausreichend ist. Dennoch aber hat sich gezeigt, daß auch solchen Verhältnissen in dieser Richtung durch entsprechende Wahl des Sollwert-Bandes der Differenz von Vorlauf- und Rücklauftemperatur zu begegnen ist.

Vorrichtungstechnisch sieht die Erfindung hierfür vor, daß dem im Betrieb diskontinuierlich mit Betriebsenergie versorgbaren Wärme- bzw. Kälteerzeuger ein Speicher für das Wärmeträgermedium zu- oder nachgeordnet ist und daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als Ein-Aus-Befehle zuführbar sind, wobei jeweils bei Ermittlung einer Abweichung der Differenz von Vorlauf- und Rücklauftemperatur über die obere Grenze ihres vorgegebenen Sollwert-Bandes hinaus durch einen Aus-Befehl die Zufuhr von Betriebsenergie zum Wärme- bzw. Kälteerzeuger sperrbar und bei Ermittlung einer Abweichung der Differenz von Vorlauf- und Rücklauftemperatur unter die untere Grenze ihres vorgegebenen Sollwert-Bandes die Zufuhr von Betriebsenergie zum Wärme- bzw. Kälteerzeuger freigebbar ist.

Für den selben Spezialfall, diskontinuierlich, also im Ein-Aus-Betrieb arbeitende Heizungs- bzw. Kühlanlagen mit und ohne Speicher hat es sich gemäß einem die Erfindung vorteilhaft fortführenden untergeordneten Erfindungsgedanken als besonders zweckmäßig erwiesen, wenn bei Auftreten einer Abweichung der Differenz von Vorlauf- und Rücklauftemperatur des Wärmeträgermediums über die obere Grenze ihres vorgegebenen Sollwert-Bandes hinaus das Zeitverhältnis der Ein- zur Ausschaltung der Zufuhr von Betriebsenergie zum Wärme- bzw. Kälteerzeuger entsprechend dem Maß der Abweichung der Differenz von Vorlauf- und Rücklauftemperatur des Wärmeträgermediums verringert wird und bei Auftreten einer Abweichung der Differenz von Vorlauf und Rücklauftemperatur des Wärmeträgermediums unter die untere Grenze Ihres vorgegebenen Sollwert-Bandes das Zeitverhältnis der Ein- zur Ausschaltung der Zufuhr von Betriebsenergie zum Wärme- bzw. Kälteerzeuger entsprechend dem Maß der Abweichung der Differenz von Vorlauf- und Rücklauftemperatur des Wärmeträgermediums erhöht wird. Vorrichtungstechnisch sieht die Erfindung hierfür vor, daß dem im Betrieb diskontinuierlich mit Betriebsenergie versorgbaren Wärme- bzw. Kälteerzeuger vorzugsweise ein Speicher für das Wärmeträgermedium zu- oder nachgeordnet ist und daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als veränderbare Zeitverhältnisse der Ein- zur Ausschaltung der Zufuhr von Betriebsenergie zum Wärme- bzw. Kälteerzeuger zuführbar sind, wobei jeweils bei Ermittlung einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme- bzw. Kälteerzeuger durch ein kleineres Zeitverhältnis der Ein- zur Ausschaltung der Zufuhr von Betriebsenergie zum Wärme- bzw. Kälteerzeuger entsprechend dem Maß der Abweichung verringerbar und bei Ermittlung einer Abweichung der Differenz von Vorlauf- und Rücklauftemperatur des Wärmeträgermediums unter die untere Grenze ihres vorgegebenen Sollwert-Bandes die Zufuhr von Betriebsenergie zum Wärme- bzw Kälteerzeuger durch ein größeres Zeitverhältnis der Ein- zur Ausschaltung der Zufuhr von Betriebsenergie zum Wärme- bzw. Kälteerzeuger entsprechend dem Maß der Abweichung erhöhbar ist.

Auch hier befaßt sich ein anderer untergeordneter Erfindungsgedanke gemäß einer zugrundeliegenden untergeordneten Aufgabe mit der Ermittlung der für eine bestimmte Heizungs- bzw. Kühlanlage aufgrund der Gesamtheit der Einflußgrößen, denen sie unterliegt, optimalen Führungsgröße. Hierfür sieht dieser untergeordnete Erfindungsgedanke vor, daß bei Inbetriebnahme des Verfahrens für Heizbetrieb oder für Kühlbetrieb bei voller Öffnung aller Drosseleinrichtungen die Differenz von Vorlauf- und Rücklauftemperatur des Wärmeträgermediums als minimal mögliche Temperaturdifferenz, die auch hier als Inbetriebnahmetemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimal möglichen Temperaturdifferenz und der kleinere Sollwert dieser Temperaturdifferenz hier aber entsprechend einem Bruchteil dieser minimal möglichen Temperaturdifferenz vorzugsweise entsprechend der um ein durch den Reziprokwert des Multiplikators des dem größeren Sollwert dieser Temperaturdifferenz bestimmenden Vielfachen gebildetes Vielfaches verminderten minimal möglichen Temperaturdifferenz, gewählt wird. Auch hier ist diese Verfahrensweise dafür vorgesehen, mit Vorzug bei der als "Jungfernfahrt" zu bezeichnenden erstmaligen Inbetriebnahme einer mit der Erfindung ausgerüsteten Heizungs- bzw. Kühlanlage verwirklicht zu werden, und erbringt dann die tatsächlich minimal mögliche Differenz von Vorlauf- und Rücklauftemperatur des Wärmeträgermediums bei voller Öffnung aller Drosseleinrichtungen als die einzige relevante Größe, in der alle auf die Heizungs- bzw. Kühlanlage wirkenden Einflußgrößen enthalten sind, ohne daß diese im einzelnen bestimmt oder gemessen zu werden bräuchten, die aber im wesentlichen abhängig ist von der Anzahl und Art der Heizkörper bzw. Kühleinrichtungen, von deren Verschaltung, dem Druckabfall im gesamten Heizungs- bzw. Kühlmittelkreislauf, der Umwälzpumpe nebst deren Druck-Fördermengen-Charakteristik und der Leistung des jeweiligen Wärme- bzw. Kälteerzeugers. Der Meßwert der Inbetriebnahmetemperaturdifferenz umfaßt auch hier all diese Größen und stellt somit seinerseits eine für den Wärme- bzw. Kälteverbraucher charakteristische Größe dar, die sich erfindungsgemäß vorteilhaft nutzen läßt.

Eine zweckmäßige Ausgestaltung der Erfindung gemäß einem anderen untergeordneten Erfindungsgedanken kennzeichnet sich dadurch, daß bei Heizbetrieb für Aufheizen nach einer Abkühlung bzw. bei Kühlbetrieb für Abkühlen nach einer Erwärmung bei voller Öffnung aller Drosseleinrichtungen die Differenz von Vorlauf- und Rücklauftemperatur des Wärmeträgermediums als minimale Temperaturdifferenz, die auch hier als Anfahrtemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimalen Temperaturdifferenz und der kleinere Sollwert dieser Temperaturdifferenz entsprechend einem Bruchteil dieser minimalen Temperaturdifferenz vorzugsweise entsprechend der um ein durch den Reziprokwert des Multiplikators des den größeren Sollwert dieser Temperaturdifferenz bestimmenden Vielfachen gebildetes Vielfaches verminderten minimalen Temperaturdifferenz, gewählt wird. Auch hier erbringt ein Vergleich von Anfahr- und Inbetriebnahmetemperaturdifferenz bzw. auch von Anfahrtemperaturdifferenzen verschiedener Tage untereinander bei sonst gleichen Bedingungen dann, wenn sich zeigen sollte, daß die minimal mögliche oder eine minimale Temperaturdifferenz nicht mehr erreicht wird, sondern stets nur überschritten bleibt, einen Indikator dafür, daß entweder eine oder mehrere der automatisch wirkenden Drosseleinrichtung(en) defekt ist bzw. sind, indem diese sich aus der Drosselung nicht mehr herausbewegt bzw. -bewegen und somit die minimal mögliche Temperaturdifferenz (Inbetriebnahmetemperaturdifferenz) nicht mehr erreicht wird, oder daß die Umwälzpumpe z. B. über ein bestimmtes Lagerspiel nicht mehr ihre Nennleistung bringt oder aber diese Umwälzpumpe oder das das Wärmeträgermedium führende Leitungsnetz verkalkt ist und somit übermäßige Strömungswiderstände aufgebaut hat, und deshalb nie mehr die Inbetriebnahmetemperaturdifferenz, sondern nur noch eine im Vergleich zu dieser größere Differenz von Vorlauf- und Rücklauftemperatur des Wärmeträgermediums zu erreichen ist, wobei dieses Verhalten der Heizungs- bzw. der Kühlanlage erfahrungsgemäß auch für Anfahrtemperaturdifferenzen auftreten kann, indem nicht einmal diese erreicht werden können. Auch hier wird erfindungsgemäß die Möglichkeit für eine bequeme und kostengünstige Selektierung der einzelnen Fehlerquellen eröffnet.

Sinkt nämlich der Systemdruck im das Wärmeträgermedium führenden Leitungssystem, der grundsätzlich gemessen zu werden pflegt, und muß Wärmeträgermedium nachgefüllt werden, so liegt eine Leckage in diesem Leitungssystem vor, wobei auch die Umwälzpumpe als solche dazugehört. Muß im Laufe der Zeit der gesunkene Systemdruck durch Nachfüllen von Wärmeträgermedium auf seinen Ausgangswert gebracht werden, ohne daß dadurch der Differenzdruck über der Umwälzpumpe, der sich in einer Veränderung der Differenz von Vorlauf- und Rücklauftemperatur ausdrückt, auf seinen früheren Wert gebracht werden kann, so deutet dies auf eine Erhöhung des Strömungswiderstandes im das Wärmeträgermedium führenden Leitungssystem beispielsweise durch Verkalkung oder Defekt der Umwälzpumpe beispielsweise in Form eines Lagerschadens hin. Sinkt der Systemdruck im Wärmeträgermedium führenden Leitungssystem nicht, so kann nur ein Hängen einer oder mehrerer Drosseleinrichtung(en) oder aber auch ein Absinken der Nennleistung der Umwälzpumpe beispielsweise durch Verschleiß derselben vorliegen. Die Selektierung dieser beiden Störfälle erfolgt dadurch, daß das Raumtemperaturverhalten der einzelnen mit automatisch wirkenden Drosseleinrichtungen ausgestatteten Heizkörper bzw. Kühleinrichtungen beobachtet wird. Wird festgestellt, daß in einem Raum oder mehreren Räumen, der bzw. die zu temperieren ist bzw. sind, die vorbestimmte Raumtemperatur nicht erreicht wird, so liegt ein Defekt der betreffenden Drosseleinrichtung vor. Ist dies nicht der Fall, wird aber dennoch ein Ansteigen der Inbetriebnahmetemperaturdifferenz auf die Anfahrtemperaturdifferenz festgestellt, so kann dies praktisch nur auf einen Defekt der Umwälzpumpe bzw. des Antriebs derselben hinweisen.

Stellt man beim Vergleich von Anfahr- und Inbetriebnahmetemperaturdifferenz oder aber der Anfahrtemperaturdifferenzen verschiedener Tage untereinander bei jeweils gleichen sonstigen Bedingungen fest, daß die minimal mögliche oder eine bestimmte minimale Differenz von Vorlauf- und Rücklauftemperatur des Wärmeträgermediums sogar unterschritten wird, so liefert dies den eindeutigen Hinweis darauf, daß der Wärme- bzw. Kälteerzeuger nicht mehr die erwartete Leistung, beispielsweise seine angegebene Nennleistung oder eine spezifisch eingestellte Soll- bzw. Betriebsleistung, erbringt, was bei einem Wärmeerzeuger auf beispielsweise einen Brenner- oder Wärmepumpendefekt bzw. auf verkalkte(n) oder verrußte(n) Wärmeaustauscher und bei einem Kälteerzeuger auf beispielsweise einen Kompressorschaden oder einen Kältemaschinendefekt bzw. auf verkalkte(n) oder verrußte(n) Wärmeaustauscher hindeutet.

Vorrichtungsseitig wird die Erfindung diesen untergeordneten Erfindungsgedanken dadurch gerecht, daß die Regeleinrichtung eine Sollwert-Wahleinrichtung mit einer über eine Impulsleitung mit der Einrichtung zur Ermittlung der Differenz von Vorlauf- und Rücklauftemperatur und/oder über eine Impulsleitung mit der Vergleichseinrichtung zur Bestimmung der Abweichung dieser Differenz von Vorlauf- und Rücklauftemperatur über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb bei voller Öffnung aller Drosseleinrichtungen als minimal mögliche Differenz von Vorlauf- und Rücklauftemperatur (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und/oder der im Verlauf des Heizbetriebs bei Aufheizen nach einer Abkühlung bzw. im Verlauf des Kühlbetriebs bei Abkühlen nach einer Erwärmung bei voller Öffnung aller Drosseleinrichtungen als minimale Differenz von Vorlauf- und Rücklauftemperatur (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und je einer über eine Impulsleitung mit dieser verbundenen einstellbaren Verhältnisgabeeinrichtung als Sollwert-Bildungseinrichtung für die obere bzw. die untere Grenze des Sollwert-Bandes der Differenz von Vorlauf- und Rücklauftemperatur sowie eine oder jeweils eine über Impulsleitungen einerseits mit der zugeordneten Sollwert-Bildungseinrichtung der Sollwert-Wahleinrichtungen und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Differenz von Vorlauf- und Rücklauftemperatur auf sowohl bei Heizbetrieb als auch bei Kühlbetrieb ein Vielfaches dieser minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) und der zugeordneten unteren Grenze des Sollwert-Bandes der Differenz von Vorlauf- und Rücklauftemperatur auf sowohl bei Heizbetrieb als auch bei Kühlbetrieb einen Bruchteil dieser minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) aufweist, wobei dieser Bruchteil vorzugsweise entsprechend der um ein durch den Reziprokwert des Multiplikators des den oberen Sollwert der Differenz von Vorlauf- und Rücklauftemperatur des Wärmeträgermediums bestimmenden Vielfachen verminderten minimal möglichen bzw. minimalen Temperaturdifferenz wählbar ist.

Auch hier gilt, daß man dann, wenn man nach den vorstehend erläuterten Kriterien festgestellt hat, daß es sich im Zuge eines ermittelten Anstiegs der Differenz von Vorlauf- und Rücklauftemperatur von ihrem ursprünglichen Inbetriebnahmewert auf einen höheren Wert in Form der sogenannten Anfahrtemperaturdifferenz nur um eine Verkalkung der Anlage handelt, diese durchaus in bisheriger Weise weiterfahren kann, wobei die festgestellte höhere Anfahrtemperaturdifferenz die Bestimmungsfunktion der ursprünglichen Inbetriebnahmetemperaturdifferenz für die Festlegung der Führungsgröße der Regelung in Form des erfindungsgemäßen Sollwert-Bandes übernehmen kann, was den bereits beschriebenen Vorteil erbringt, daß in einem solchen Fall auf einen Service-Techniker verzichtet werden kann.

Auch hier bietet die Erfindung die vorteilhafte Möglichkeit unterschiedlicher vom Betreiber der Heizungs- bzw. Kühlanlage einstellbarer Betriebsweisen, indem für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der minimal möglichen oder minimalen Differenz von Vorlauf- und Rücklauftemperatur des Wärmeträgermediums, vorzugsweise zwischen etwa dem 1,5- bis 2-fachen dieser Temperaturdifferenz, und der kleinere Sollwert dieser Temperaturdifferenz entsprechend einem größeren Bruchteil dieser minimal möglichen oder minimalen Temperaturdifferenz, vorzugsweise entsprechend der um ein durch den Reziprokwert des Multiplikators des den größeren Sollwert dieser Temperaturdifferenz bestimmenden Vielfachen gebildetes Vielfaches verminderten minimal möglichen bzw. minimalen Temperaturdifferenz, und/oder für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der minimal möglichen oder minimalen Differenz von Vorlauf- und Rücklauftemperatur des Wärmeträgermediums, vorzugsweise zwischen etwa dem 1,2- bis 1,5-fachen dieser Temperaturdifferenz, und der kleinere Sollwert dieser Temperaturdifferenz entsprechend einem mittleren Bruchteil dieser minimal möglichen oder minimalen Temperaturdifferenz, vorzugsweise entsprechend der um ein durch den Reziprokwert des Multiplikators des den größeren Sollwert dieser Temperaturdifferenz bestimmenden Vielfachen gebildetes Vielfaches verminderten minimal möglichen bzw. minimalen Temperaturdifferenz, und/oder für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem vergleichsweise kleinen Vielfachen der minimal möglichen oder minimalen Differenz von Vorlauf- und Rücklauftemperatur des Wärmeträgermediums, vorzugsweise zwischen etwa dem 1- bis 1,2-fachen dieser Temperaturdifferenz, und der kleinere Sollwert dieser Temperaturdifferenz entsprechend einem vergleichsweise kleinen Bruchteil dieser minimal möglichen oder minimalen Temperaturdifferenz, vorzugsweise entsprechend der um ein durch den Reziprokwert des Multiplikators des den größeren Sollwert dieser Temperaturdifferenz bestimmenden Vielfachen gebildetes Vielfaches verminderten minimal möglichen bzw. minimalen Temperaturdifferenz, und/oder speziell für Beheizung von Räumen für Frostschutzbetrieb, bei dem für alle zu beheizenden Räume lediglich eine ein Einfrieren des Wärmeträgermediums in den Heizkörpern und/oder

0192225

dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend der minimal möglichen oder der minimalen Differenz von Vorlauf- und Rücklauftemperatur des Wärmeträgermediums und der kleinere Sollwert dieser Temperaturdifferenz geringfügig größer als deren Verschwindwert gewählt wird. Entsprechend kann auch hier vorrichtungstechnisch die Regeleinrichtung eine Speichereinrichtung, in der mindestens zwei, vorzugsweise mehr, bevorzugte Paarungen von Ober- und Untergrenzen des Sollwert-Bandes der Differenz von Vorlauf- und Rücklauftemperatur, wie beispielsweise für Komfort- , Normal- , Spar- , Nachtabsenkungs- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwertbildungseinrichtungen für die obere bzw. untere Grenze des Sollwert-Bandes der Differenz von Vorlauf- und Rücklauftemperatur oder mit der oder zumindest einer der etwa vorhandenen Programmspeichereinrichtung(en) für die Beeinflussung des Sollwert-Bandes der Differenz von Vorlauf- und Rücklauftemperatur oder mit zumindest einer etwa vorhandenen Verstelleinrichtung für diese oder mit zumindest einem Sollwertgeber verbunden ist. Dabei können auch hier zweckmäßig in der Speichereinrichtung die bevorzugten Paarungen von Ober- und Untergrenzen des Sollwert-Bandes der Differenz von Vorlauf- und Rücklauftemperatur mit in Richtung zunehmender Werte dieser Temperaturdifferenz vorzugsweise proportional größer werdendem Unterschied und/oder Verhältnis von jeweiliger oberer und unterer Grenze der Differenz von Vorlauf- und Rücklauftemperatur gespeichert sein. Die dabei erzielbaren Vorteile einschließlich der Selektierungsmöglichkeiten für Fehlerquellen sind die gleichen, wie bezüglich der erstbeschriebenen Alternative des Betriebs einer Heizungs- bzw. Kühlanlage mit im Ein-Aus-Betrieb arbeitendem Wärme- bzw. Kälteerzeuger ohne wesentlichen Wärmespeicher bereits erläutert. Insbesondere kann auch hier die Umschaltung von einer Betriebsart auf eine andere schrittweise oder kontinuierlich erfolgen.

Bei der sich mit dem Betrieb von Heizungs- und Kühlanlagen mit Wärme- bzw. Kälteerzeuger mit kontinuierlicher Zufuhr der Betriebsenergie zu ihm befassenden Ausführungsform der Erfindung, bei der somit die Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger erfolgt, wird bei Auftreten einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme bzw. Kälteerzeuger verringert und bei Auftreten einer Abweichung der Differenz von Vorlauf- und Rücklauftemperatur des Wärmeträgermediums unter die untere Grenze ihres vorgegebenen Sollwert-Bandes die Zufuhr von Betriebsenergie zum Wärme- bzw. Kälteerzeuger erhöht. Die diesem untergeordneten Erfindungsgedanken entsprechende vorrichtungsmäßige Ausgestaltung der Erfindung wird dabei so getroffen, daß ein im Betrieb kontinuierlich mit Betriebsenergie versorgbarer Wärme- bzw. Kälteerzeuger vorgesehen ist und daß die Regeleinrichtung einen einen während der Betriebsdauer des Wärme- bzw. Kälteerzeugers ständig vorhandenen modulierten Stellbefehl abgebenden Stellbefehlgeber aufweist, mittels dessen der Einrichtung zur Beeinflussung der Zufuhr der Betriebsenergie zum Wärme- bzw. Kälteerzeuger die Stellbefehle als betragsmäßige Modulationsunterschiede eines während der Betriebsdauer ständig anstehenden Betriebsbefehls zuführbar sind, wobei jeweils bei Ermittlung einer Abweichung der Differenz von Vorlauf- und Rücklauftemperatur über die obere Grenze ihres vorgegebenen Sollwert-Bandes hinaus die Zufuhr von Betriebsenergie zum Wärme bzw. Kälteerzeuger in Abhängigkeit von dieser Abweichung verringerbar und bei Ermittlung einer Abweichung der Differenz von Vorlauf- und Rücklauftemperatur unter die untere Grenze ihres vorgegebenen Sollwert-Bandes die Zufuhr von Betriebsenergie zum Wärme- bzw. Kälteerzeuger in Abhängigkeit von dieser Abweichung erhöhbar ist.

Auch bei dieser Variante der Erfindung ist es gemäß einem untergeordneten Erfindungsgedanken derselben möglich, zur Lösung einer entsprechenden untergeordneten Aufgabe in zweckmäßiger Weise die für eine bestimmte Heizungs- bzw. Kühlanlage der hier angesprochenen Art mit kontinuierlicher Betriebsweise aufgrund der Gesamtheit der Einflußgrößen, denen sie unterliegt, optimale Führungsgröße zu ermitteln. Hierfür sieht dieser untergeordnete Erfindungsgedanke vor, daß bei Inbetriebnahme des Verfahrens für Heizbetrieb oder für Kühlbetrieb bei Vollast und voller Öffnung aller Drosseleinrichtungen die Differenz von Vorlauf- und Rücklauftemperatur des Wärmeträgermediums als minimal mögliche Temperaturdifferenz, die auch hier als Inbetriebnahmetemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimal möglichen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimal möglichen Temperaturdifferenz bzw. diesem Vielfachen bzw. Bruchteil derselben kleineren oder höchstens gleichen Vielfachen bzw. Bruchteil dieser minimal möglichen Temperaturdifferenz gewählt wird. Auch hier empfiehlt sich diese Verfahrensweise mit Vorzug für die als "Jungfernfahrt" zu bezeichnende erstmalige Inbetriebnahme einer mit der Erfindung ausgerüsteten Heizungs- bzw. Kühlanlage, zumal sie dann die für diese tatsächlich mögliche minimale Differenz von Vorlauf- und Rücklauftemperatur des Wärmeträgermediums bei

- 62 -

0192225

Vollast und voller Öffnung aller Drosseleinrichtungen als die einzige relevante Größe, in der alle auf die Heizungs- bzw. Kühlanlage wirkenden Einflußgrößen enthalten sind, erbringt, ohne daß diese im einzelnen bestimmt oder gemessen zu werden bräuchten, die aber im wesentlichen abhängig ist von der Anzahl und Art der Heizkörper bzw. Kühleinrichtungen, von deren Verschaltung, dem Druckabfall im gesamten Heizungs- bzw. Kühlmittelkreislauf, der Umwälzpumpe nebst deren Druck-Fördermengen-Charakteristik und der Leistung des jeweiligen Wärme- bzw. Kälteerzeugers. Auch hier umfaßt der Meßwert der Inbetriebnahmetemperaturdifferenz all diese Größen und bietet somit seinerseits als für den Wärme- bzw. Kälteverbraucher charakteristische Größe vorteilhafte Möglichkeiten für seine Nutzung im Rahmen der Erfindung.

Ferner ist auch hier die Möglichkeit einer zweckmäßigen Fortbildung dieses untergeordneten Erfindungsgedankens dadurch gegeben, daß bei Heizbetrieb für Aufheizen nach einer Abkühlung bzw. bei Kühlbetrieb für Abkühlen nach einer Erwärmung bei Vollast und voller Öffnung aller Drosseleinrichtungen die Differenz von Vorlauf- und Rücklauftemperatur des Wärmeträgermediums als minimale Temperaturdifferenz (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimalen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimalen Temperaturdifferenz bzw. diesem Vielfachen bzw. Bruchteil derselben kleineren oder höchsten gleichen Vielfachen bzw. Bruchteil dieser minimalen Temperaturdifferenz gewählt wird. Auch hierdurch wird in gleicher Weise, wie vorstehend bereits für die Heizungs- bzw. Kühlanlagen mit in diskontinuierlichem Betrieb arbeitendem Wärme- bzw. Kälteerzeuger betreffenden Varianten der Erfindung erläutert, durch einen Vergleich von Anfahr- und Inbetriebnahmetemperaturdifferenz bzw. auch von Anfahrtemperaturdifferenzen verschiedener Tage untereinander bei jeweils gleichen sonstigen Bedingungen ein Indikator dafür ermöglicht, ob und gegebenenfalls welche betrieblichen oder anlagenmäßigen Defekte bei Veränderung der Differenz von Vorlauf- und Rücklauftemperatur des Wärmeträgermediums vorliegen. Bezüglich der Selektion derselben voneinander kann auf die Ausführungen im Zusammenhang mit den vorstehend erläuterten Varianten der Erfindung verwiesen werden.

Vorrichtungsseitig wird die Erfindung diesen hierauf gerichteten untergeordneten Erfindungsgedanken dadurch gerecht, daß die Regeleinrichtung eine Sollwert-Wahleinrichtung mit einer über eine Impulsleitung mit der Einrichtung zur Ermittlung der Differenz von Vorlauf- und Rücklauftemperatur und/oder über eine Impulsleitung mit der Vergleichseinrichtung zur Bestimmung der Abweichung dieser Differenz von Vorlauf- und Rücklauftemperatur über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb bei Vollast und voller Öffnung aller Drosseleinrichtungen als minimal mögliche Differenz von Vorlauf- und Rücklauftemperatur (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und/oder der im Verlauf des Heizbetriebes bei Aufheizen nach einer Abkühlung bzw. im Verlauf des Kühlbetriebes bei Abkühlen nach einer Erwärmung bei Vollast und voller Öffnung aller Drosseleinrichtungen als minimale Differenz von Vorlauf- und Rücklauftemperatur (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und je einer über eine Impulsleitung mit dieser verbundenen einstellbaren Verhältnisgabeeinrichtung als Sollwert-Bildungseinrichtung für die obere bzw. die untere Grenze des Sollwert-Bandes der Differenz von Vorlauf- und Rücklauftemperatur sowie jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Differenz von Vorlauf- und Rücklauftemperatur auf einen sowohl bei Heizbetrieb als auch bei Kühlbetrieb der minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) oder einem Vielfachen oder einem Bruchteil derselben und der zugeordneten unteren Grenze des Sollwert-Bandes der Differenz von Vorlauf- und Rücklauftemperatur auf einen sowohl bei Heizbetrieb als auch bei Kühlbetrieb einem im Vergleich zu dieser minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) bzw. diesem Vielfachen bzw. Bruchteil derselben kleineren oder höchstens gleichen Vielfachen bzw. Bruchteil dieser minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) entsprechenden Wert aufweist. Auch hier kann wie bei den vorstehend beschriebenen diskontinuierlichen Betrieb des Wärme- bzw. Kälteerzeugers einer mit der Erfindung ausgerüsteten Heizungs- bzw. Kühlanlage betreffenden Varianten der Erfindung die Bestimmungsfunktion der ursprünglichen Inbetriebnahmetemperaturdifferenz für die Festlegung der Führungsgröße der Regelung in Form des erfindungsgemäßen Sollwert-Bandes von der Anfahrtemperaturdifferenz mit allen bereits erläuterten Vorteilen übernommen werden.

Die sich mit dem Betrieb von mit der Erfindung ausgestatteten Heizungs- bzw. Kühlanlagen mit kontinuierlich arbeitendem Wärme- bzw. Kälteerzeuger befassende Variante der Erfindung bietet gemäß einem diese zweckmäßig weiterbildenden untergeordneten Erfindungsgedanken aber auch noch eine andere vorteilhafte Möglichkeit, die erfindungsgemäß durch die Bandbreite des Sollwert-Bandes der Differenz von Vorlauf- und Rücklauftemperatur des Wärmeträgermediums bestimmte Führungsgröße für die erfindungsgemäße Regelung so zu bestimmen, daß der Vorgabewert für diese Führungsgröße besonders schnell und überdies bereits kurz nach dem Anfahren sehr genau zur Verfügung steht. Gemäß diesem untergeordneten Erfindungsgedanken kann nämlich zweckmäßig bei Inbetriebnahme des Verfahrens für Heizbetrieb oder für Kühlbetrieb die zeitliche Änderung der Vorlauf- und/oder der Rücklauftemperatur und/oder der Differenz von Vorlauf- und Rücklauftemperatur des Wärmeträgermediums bei Vollast und voller Öffnung aller Drosseleinrichtungen als minimal mögliche Temperaturdifferenz (Inbetriebnahmetemperaturdifferenz) oder bei Heizbetrieb für Aufheizen nach einer Abkühlung bzw. bei Kühlbetrieb für Abkühlen nach einer Erwärmung die zeitliche Änderung der Vorlauf- und/oder der Rücklauftemperatur und/oder der Differenz von Vorlauf- und Rücklauftemperatur des Wärmeträgermediums bei Vollast und voller Öffnung aller Drosseleinrichtungen als minimale Temperaturdifferenz (Anfahrtemperaturdifferenz) ermittelt und der größere und der kleinere Sollwert der Differenz von Vorlauf- und Rücklauftemperatur des Wärmeträgermediums entsprechend dem Maß dieser zeitlichen Änderung der Vorlauf- und/oder der Rücklauftemperatur und/oder der Differenz von Vorlauf- und Rücklauftemperatur des Wärmeträgermediums verändert werden, indem bei größerer zeitlicher Änderung der Vorlauf- und/oder der Rücklauftemperatur und/oder dieser Temperaturdifferenz beide Sollwerte um einen größeren Betrag und bei kleinerer zeitlicher Änderung der Vorlauf- und/oder der Rücklauftemperatur und/oder dieser Temperaturdifferenz um einen geringeren Betrag gegenüber der minimal möglichen bzw. minimalen Temperaturdifferenz verringert werden. Vorrichtungsmäßig kann hierfür zweckmäßig vorgesehen sein, daß die Regeleinrichtung eine Sollwert-Wahleinrichtung mit einer über eine Impulsleitung mit der Einrichtung zur Ermittlung der Differenz von Vorlauf- und Rücklauftemperatur und/oder über eine Impulsleitung mit der Vergleichseinrichtung zur Bestimmung der Abweichung dieser Differenz von Vorlauf- und Rücklauftemperatur über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb bei Vollast und voller Öffnung aller Drosseleinrichtungen als minimal mögliche Differenz von Vorlauf- und Rücklauftemperatur (Inbetriebnahmetemperaturdifferenz) auftretenden Differenz von Vorlauf- und Rücklauftemperatur und/oder der im Verlauf des Heizbetriebes bei Aufheizen nach einer Abkühlung bzw. im Verlauf des Kühlbetriebes bei Abkühlen nach einer Erwärmung bei Vollast und voller Öffnung aller Drosseleinrichtungen als minimale Differenz von Vorlauf- und Rücklauftemperatur (Anfahrtemperaturdifferenz) auftretenden Differenz von Vorlauf- und Rücklauftemperatur und einer oder für die obere und die untere Grenze des Sollwert-Bandes der Differenz von Vorlauf- und Rücklauftemperatur je einer Einrichtung zur Vorgabe von Zeitspannen und ferner einer über Impulsleitungen einerseits mit dieser Einrichtung zur Vorgabe von Zeitspannen und andererseits mit der Einrichtung zur Ermittlung der Differenz von Vorlauf- und Rücklauftemperatur und/oder mit der Detektoreinrichtung verbundene Dividiereinrichtung zur Ermittlung des zeitlichen Gradienten der minimal möglichen Differenz von Vorlauf- und Rücklauftemperatur (Inbetriebnahmetemperaturdifferenz) bzw. der minimalen Differenz von Vorlauf- und Rücklauftemperatur (Anfahrtemperaturdifferenz) eine oder jeweils eine über Impulsleitungen einerseits mit der bzw. den Dividiereinrichtung(en) und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eingestellter Werte der oberen und der unteren Grenze des Sollwert-Bandes der Differenz von Vorlauf- und Rücklauftemperatur des Wärmeträgermediums auf sowohl bei Heizbetrieb als auch bei Kühlbetrieb einen für einen größeren ermittelten zeitlichen Gradienten der Vorlauf- und/oder der Rücklauftemperatur und/oder der Differenz derselben der um einen größeren Betrag und für einen kleineren ermittelten zeitlichen Gradienten der Vorlauf- und/oder der Rücklauftemperatur und/oder der Differenz derselben der um einen geringeren Betrag verringerten minimal möglichen Differenz von Vorlauf- und Rücklauftemperatur (Inbetriebnahmetemperaturdifferenz) bzw. minimalen Differenz von Vorlauf- und Rücklauftemperatur (Anfahrtemperaturdifferenz) entsprechenden Wert aufweist. Ersichtlich ist diese Möglichkeit der Detektion des optimalen Wertes für die Führungsgröße aus dem zeitlichen Gradienten von Vorlauf- und/oder Rücklauftemperatur und/oder Differenz dieser Temperaturen des Wärmeträgermediums einerseits besonders flink und genau, was für bestimmte Inbetriebnahmevorgänge von besonderem Vorteil sein kann, jedoch liegt die besondere Bedeutung der Lösung gemäß diesem untergeordneten Erfindungsgedanken mehr auf dem sogenannten "Anfahrvorgang", unter dem normalerweise das Hochfahren einer Heizungs- bzw. Kühlanlage aus deren Nachtbetrieb in deren Arbeitsbetrieb verstanden wird, da dieser Vorgang sich ständig wiederholend täglich aufzutreten pflegt und bei schneller Überprüfung und/oder gegebenenfalls Nachkorrektur der Führungsgröße zu besonderen Energieeinsparungen zu führen vermag.

Speziell für diese Art von Heizungs- bzw. Kühlanlagen mit kontinuierlichem Betrieb hat sich eine Fortbildung gemäß einem anderen untergeordneten Erfindungsgedanken bewährt, gemäß welchem nach einer Veränderung der Zufuhr von Betriebsenergie zum Wärme- bzw. Kälteerzeuger die sich unmittelbar danach oder nach einer vorgegebenen Zeitspanne einstellende Differenz von Vorlauf- und Rücklauftemperatur des Wärmeträgermediums, die als Betriebstemperaturdifferenz zu bezeichnen ist, als der für diese Veränderung bestimmenden Grenze des vorgegebenen Sollwert-Bandes der Differenz von Vorlauf- und Rücklauftemperatur des Wärmeträgermediums entsprechende neue Grenze dieses Sollwert-Bandes gewählt wird. Hierdurch ergibt sich eine Art Selbstlernvorgang für die Führungsgröße des Regelungsverfahrens nach der Erfindung. Sollte diese nämlich aus irgendwelchen Gründen nicht spezifisch auf die äußeren und insbesondere inneren anlagenspezifischen und/oder aufgrund von Klimazone und/oder Lage und/oder Wärmedämmung oder dergleichen verbrauchereigenen und/oder die nutzerbezogenen Eigenschaften der jeweiligen Heizungs- bzw. Kühlanlage von vornherein abgestimmt sein können, wie das selbst dann nicht zu erwarten ist, wenn herstellerseitig oder seitens des Installateurs der Anlage ein im allgemeinen als durchschnittlichen Bedürfnissen gerecht werdender Vorgabewert der durch die Differenz von Vorlauf- und Rücklauftemperatur des Wärmeträgermediums bestimmten Führungsgröße für die erfindungsgemäße Regelung eingestellt wird, so liefert dieser Aspekt der Erfindung eine bei in diskontinuierlichem Betrieb arbeitenden Systemen nicht zu realisierende Automatik, die es ermöglicht, unabhängig von jedweder Voreinstellung und/oder Justierung durch den Heizungsbauer über eine einen schnellen Zugriff ermöglichende Betriebsgröße in Form der Zufuhr von Betriebsenergie zum Wärme- bzw. Kälteerzeuger die optimale Führungsgröße zu generieren. Insofern kann wohl bei in kontinuierlichem Betrieb arbeitenden Systemen auch mit Voreinstellung gearbeitet werden, durch diesen Aspekt der Erfindung wird jedoch jede wie auch immer gewählte Voreinstellung selbstlernend automatisch in Richtung eines Optimums verändert. Hierfür wird vorrichtungsseitig vorgesehen, daß die Regeleinrichtung eine über Impulsleitungen mit den Messeinrichtungen für die Vorlauf- und die Rücklauftemperatur des Wärmeträgermediums und/oder mit der Einrichtung zur Ermittlung der Differenz zeitgleicher Meßwerte dieser beiden Temperaturen verbundene Zeitprogrammgabeeinrichtung zur Einleitung zeitgleicher Messungen von Vorlauf- und Rücklauftemperatur oder zur Aufnahme und/oder Abgabe eines Meßwertes oder einer Mehrzahl von von den Meßeinrichtungen für Vorlauf- und Rücklauftemperatur des Wärmeträgermediums gelieferten zeitgleichen Meßwerten dieser beiden Temperaturen während einer vorgegebenen Zeitspanne durch die Einrichtung zur Ermittlung der Differenz zeitgleicher Meßwerte dieser beiden Temperatur und eine jeweils über Impulsleitungen einerseits mit dieser Einrichtung zur Ermittlung der Differenz zeitgleicher Meßwerte dieser beiden Temperaturen und mit der Zeitprogrammgabeeinrichtung und andererseits mit dem zugeordneten Sollwertgeber bzw. den Sollwertgebern verbundene Einrichtung zur automatischen Verstellung desselben bzw. derselben im Sinne einer Nachführung der eine der sich unmittelbar oder nach einer vorgegebenen Zeitspanne nach einer Veränderung der Zufuhr von Betriebsenergie zum Wärme- bzw. Kälteerzeuger einstellenden Differenz von Vorlauf- und Rücklauftemperatur des Wärmeträgermediums, die auch hier als Betriebstemperaturdifferenz zu bezeichnen ist, entsprechende Veränderung dieser Temperaturdifferenz bestimmenden Grenze des Sollwert-Bandes der Differenz von Vorlauf- und Rücklauftemperatur auf einen neuen Grenzwert aufweist.

Für die verfahrensmäßige Durchführung dieses untergeordneten Erfindungsgedankens hat es sich weiterhin als zweckmäßig erwiesen, wenn nach einer Veränderung der Zufuhr von Betriebsenergie zum Wärme- bzw. Kälteerzeuger die der sich unmittelbar danach oder nach einer vorgegebenen Zeitspanne als der für diese Veränderung bestimmenden Grenze des vorgegebenen Sollwert-Bandes der Differenz von Vorlauf- und Rücklauftemperatur des Wärmeträgermediums einstellenden Temperaturdifferenz, die als Betriebstemperaturdifferenz bezeichnet werden kann, nicht entsprechende Grenze dieses Sollwert-Bandes im gleichen Sinne wie die für die Veränderung der Zufuhr von Betriebsenergie zum Wärme- bzw. Kälteerzeuger bestimmende Grenze dieses Sollwert-Bandes und vorzugsweise proportional der Veränderung derselben verändert wird, während hierfür vorrichtungsmäßig erfindungsgemäß vorgesehen ist, daß die Regeleinrichtung eine oder jeweils eine über Impulsleitungen einerseits mit der Einrichtung zur Ermittlung der Differenz zeitgleicher Meßwerte von Vorlauf- und Rücklauftemperatur und mit der Zeitprogrammgabeeinrichtung und andererseits mit dem zugeordneten Sollwertgeber bzw. den Sollwertgebern verbundene Einrichtung zur automatischen Verstellung desselben bzw. derselben im Sinne einer Nachführung der eine der sich unmittelbar oder nach einer vorgegebenen Zeitspanne nach einer Veränderung der Zufuhr von Betriebenergie zum Wärme- bzw. Kälteerzeuger einstellenden Differenz von Vorlauf- und Rücklauftemperatur des Wärmeträgermediums entsprechende Veränderung dieser Temperaturdifferenz nicht bestimmenden Grenze des Sollwert-Bandes der Differenz von Vorlauf- und Rücklauftemperatur in der gleichen Richtung wie die Nachführung der die der sich unmittelbar oder nach einer vorgegebenen Zeitspanne nach einer Veränderung der Zufuhr von Betriebsenergie zum Wärme- bzw. Kälteerzeuger einstellenden Differenz von Vorlauf- und Rücklauftemperatur des Wärmeträgermediums, der Betriebstemperaturdifferenz, entsprechende Veränderung dieser Temperaturdifferenz bestimmenden Grenze des Sollwert-Bandes der Differenz von Vorlauf- und Rücklauftemperatur und vorzugsweise auch um ein zu dem Maß der Nachführung derselben proportionales Maß aufweist.

Es ist ersichtlich, daß hierdurch die Möglichkeit gegeben wird, dann, wenn das die Führungsgröße für die Regelung nach der Erfindung bestimmende Sollwert-Band für die Differenz von Vorlauf- und Rücklauftemperatur des Wärmeträgermediums ungünstig gewählt sein sollte, wobei der Begriff "ungünstig" durchaus auch so zu verstehen ist, daß er bedeutet, daß die Führungsgröße nicht genau auf die spezifischen Eigenheiten der Kombination der jeweils vorhandenen Heizungs- bzw. Kühlanlage und der zugehörigen Wärme- bzw. Kälteverbraucher abgestimmt ist, die eine oder beide der dieses Sollwert-Band bestimmende(n) Grenze(n) so zu verändern, daß stets Abweichungen der Differenz von Vorlauf- und Rücklauftemperatur des Wärmeträgermediums über die obere und/oder unter die untere Grenze dieses Sollwert-Bandes derselben auftreten, diese aber im Interesse der Vermeidung unnötiger Überschwingungen mit entsprechenden Einschwingzeiten nicht übergroß sind. Das bedeutet, daß beispielsweise bei einem für spezifische Betriebsverhältnisse zu weit gewählten Sollwert-Band der Differenz von Vorlauf- und Rücklauftemperatur des Wärmeträgermediums dieses durch Veränderung der einen oder beider seiner Grenzen so verengt werden kann bzw. sollte, daß Überschreitungen zumindest einer dieser Grenzen im Betrieb gewährleistet sind, die dann zu Regeleingriffen geeigneter Art und Größe führen, während umgekehrt einem zu eng gewählten Sollwert-Band in entsprechender Weise durch Erweiterung seiner Bandbreite begegnet werden kann.

Auch für diese Heizungs- bzw. Kühlanlagen mit kontinuierlich betriebenem Wärme- bzw. Kälteerzeuger betreffende Variante der Erfindung ist dem Nutzer derselben durch einen weiterführenden Erfindungsgedanken erstmalig die Möglichkeit gegeben, mit ein und derselben Regelungsvorrichtung nach der Erfindung nach seiner eigenen Wahl und Bestimmung unterschiedliche Betriebsarten zu ihm genehmen Zeiten einstellen zu können, indem für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der sich unmittelbar nach einer Veränderung der Zufuhr von Betriebsenergie zum Wärme- bzw. Kälteerzeuger oder nach einer vorgegebenen Zeitspanne nach dieser einstellenden Temperaturdifferenz von Vorlauf- und Rücklauftemperatur für das Wärmeträgermediums (Betriebstemperaturdifferenz), vorzugsweise zwischen etwa dem 1,5- bis 2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem großen Vielfachen und der um ein durch den Reziprokwert des Multiplikators desselben gebildetes Vielfaches der Betriebstemperaturdifferenz verminderten Betriebstemperaturdifferenz, und/oder für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der sich unmittelbar nach einer Veränderung der Zufuhr von Betriebsenergie zum Wärme- bzw. Kälteerzeuger oder nach einer vorgegebenen Zeitspanne nach dieser einstellenden Temperaturdifferenz von Vorlauf- und Rücklauftemperatur des Wärmeträgermediums (Betriebstemperaturdifferenz), vorzugsweise zwischen etwa dem 1,2- bis 1,5-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem mittleren Vielfachen und der um ein durch den Reziprokwert des Multiplikators desselben gebildetes Vielfaches der Betriebstemperaturdifferenz verminderten Betriebstemperaturdifferenz, und/oder für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem kleinen Vielfachen der sich unmittelbar nach einer Veränderung der Zufuhr von Betriebsenergie zum Wärme- bzw. Kälteerzeuger oder nach einer vorgegebenen Zeitspanne nach dieser einstellenden Temperaturdifferenz von Vorlauf- und Rücklauftemperatur des Wärmeträgermediums, auch hier als Betriebstemperaturdifferenz bezeichnet, vorzugsweise zwischen etwa dem 1- bis 1,2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem kleineren Vielfachen und der um ein durch den Reziprokwert des Multiplikators desselben gebildetes Vielfaches der Betriebstemperaturdifferenz verminderten Betriebstemperaturdifferenz, und/oder speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Temperatur aufrechtzuerhalten ist, der größere Sollwert der Differenz von Vorlauf- und Rücklauftemperatur des Wärmeträgermediums entsprechend einem Bruchteil der minimal möglichen oder minimalen Differenz von Vorlauf- und Rücklauftemperatur des Wärmeträgermediums und der kleinere Sollwert dieser Temperaturdifferenz entsprechend einem im Vergleich zu diesem den größeren Sollwert dieser Temperaturdifferenz bestimmenden Bruchteil geringeren oder höchstens gleichen Bruchteil der minimal möglichen oder minimalen Differenz von Vorlauf- und Rücklauftemperatur des Wärmeträgermediums gewählt wird. Für diese Variante der Erfindung ist es im übrigen auch möglich, die Bandbreite des Sollwert-Bandes der Differenz von Vorlauf- und Rücklauftemperatur des Wärmeträgermediums mit ihrem Verschwindwert vorzugeben, d. h. die untere Grenze des vorgegebenen Sollwert-Bandes der Differenz von Vorlauf- und Rücklauftemperatur des Wärmeträgermediums entsprechend der oberen Grenze desselben oder umgekehrt die obere Grenze entsprechend der Untergrenze zu wählen. Hierbei handelt es sich um eine spezifische Betriebsart der Erfindung mit auf ihrem Verschwindwert gehaltener Bandbreite der Führungsgröße, die praktisch dort einzusetzen sein wird, wo im Bereich extrem geringer Differenz von Vorlauf- und Rücklauftemperatur des Wärmeträgermediums mit nur ganz seltenen Schalteingriffen zu rechnen ist, was einem Frostschutzbetrieb unter Bedingungen entsprechen würde, die keine oder allenfalls höchst seltene Gefahrentemperaturen erwarten lassen, die für das das Wärmeträgermedium führende Leitungssystem, die Heizkörper und die Umwälzpumpe etc. schädlich sein könnten. Schwierigkeiten bezüglich der Regelungsstabilität sind in einem solchen Betriebsfall der Erfindung nicht zu erwarten.

Auch für diese sich mit Heizungs- bzw. Kühlanlagen mit kontinuierlich betriebenem Wärme- bzw. Kälteerzeuger befassende Variante der Erfindung kann vorrichtungstechnisch zweckmäßig die Regeleinrichtung eine Speichereinrichtung, in der mindestens zwei, vorzugsweise mehr, bevorzugte Paarungen von Ober- und Untergrenzen des Sollwert-Bandes der Differenz von Vorlauf- und Rücklauftemperatur, wie beispielsweise für Komfort- , Normal- , Nachtabsenkungs- bzw. Spar- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwertbildungseinrichtungen für die obere bzw. untere Grenze des Sollwert-Bandes der Differenz von Vorlauf- und Rücklauftemperatur oder mit der oder zumindest einer der etwa vorhandenen Programmspeichereinrichtung(en) für die Beeinflussung des Sollwert-Bandes der Differenz von Vorlauf- und Rücklauftemperatur oder mit zumindest einer etwa vorhandenen Verstelleinrichtung für diese oder mit zumindest einem Sollwertgeber verbunden ist. Auch hier können dabei zweckmäßig in der Speichereinrichtung die bevorzugten Paarungen von Ober- und Untergrenzen des Sollwert-Bandes der Differenz von Vorlauf- und Rücklauftemperatur mit in Richtung zunehmender Werte dieser Temperaturdifferenz vorzugsweise proportional größer werdendem Unterschied und/oder Verhältnis von jeweiliger oberer und unterer Grenze der Differenz von Vorlauf- und Rücklauftemperatur des Wärmeträgermediums gespeichert sein. Es ergeben sich die gleichen Vorteile insbesondere hinsichtlich der Optimierung des Energiewirtschaftswirkungsgrades in Verbindung mit der Anpassung an spezifische Bedürfnisse des Nutzers der Heizungs- bzw. Kühlanlage gegebenenfalls unter spezifischer Berücksichtigung der speziellen Forderungen öffentlicher Energieversorgungsunternehmen, wie diese vorstehend bereits im Zusammenhang mit der Darstellung der mit Wärme- bzw. Kälteerzeuger mit diskontinuierlichem Betrieb arbeitenden Varianten der Erfindung erläutert sind. Hervorzuheben ist, daß auch hier schrittweise oder kontinuierliche Umschaltung von einer Betriebsart auf eine andere möglich ist.

Gemäß einem anderen untergeordneten Gedanken ermöglicht die Erfindung erstmalig eine echte Regelung einer mit einer Mehrwege-Mischeinrichtung arbeitenden Heizungs- bzw. Kühlanlage, indem bei dieser erfindungsgemäßen Regelung erstmalig nicht von einer gemessenen Ist-Größe her Veränderungseinfluß auf den bestimmenden Sollwert genommen wird, also bereits vom Prinzip her jede Möglichkeit für ein Mitkopplungsverhalten und damit unkontrollierte Regelschwingungen ausgeschlossen ist, zumal auch in einem solchen Einsatzfall der Erfindung diese unabhängig ist von der Verwendung irgendwelcher Verknüpfungsalgorithmen für irgendwelche für das Betriebsverhalten der Heizungs- bzw. Kühlanlage für relevant gehaltene physikalische Größen nach Art der herkömmlichen Steuerungsarten. Für einen solchen Fall, bei dem die Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, sieht dieser untergeordnete Erfindungsgedanke vor, daß bei Auftreten einer Abweichung der Differenz von Vorlauf- und Rücklauftemperatur des Wärmeträgermediums über die obere oder unter die untere Grenze ihres vorgegebenen Sollwert-Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert und die sich unmittelbar danach oder nach einer vorgegebenen Zeitspanne einstellende Differenz von Vorlauf- und Rücklauftemperatur ermittelt und mit ihr als der Grenze des Sollwert-Bandes der Differenz von Vorlauf- und Rücklauftemperatur, die für die vorangegangene Abweichung bestimmend war, entsprechender neuer Grenze dieses Sollwert-Bandes diese Veränderung der Zufuhr von Wärme- bzw. Kälteleistung zum im Heizungs- bzw. Kühlmittelvorlauf befindlichen Wärmeträgermedium wiederholt wird, sobald wiederum eine Abweichung der Differenz von Vorlauf- und Rücklauftemperatur über die obere oder unter die untere Grenze dieses durch diese neue Grenze bestimmten Sollwert-Bandes derselben auftritt. Dabei kann zweckmäßig der Anteil des vom Wärme bzw. Kälteerzeuger her in den Heizungs- bzw. Kühlmittelvorlauf eingespeisten Massenstroms zum Gesamtmassenstrom bei Auftreten einer Abweichung der Differenz von Vorlauf- und Rücklauftemperatur des Wärmeträgermediums über die obere Grenze ihres vorgegebenen Sollwert-Bandes hinaus verringert und bei Auftreten einer Abweichung der Differenz von Vorlauf- und Rücklauftemperatur unter die untere Grenze ihres vorgegebenen Soll-wert-Bandes vergrößert werden. Vorrichtungsmäßig wird entsprechend vorgesehen, daß als Wärmeerzeuger ein brennstoffbefeuerter oder mit elektrischer Energie gespeister Kessel und/oder ein primärseitig mit Primärwärmeträgermedium beaufschlagter Wärmetauscher, wie beispielsweise ein Rauchgaskühler oder eine Fernwärmeübergabestation oder ein Ausgangswärmetauscher einer Wärmepumpe und/oder eine Elektrokompressionswärmepumpe und/oder eine gas- oder dieselmotorisch betriebene Wärmepumpe oder Sorptionswärmepumpe bzw. als Kälteerzeuger eine Elektrokompressionskältemaschine oder eine gas- oder dieselmotorisch betriebene Kältemaschine oder Sorptionskältemaschine und als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Mehrwege-Mischeinrichtung, beispielsweise ein den jeweiligen Wärmeträgermediumsausgang des Wärme- bzw. Kälteerzeugers einerseits mit dem Heizungs- bzw. Kühlmittelvorlauf und andererseits einer vom Heizungs- bzw. Kühlmittelrücklauf kommenden Beimischleitung für Wärmeträgermedium verbindender Drei-Wege-Mischer oder ein wahlweise den Wärmeträgermediumsausgang des Wärme- bzw. Kälteerzeugers und/oder den Heizungs- bzw. Kühlmittelrücklauf jeweils mit dem Heizungs- bzw. Kühlmittelvorlauf sowie den Wärmeträgermediumsausgang des Wärme- bzw. Kälteerzeugers und/oder den Heizungs- bzw. Kühlmittelrücklauf mit einer an den Wärmeträgermediumseingang des Wärme- bzw. Kälteerzeugers angeschlossenen Rückführleitung verbindender Vier-Wege-Mischer, vorgesehen ist und daß die Regeleinrichtung einen einen während der Betriebsdauer der Vorrichtung ständig vorhandenen modulierten Stellbefehl abgebenden Stellbefehlgeber, mittels dessen dem Antrieb der Mehrwege-Mischeinrichtung die Stellbefehle als betragsmäßige Modulationsunterschiede eines während der Betriebsdauer der Vorrichtung ständig anstehenden Betriebsbefehls zuführbar sind, wobei jeweils bei Ermittlung einer Abweichung der Differenz von Vorlauf- und Rücklauftemperatur des Wärmeträgermediums über die obere oder unter die untere Grenze ihres vorgegebenen Sollwert-Bandes hinaus die Zufuhr von Wärme bzw. Kälteleistung zum im Heizungs- bzw.

- 77 -

0192225

Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung veränderbar ist, und eine über jeweils eine Impulsleitung mit den Einrichtungen zur Messung von Vorlauf- und Rücklauftemperatur des Wärmeträgermediums und/oder mit der Einrichtung zur Ermittlung der Differenz dieser beiden Temperaturen verbundene Zeitprogrammgabeeinrichtung aufweist, die ihrerseits über Impulsleitungen mit einer Einrichtung zur automatischen Verstellung eines oder beider Sollwertgeber(s) oder jeweils einer einem jeden Sollwertgeber zugeordneten Einrichtung zur automatischen Verstellung desselben verbunden ist.

Dieser untergeordnete Erfindungsgedanke bietet aber auch eine Alternative für den Betrieb einer Heizungs- bzw. Kühlanlage mit Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, indem bei Auftreten einer Abweichung der Differenz von Vorlauf- und Rücklauftemperatur des Wärmeträgermediums über die obere Grenze ihres vorgegebenen Sollwert-Bandes hinaus die dem im Heizungs- bzw. Kühlmittelvorlauf befindlichen Wärmeträgermedium zugeführte Wärme- bzw. Kälteleistung dadurch verringert wird, daß der Sollwert der Vorlauftemperatur des Wärmeträgermediums bei Heizbetrieb verringert und bei Kühlbetrieb erhöht wird, und bei Auftreten einer Abweichung der Differenz von Vorlauf- und Rücklauftemperatur des Wärmeträgermediums unter die untere Grenze ihres vorgegebenen Sollwert-Bandes die dem im Heizungs- bzw. Kühlmittelvorlauf befindlichen Wärmeträgermedium zugeführte Wärme- bzw. Kälteleistung dadurch vergrößert wird, daß der Sollwert der Vorlauftemperatur des Wärmeträgermediums bei Heizbetrieb erhöht und bei Kühlbetrieb verringert wird. Die diesem untergeordneten Erfindungsgedanken entsprechende vorrichtungsmäßige Ausgestaltung der Erfindung wird dabei so getroffen, daß als Wärmeerzeuger ein brennstoffbefeuerter oder mit elektrischer Energie gespeister Kessel und/oder ein primärseitig mit Primärwärmeträgermedium beaufschlagter Wärmetauscher, wie beispielsweise ein Rauchgaskühler oder eine Fernwärmeübergabestation oder ein Ausgangswärmetauscher einer Wärmepumpe und/oder eine Elektrokompressionswärmepumpe und/oder eine gas- oder dieselmotorisch betriebene Wärmepumpe oder Sorptionswärmepumpe bzw. als Kälteerzeuger eine Elektrokompressionskältemaschine oder eine gas- oder dieselmotorisch betriebene Kältemaschine oder Sorptionskältemaschine und als über die Steuerleitung mit der Regeleinrichtung verbundene Einrichtung zur Beeinflussung der in den Heizungs- bzw. Kühlmittel-vorlauf eingespeisten Wärme- bzw. Kälteleistung eine Mehrwege-Mischeinrichtung, wie beispielsweise ein den jeweiligen Wärmeträgermediumsausgang des Wärme- bzw. Kälteerzeugers einerseits mit dem Heizungs- bzw. Kühlmittelvorlauf und andererseits einer vom Heizungs- bzw. Kühlmittelrücklauf kommenden Beimischleitung für Wärmeträgermedium verbindender Drei-Wege-Mischer oder ein den Wärmeträgermediumsausgang des Wärme- bzw. Kälteerzeugers und/oder den Heizungs- bzw. Kühlmittelrücklauf jeweils mit dem Heizungs- bzw. Kühlmittelvorlauf sowie den Wärmeträgermediumsausgang des Wärme- bzw. Kälteerzeugers und/oder den Heizungs- bzw. Kühlmittelrücklauf mit einer an den Wärmeträgermediumseingang des Wärme- bzw. Kälteerzeugers angeschlossenen Rückführleitung verbindender Vier-Wege-Mischer, vorgesehen ist und daß die Regeleinrichtung einen einen während der Betriebsdauer der Vorrichtung ständig vorhandenen modulierten Stellbefehl abgebenden Stellbefehlgeber aufweist, mittels dessen dem Antrieb der Mehrwege-Mischeinrichtung die Stellbefehle als betragsmäßige Modulationsunterschiede eines während der Betriebsdauer der Vorrichtung ständig anstehenden Betriebsbefehls zuführbar sind, wobei die Zufuhr von Wärme- bzw. Kälteleistung zum im Heizungs- bzw. Kühlmittelvorlauf befindlichen Wärmeträgermedium jeweils bei Ermittlung einer Abweichung der Differenz von Vorlauf- und Rücklauftemperatur des Wärmeträgermediums über die obere Grenze ihres vorgegebenen Sollwert-Bandes hinaus durch bei Heizbetrieb Verringerung und bei Kühlbetrieb Erhöhung des Sollwertes der Vorlauftemperatur des Wärmeträgermediums verringerbar und jeweils bei Ermittlung einer Abweichung der Differenz von Vorlauf- und Rücklauftemperatur des Wärmeträgermediums unter die untere Grenze ihres vorgegebenen Sollwert-Bandes durch bei Heizbetrieb Erhöhung und bei Kühlbetrieb Verringerung des Sollwertes der Vorlauftemperatur des Wärmeträgermediums vergrößerbar ist.

Bei beiden Varianten dieses Erfindungsgedankens ist es ebenso wie bei den sich mit diskontinuierlicher oder kontinuierlicher Zufuhr der Wärme- bzw. Kälteleistung zum im Heizungs- bzw. Kühlmittelvorlauf befindlichen Wärmeträgermedium über diskontinuierliche oder kontinuierliche Beeinflussung der Zufuhr von Betriebsenergie zum Wärme- bzw. Kälteerzeuger befassenden Erfindungsgedanken möglich, zur Lösung einer entsprechenden untergeordneten Aufgabe in zweckmäßiger Weise die für eine bestimmte Heizungs- bzw. Kühlanlage der hier angesprochenen Art mit von der Art diskontinuierlichen oder kontinuierlichen Betriebs des Wärme- bzw. Kälteerzeugers unabhängiger über die eingesetzte Mehrwege-Mischeinrichtung kontinuierlich geregelter Betriebsweise der Anlage aufgrund der Gesamtheit der Einflußgrößen, denen sie unterliegt, optimale Führungsgröße zu ermitteln. Hierfür sieht ein die Erfindung entsprechend weiterbildender Aspekt derselben vor, daß bei Inbetriebnahme des Verfahrens für Heizbetrieb oder für Kühlbetrieb bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen die Differenz von Vorlauf- und Rücklauftemperatur des Wärmeträgermediums als minimal mögliche Temperaturdifferenz, die auch hier als Inbetriebnahmetemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimal möglichen Temperaturdifferenz oder einem Vielfachen oder einem Bruchteil derselben und der kleinere Sollwert der Differenz von Vorlauf- und Rücklauftemperatur des Wärmeträgermediums entsprechend
einem im Vergleich zu dieser minimal möglichen Temperaturdifferenz
bzw. diesem Vielfachen bzw. Bruchteil derselben kleineren oder
höchstens gleichen Vielfachen bzw. Bruchteil dieser minimal möglichen Temperaturdifferenz gewählt wird. Auch hier empfiehlt sich
diese Verfahrensweise mit Vorzug für die als "Jungfernfahrt" zu bezeichnende erstmalige Inbetriebnahme einer mit der Erfindung ausgerüsteten Heizungs- bzw. Kühlanlage, zumal sie dann die für diese
tatsächlich mögliche minimale Differenz von Vorlauf- und Rücklauftemperatur des Wärmeträgermediums bei für maximale Zuspeisung von
Wärmeträgermedium vom Wärme- bzw. Kälteerzeuger her voller Offenstellung der Mehrwege-Mischeinrichtung und voller Öffnung aller
Drosseleinrichtungen als die einzige relevante Größe, in der alle
auf die Heizungs- bzw. Kühlanlage wirkenden Einflußgrößen enthalten
sind, erbringt, ohne daß diese im einzelnen bestimmt oder gemessen
zu werden bräuchten, wobei diese wichtige Betriebsgröße auch hier im
wesentlichen abhängig ist von der Anzahl und Art der Heizkörper bzw.
Kühleinrichtungen, von deren Verschaltung, dem Druckabfall im gesamten Heizungs- bzw. Kühlmittelkreislauf, der Umwälzpumpe nebst
deren Druck-Fördermengen-Charakteristik und der Leistung des jeweiligen Wärme- bzw. Kälteerzeugers. Auch hier bietet der all diese
Größen umfassende Meßwert der Inbetriebnahmetemperaturdifferenz als
für den Wärme- bzw. Kälteerzeuger charakteristische Größe vorteilhafte Möglichkeiten für seine Nutzung im Rahmen der Erfindung.

Gleichermaßen sieht hier eine zweckmäßige Weiterbildung dieses
untergeordneten Erfindungsgedankens vor, daß bei Heizbetrieb für
Aufheizen nach einer Abkühlung bzw. bei Kühlbetrieb für Abkühlen
nach einer Erwärmung bei dem Heizungs- bzw. Kühlmittelvorlauf vom
Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der
Mehrwege-Mischeinrichtung und voller Öffnung aller Drosseleinrichtungen die Differenz von Vorlauf- und Rücklauftemperatur des Wärmeträgermediums als minimale Temperaturdifferenz, die auch hier als Anfahrtemperaturdifferenz zu bezeichnen ist, zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimalen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimalen Temperaturdifferenz bzw. diesem Vielfachen bzw. Bruchteil derselben kleineren oder höchstens gleichen Vielfachen bzw. Bruchteil dieser minimal möglichen Temperaturdifferenz gewählt wird. Auch hierdurch wird in gleicher Weise, wie für alle anderen vorstehend beschriebenen, andere Betriebsarten einer Heizungs- bzw. Kühlanlage betreffenden Varianten der Erfindung erläutert, ein Indikator dafür erbracht, ob und gegebenenfalls welche betrieblichen oder anlagenmäßigen Defekte bei Veränderung der Differenz von Vorlauf- und Rücklauftemperatur des Wärmeträgermediums vorliegen.

Vorrichtungsseitig erreicht dies die Erfindung dadurch, daß die Regeleinrichtung eine Sollwert-Wahleinrichtung mit einer über eine Impulsleitung mit der Einrichtung zur Ermittlung der Differenz von Vorlauf- und Rücklauftemperatur und/oder über eine Impulsleitung mit der Vergleichseinrichtung zur Bestimmung der Abweichung dieser Differenz von Vorlauf- und Rücklauftemperatur über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als minimal mögliche Differenz von Vorlauf- und Rücklauftemperatur (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und/oder der im Verlauf des Heizbetriebes bei Aufheizen nach einer Abkühlung bzw. im Verlauf des Kühlbetriebes bei Abkühlen nach einer Erwärmung bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als minimale Differenz von Vorlauf- und Rücklauftemperatur (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, auftretenden Differenz von Vorlauf- und Rücklauftemperatur und je einer über eine Impulsleitung mit dieser verbundenen einstellbaren Verhältnisgabeeinrichtung als Sollwert-Bildungseinrichtung für die obere bzw. die untere Grenze des Sollwert-Bandes der Differenz von Vorlauf- und Rücklauftemperatur sowie eine oder jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Differenz von Vorlauf- und Rücklauftemperatur auf einen sowohl bei Heizbetrieb als auch bei Kühlbetrieb der minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) oder einem Vielfachen oder einem Bruchteil derselben und der zugeordneten unteren Grenze des Sollwert-Bandes der Differenz von Vorlauf- und Rücklauftemperatur auf einen sowohl bei Heizbetrieb als auch bei Kühlbetrieb einem im Vergleich zu dieser minimal möglichen Differenz von Vorlauf- und Rücklauftemperatur (Inbetrienahmetemperaturdifferenz) bzw. dieser minimalen Differenz von Vorlauf- und Rücklauftemperatur (Anfahrtemperaturdifferenz) bzw. diesem Vielfachen bzw. Bruchteil derselben kleineren oder höchstens gleichen Vielfachen bzw. Bruchteil dieser minimal möglichen Differenz von Vorlauf- und Rücklauftemperatur (Inbetriebnahmetemperaturdifferenz) bzw. dieser minimalen Differenz von Vorlauf- und Rücklauftemperatur (Anfahrtemperaturdifferenz) entsprechenden Wert aufweist. Es ist evident, daß erstmalig für eine Regelung einer Heizungs- bzw. Kühlanlage mit von der Art kontinuierlichen oder diskontinuierlichen, vorzugsweise aber diskontinuierlichen Betriebes des Wärme- bzw. Kälteerzeugers über kontinuierliche Regelverstellung einer Mehrwege-Mischeinrichtung zur kontinuierlichen Zufuhr von Wärme- bzw. Kälteleistung zum im Heizungs- bzw. Kühlmittelvorlauf befindlichen Wärmeträgermedium unabhängigem kontinuierlichem Betrieb einer solchen Anlage nicht nur die Bestimmungsfunktion der ursprünglichen Inbetriebnahmetemperaturdifferenz für die Festlegung der Führungsgröße der Regelung in Form des erfindungsgemäßen Sollwert-Bandes nutzbar gemacht werden, sondern diese Bestimmungsfunktion auch mit allen bereits für alle sich mit anderen Betriebsarten von Heizungs- bzw. Kühlanlagen mit diskontinuierlichem oder kontinuierlichem Betrieb ihres Wärme- bzw. Kälteerzeugers über diskontinuierliche oder kontinuierliche Zufuhr der Betriebsenergie für diesen erläuterten Vorteilen von der Anfahrtemperaturdifferenz übernommen werden kann.

Die sich mit dem Betrieb von mit einer Mehrwege-Mischeinrichtung arbeitenden Heizungs- bzw. Kühlanlagen befassende Variante der Erfindung bietet gemäß einem diese zweckmäßig weiterbildenden untergeordneten Erfindunsgedanken in gleicher Weise wie die entsprechende Weiterbildung der sich mit dem Betrieb von mit der Erfindung ausgestatteten Heizungs- bzw. Kühlanlagen mit kontinuierlich arbeitendem Wärme- bzw. Kälteerzeuger befassende Variante auch noch eine andere vorteilhafte Möglichkeit, die erfindungsgemäß durch die Bandbreite des Sollwert-Bandes der Differenz von Vorlauf- und Rücklauftemperatur des Wärmeträgermediums bestimmte Führungsgröße für die erfindungsgemäße Regelung so zu bestimmen, daß der Vorgabewert für diese Führungsgröße besonders schnell und auch hier bereits kurz nach dem Anfahren mit besonders großer Genauigkeit zur Verfügung steht. Es kann nämlich gemäß diesem hierfür vorgesehenen untergeordneten Erfindungsgedanken mit Vorteil bei Inbetriebnahme des Verfahrens für Heizbetrieb oder für Kühlbetrieb die zeitliche Änderung der Vorlauf- und/oder der Rücklauftemperatur und/oder der Differenz von Vorlauf- und Rücklauftemperatur des Wärmeträgermediums bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als der minimal möglichen Temperaturdifferenz (Inbetriebnahmetemperaturdifferenz) oder bei Heizbetrieb für Aufheizen nach einer Abkühlung bzw. bei Kühlbetrieb für Abkühlen nach einer Erwärmung die zeitliche Änderung der Vorlauf- und/oder der Rücklauftemperatur und/oder der Differenz von Vorlauf- und Rücklauftemperatur des Wärmeträgermediums bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als minimale Temperaturdifferenz (Anfahrtemperaturdifferenz) ermittelt und der größere und der kleinere Sollwert der Differenz von Vorlauf- und Rücklauftemperatur des Wärmeträgermediums entsprechend dem Maß dieser zeitlichen Änderung der Vorlauf- und/oder der Rücklauftemperatur und/oder der Differenz von Vorlauf- und Rücklauftemperatur des Wärmeträgermediums verändert werden, indem bei größerer zeitlicher Änderung der Vorlauf- und/oder der Rücklauftemperatur und/oder dieser Temperaturdifferenz beide Sollwerte um einen größeren Betrag und bei kleinerer zeitlicher Änderung der Vorlauf- und/oder der Rücklauftemperatur und/oder dieser Temperaturdifferenz beide Sollwerte um einen geringeren Betrag gegenüber der minimal möglichen bzw. minimalen Temperaturdifferenz verringert werden. Dem wird vorrichtungsmäßig die Erfindung dadurch gerecht, daß die Regeleinrichtung eine Sollwert-Wahleinrichtung mit einer über eine Impulsleitung mit der Einrichtung zur Ermittlung der Differenz von Vorlauf- und Rücklauftemperatur und/oder über eine Impulsleitung mit der Vergleichseinrichtung zur Bestimmung der Abweichung dieser Differenz von Vorlauf- und Rücklauftemperatur über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassentrom bestimmenden Organs der Mehrwege-Mischeinrichtung und voller Öffnung aller Drosseleinrichtungen als minimal mögliche Differenz von Vorlauf- und Rücklauftemperatur (Inbetriebnahmetemperaturdifferenz) auftretenden Differenz von Vorlauf- und Rücklauftemperatur und/oder der im Verlauf des Heizbetriebes bei Aufheizen nach einer Abkühlung bzw. im Verlauf des Kühlbetriebes bei Abkühlen nach einer Erwärmung bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als minimale Differenz von Vorlauf- und Rücklauftemperatur (Anfahrtemperaturdifferenz) auftretenden Differenz von Vorlauf- und Rücklauftemperatur und einer für die obere und/oder die untere Grenze des Sollwert-Bandes der Differenz von Vorlauf- und Rücklauftemperatur je einer Einrichtung zur Vorgabe von Zeitspannen und ferner eine über Impulsleitungen einerseits mit dieser Einrichtung zur Vorgabe von Zeitspannen und andererseits mit der Einrichtung zur Ermittlung der Differenz von Vorlauf- und Rücklauftemperatur und/oder mit der Detektoreinrichtung verbundene Dividiereinrichtung zur Ermittlung des zeitlichen Gradienten der minimal möglichen Differenz von Vorlauf- und Rücklauftemperatur (Inbetriebnahmetemperaturdifferenz) bzw. der minimalen Differenz von Vorlauf- und Rücklauftemperatur (Anfahrtemperatur-

- 8t -

0192225

differenz) oder eine Sollwert-Wahleinrichtung mit einer über jeweils eine Meßwertleitung mit der Einrichtung zur Messung der Vorlauftemperatur und/oder mit der Einrichtung zur Messung der Rücklauftemperatur verbundenen Einrichtung zur Vorgabe von Zeitspannen und ferner eine über Impulsleitungen einerseits mit dieser Einrichtung zur Vorgabe von Zeitspannen und andererseits mit der Einrichtung zur Messung der Vorlauftemperatur und/oder mit der Einrichtung zur Messung der Rücklauftemperatur verbundene Dividiereinrichtung zur Ermittlung des zeitlichen Gradienten der Vorlauf- und/oder der Rücklauftemperatur sowie jeweils dabei eine oder jeweils eine über Impulsleitungen einerseits mit der bzw. den Dividiereinrichtung(en) und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eingestellter Werte der oberen und der unteren Grenze des Sollwert-Bandes der Differenz von Vorlauf- und Rücklauftemperatur auf sowohl bei Heizbetrieb als auch bei Kühlbetrieb einen für einen größeren ermittelten zeitlichen Gradienten der Vorlauf- und/oder der Rücklauftemperatur und/oder der Differenz derselben der um einen größeren Betrag und für einen kleineren ermittelten zeitlichen Gradienten der Vorlauf- und/oder der Rücklauftemperatur und/oder der Differenz derselben der um einen geringeren Betrag verringerten minimal möglichen Differenz von Vorlauf- und Rücklauftemperatur (Inbetriebnahmetemperaturdifferenz) bzw. minimalen Differenz von Vorlauf- und Rücklauftemperatur (Anfahrtemperaturdifferenz) entsprechenden Wert aufweist. In bezug auf die Flinkheit und Genauigkeit der Detektion des optimalen Wertes für die Führungsgröße aus dem zeitlichen Gradienten von Vorlauf- und/oder Rücklauftemperatur und/oder Differenz dieser Temperaturen des Wärmeträgermediums sind hier die gleichen Vorteile gegeben wie bei der mit kontinuierlicher Beeinflussung der Zufuhr von Betriebsenergie zum Wärme- bzw. Kälteerzeuger zwecks kontinuierlicher Änderung der Zufuhr von Wärme- bzw. Kälteleistung zum im Heizungs- bzw. Kühlmittelvorlauf befindlichen Wärmeträgermedium arbeitenden Ausführungsvariante der Erfindung. Gleichermaßen hat die letztbeschriebene Ausführung auch im Vergleich zur Erst-Inbetriebnahme der Anlage wesentlichere Bedeutung für das Hochfahren derselben aus deren Nachtbetrieb in deren Arbeitsbetrieb, da dieser sogenannte "Anfahrvorgang" sich praktisch von Tag zu Tag wiederholt und bei schneller Überprüfung und/oder gegebenenfalls Nachkorrektur der Führungsgröße zu besonderen Energieeinsparungen zu führen vermag.

Auch bei dieser Art von über kontinuierlichen Betrieb einer Mehrwege-Mischeinrichtung einer von der Wärme- bzw. Kälteerzeugerseite her sogar diskontinuierlich gefahrenen Heizungs- bzw. Kühlanlage hat sich eine Fortbildung gemäß einem anderen untergeordneten Erfindungsgedanken besonders bewährt, gemäß welchem nach einer Veränderung einer der Grenzen des Sollwert-Bandes der Differenz von Vorlauf- und Rücklauftemperatur bzw. des Sollwertes der Vorlauftemperatur des Wärmeträgermediums die sich unmittelbar danach oder nach einer vorgegebenen Zeitspanne einstellende Differenz von Vorlauf- und Rücklauftemperatur des Wärmeträgermediums (Betriebstemperaturdifferenz) als der für diese Veränderung bestimmenden Grenze des vorgegebenen Sollwert-Bandes der Differenz von Vorlauf- und Rücklauftemperatur des Wärmeträgermediums entsprechende neue Grenze dieses Sollwert-Bandes gewählt wird. Hierdurch ergibt sich auch hier eine Art Selbstlernvorgang für die Führungsgröße des Regelungsverfahrens nach der Erfindung. In Fällen, in denen diese nämlich aus irgendwelchen Gründen nicht spezifisch auf die äußeren und insbesondere inneren anlagenspezifischen und/oder auf Grund von Klimazone und/oder Lage und/oder Wärmedämmung oder dergleichen verbrauchereigenen und/oder die nutzerbezogenen Eigenschaften der jeweiligen Heizungs- bzw. Kühlanlage von vornherein abgestimmt sein kann, wird ebenso wie bei mit kontinuierlicher Zufuhr der Betriebsenergie zum Wärme- bzw. Kälteerzeuger und mit den gleichen im Zusammenhang mit einer solchen Anlage beschriebenen Vorteilen eine Automatik realisierbar, die unabhängig von jedweder Voreinstellung und/oder Justierung durch den Heizungsbauer über eine einfache, schnelle und bequeme Verstellung einer einen schnellen Zugriff ermöglichenden Betriebsgröße in Form geeigneter Veränderung des Verhältnisses von über den wärme- bzw. kälteerzeugerseitigen Zulaufzweig der Mehrwege-Mischeinrichtung zugespeistem Massenstrom zum Gesamtmassenstrom des Wärmeträgermediums bzw. eine geeignete Veränderung der Stellung des dieses Massenstrom-Verhältnis bestimmenden Organs derselben die optimale Führungsgröße generiert. Hierfür wird vorrichtungsseitig vorgesehen, daß die Regeleinrichtung eine über Impulsleitungen mit den Messeinrichtungen für die Vorlauf- und die Rücklauftemperatur des Wärmeträgermediums und/oder mit der Einrichtung zur Ermittlung der Differenz zeitgleicher Meßwerte dieser beiden Temperaturen verbundene Zeitprogrammgabeeinrichtung zur Einleitung zeitgleicher Messungen von Vorlauf- und Rücklauftemperatur oder zur Aufnahme und/oder Abgabe eines Meßwertes oder einer Mehrzahl von von den Meßeinrichtungen für Vorlauf- und Rücklauftemperatur des Wärmeträgermediums gelieferten zeitgleichen Meßwerten dieser beiden Temperaturen während einer vorgegebenen Zeitspanne durch die Einrichtung zur Ermittlung der Differenz zeitgleicher Meßwerte dieser beiden Temperaturen und eine oder jeweils eine über Impulsleitungen einerseits mit dieser Einrichtung zur Ermittlung der Differenz zeitgleicher Meßwerte dieser beiden Temperaturen und mit der Zeitprogrammgabeeinrichtung und andererseits mit dem zugeordneten Sollwertgeber bzw. den Sollwertgebern verbundene Einrichtung zur automatischen Verstellung desselben bzw. derselben im Sinne einer Nachführung der die der sich unmittelbar oder nach einer vorgegebenen Zeitspanne nach einer Veränderung einer der Grenzen des Sollwert-Bandes der Differenz von Vorlauf- und Rücklauftemperatur bzw. des Sollwertes der Vorlauftemperatur des Wärmeträgermediums einstellenden Differenz von Vorlauf- und Rücklauftemperatur des Wärme-trägermediums, der Betriebstemperaturdifferenz, entsprechende Ver-änderung dieser Temperaturdifferenz bestimmenden Grenze des Soll-wert-Bandes der Differenz von Vorlauf- und Rücklauftemperatur auf einen neuen Grenzwert aufweist.

Für die verfahrensmäßige Durchführung dieses untergeordneten Erfindungsgedankens hat es sich auch bei dieser Einsatzart der Erfindung für Heizungs- bzw. Kühlanlagen mit Mehrwege-Mischeinrichtung als besonders zweckmäßig erwiesen, wenn nach einer Veränderung einer der Grenzen des Sollwert-Bandes der Differenz von Vorlauf- und Rücklauftemperatur bzw. des Sollwertes der Vorlauftemperatur des Wärmeträgermediums die der sich unmittelbar danach oder nach einer vorgegebenen Zeitspanne als der für diese Veränderung bestimmenden Grenze des vorgegebenen Sollwert-Bandes der Differenz von Vorlauf- und Rücklauftemperatur des Wärmeträgermediums einstellenden Temperaturdifferenz (Betriebstemperaturdifferenz) nicht entsprechende Grenze dieses Sollwert-Bandes im gleichen Sinne wie die für die Veränderung einer der Grenzen des Sollwert-Bandes der Differenz von Vorlauf- und Rücklauftemperatur bzw. des Sollwertes der Vorlauftemperatur des Wärmeträgermediums und vorzugsweise proportional der Veränderung der- bzw. desselben verändert wird. Vorrichtungsmäßig kann dann zweckmäßig hierfür erfindungsgemäß vorgesehen sein, daß die Regeleinrichtung eine oder jeweils eine über Impulsleitungen einerseits mit der Einrichtung zur Ermittlung der Differenz zeitgleicher Meßwerte von Vorlauf- und Rücklauftemperatur und mit der Zeitprogrammgabeeinrichtung und andererseits mit dem zugeordneten Sollwertgeber bzw. den Sollwertgebern verbundene Einrichtung zur automatischen Verstellung desselben bzw. derselben im Sinne einer Nachführung der die der sich unmittelbar oder nach einer vorgegebenen Zeitspanne nach einer Veränderung einer der Grenzen des Sollwert-Bandes der Differenz von Vorlauf- und Rücklauftemperatur bzw. des Sollwertes der Vorlauftemperatur des Wärmeträgermediums einstellenden Differenz von Vorlauf- und Rücklauftemperatur des Wärmeträgermediums entsprechende Veränderung dieser Temperaturdifferenz bzw. dieses Sollwertes der Vorlauftemperatur des Wärmeträgermediums nicht bestimmenden Grenze des Sollwert-Bandes der Differenz von Vorlauf- und Rücklauftemperatur in der gleichen Richtung wie die Nachführung der die der sich unmittelbar oder nach einer vorgegebenen Zeitspanne nach einer Veränderung einer der Grenzen des Sollwert-Bandes der Differenz von Vorlauf- und Rücklauftemperatur bzw. des Sollwertes der Vorlauftemperatur des Wärmeträgermediums einstellenden Differenz von Vorlauf- und Rücklauftemperatur des Wärmeträgermediums (Betriebstemperaturdifferenz) entsprechende Veränderung dieser Temperaturdifferenz bestimmenden Grenze des Sollwert-Bandes der Differenz von Vorlauf- und Rücklauftemperatur und vorzugsweise auch um ein zu dem Maß der Nachführung derselben proportionales Maß aufweist.

Es ist ersichtlich, daß auch bei einer mit einer Mehrwege-Mischeinrichtung arbeitenden Ausführungsform der Erfindung hierdurch die Möglichkeit gegeben wird, dann, wenn das die Führungsgröße der für die Regelung nach der Erfindung bestimmende Sollwert-Band für die Differenz von Vorlauf- und Rücklauftemperatur des Wärmeträgermediums ungünstig gewählt sein sollte, wobei der Begriff "ungünstig" auch hier durchaus auch so zu verstehen ist, daß er bedeutet, daß die Führungsgröße nicht genau auf die spezifischen Eigenheiten der Kombination der jeweils vorhandenen Heizungs- bzw. Kühlanlage und der zugehörigen Wärme- bzw. Kälteverbraucher abgestimmt ist, die eine oder beide der dieses Sollwert-Band bestimmende(n) Grenze(n) so zu verändern, daß stets Abweichungen der Differenz von Vorlauf- und Rücklauftemperatur des Wärmeträgermediums über die obere und/oder unter die untere Grenze dieses Sollwert-Bandes derselben auftreten, diese aber gemäß diesem untergeordneten Erfindungsgedanken im Interesse der Vermeidung unnötiger Überschwingungen mit entsprechenden Einschwingzeiten nicht übergroß sind. Auch hier bedeutet das, daß beispielsweise bei einem für spezifische Betriebsverhältnisse zu weit gewählten Sollwert-Band der Differenz von Vorlauf- und Rücklauftemperatur des Wärmeträgermediums dieses durch Veränderung der einen oder beider seiner Grenzen so verengt werden kann bzw. sollte, daß Überschreitungen zumindest einer dieser Grenzen im Betrieb gewährleistet sind, die dann zu Regeleingriffen geeigneter Art und Größe führen, oder umgekehrt.

Auch für solche Heizungs- bzw. Kühlanlagen, bei denen der kontinuierliche Betrieb sogar trotz eines in diskontinuierlichem Betrieb arbeitenden Wärme- bzw. Kälteerzeugers über eine Mehrwege-Mischeinrichtung erzwungen wird, ist dem Nutzer einer mit dieser Variante der Erfindung ausgestatteten Heizungs- bzw. Kühlanlage durch einen weiterführenden Erfindungsgedanken erstmalig die Möglichkeit gegeben, mit ein und derselben Regelungsvorrichtung nach der Erfindung nach seiner eigenen Wahl und Bestimmung unterschiedliche Betriebsarten zu ihm genehmen Zeiten einstellen zu können. Hierfür nämlich kann für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der sich unmittelbar nach einer Veränderung einer der Grenzen des Sollwert-Bandes der Differenz von Vorlauf- und Rücklauftemperatur bzw. des Sollwertes der Vorlauftemperatur des Wärmeträgermediums oder nach einer vorgegebenen Zeitspanne nach dieser einstellenden Temperaturdifferenz von Vorlauf- und Rücklauftemperatur des Wärmeträgermediums, die auch hier als Betriebstemperaturdifferenz zu bezeichnen ist, vorzugsweise zwischen etwa dem 1,5- bis 2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem großen Vielfachen und der um ein durch den Reziprokwert des Multiplikators desselben gebildetes Vielfaches der Betriebstemperaturdifferenz verminderten Betriebstemperaturdifferenz, und/oder für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der sich unmittelbar nach einer Veränderung einer der Grenzen des Sollwert-Bandes der Differenz von Vorlauf- und Rücklauftemperatur bzw. des Sollwertes der Vorlauftemperatur des Wärmeträgermediums oder nach einer vorgegebenen Zeitspanne nach dieser einstellenden Temperaturdifferenz von Vorlauf- und Rücklauftemperatur des Wärmeträgermediums, die auch hier als Betriebstemperaturdifferenz zu bezeichnen ist, vorzugsweise zwischen etwa dem 1,2- bis 1,5-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem mittleren Vielfachen und der um ein durch den Reziprokwert des Multiplikators desselben gebildetes Vielfaches der Betriebstemperaturdifferenz zu bezeichnen ist, verminderten Betriebstemperaturdifferenz, und/oder für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem kleinen Vielfachen der sich unmittelbar nach einer Veränderung einer der Grenzen des Sollwert-Bandes der Differenz von Vorlauf- und Rücklauftemperatur bzw. des Sollwertes der Vorlauftemperatur des Wärmeträgermediums oder nach einer vorgegebenen Zeitspanne nach dieser einstellenden Temperaturdifferenz von Vorlauf- und Rücklauftemperatur des Wärmeträgermedius, die auch hier als Betriebstemperaturdifferenz zu bezeichnen ist, vorzugsweise zwischen etwa dem 1- bis 1,2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem kleineren Vielfachen und der um ein durch den Reziprokwert des Multiplikators desselben gebildetes Vielfaches der Betriebstemperaturdifferenz verminderten Betriebstemperaturdifferenz, und/oder speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend einem Bruchteil der minimal möglichen oder minimalen Differenz von Vorlauf- und Rücklauftemperatur des Wärmeträgermediums und der kleinere Sollwert dieser Temperaturdifferenz entsprechend einem im Vergleich zu diesem den größeren Sollwert dieser Temperaturdifferenz bestimmenden Bruchteil geringeren oder höchstens gleichen Bruchteil der minimal möglichen oder minimalen Differenz von Vorlauf- und Rücklauftemperatur des Wärmeträgermediums gewählt werden.

Dabei ist es auch für diese Variante der Erfindung möglich, die Bandbreite des Sollwert-Bandes der Differenz von Vorlauf- und Rücklauftemperatur des Wärmeträgermediums mit ihrem Verschwindwert vorzugeben, d. h. die untere Grenze des vorgegebenen Sollwert-Bandes der Differenz von Vorlauf- und Rücklauftemperatur des Wärmeträgermediums entsprechend der oberen Grenze desselben oder umgekehrt die obere Grenze entsprechend der Untergrenze zu wählen. Hierbei handelt es sich um eine spezifische Betriebsart der Erfindung mit auf ihrem Verschwindwert gehaltener Bandbreite der Führungsgröße, die praktisch dort einzusetzen sein wird, wo im Bereich extrem geringer Differenz von Vorlauf- und Rücklauftemperatur des Wärmeträgermediums mit nur ganz seltenen Schalteingriffen zu rechnen ist, was einem Frostschutzbetrieb unter Bedingungen entsprechen würde, die keine oder allenfalls höchst seltene Gefahrentemperaturen erwarten lassen, die für das das Wärmeträgermedium führende Leitungssystem, die Heizkörper und die Umwälzpumpe etc. schädlich sein könnten. Schwierigkeiten bezüglich der Regelungsstabilität sind auch bei dieser bevorzugten Ausführungsform der Erfindung, die mit kontinuierlicher Zuführung der Wärme- bzw. Kälteleistung zum im Heizungs- bzw. Kühlmittelvorlauf befindlichen Wärmeträgermedium über eine Mehrwege-Mischeinrichtung arbeitet, auch bei einem solchen Betriebsfall nicht zu erwarten.

Auch für diese in der beschriebenen Weise mit einer Mehrwege-Mischeinrichtung arbeitende Variante der Erfindung kann vorrichtungstechnisch zweckmäßig die Regeleinrichtung eine Speichereinrichtung, in der mindestens zwei, vorzugsweise mehr, bevorzugte Paarungen von Ober- und Untergrenzen des Sollwert-Bandes der Differenz von Vorlauf- und Rücklauftemperatur, wie beispielsweise für Komfort- , Normal- , Spar- , Nachtabsenkungs- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwert-Bildungseinrichtungen für die obere bzw. untere Grenze des Sollwert-Bandes der Differenz von Vorlauf- und Rücklauftemperatur oder mit der oder zumindest einer der etwa vorhandenen Programmspeichereinrichtung(en) für die Beeinflussung des Sollwert-Bandes der Differenz von Vorlauf- und Rücklauftemperatur oder mit zumindest einer etwa vorhandenen Verstelleinrichtung für diese oder mit zumindest einem Sollwertgeber verbunden ist. Auch hier können dabei zweckmäßig in der Speichereinrichtung die bevorzugten Paarungen von Ober- und Untergrenzen des Sollwert-Bandes der Differenz von Vorlauf- und Rücklauftemperatur mit in Richtung zunehmender Werte dieser Temperaturdifferenz vorzugsweise proportional größer werdendem Unterschied und/oder Verhältnis von jeweiliger oberer und unterer Grenze der Differenz von Vorlauf- und Rücklauftemperatur des Wärmeträgermediums gespeichert sein. Es ergeben sich die gleichen Vorteile insbesondere hinsichtlich der Optimierung des Energiewirtschaftwirkungsgrades in Verbindung mit der Anpassung an spezifische Bedürfnisse des Nutzers der Heizungs- bzw. Kühlanlage gegebenenfalls unter besonderer Berücksichtigung der speziellen Forderungen öffentlicher Energieversorgungsunternehmen, wie diese vorstehend bereits im Zusammenhang mit der Darstellung der anderen Varianten der Erfindung erläutert sind. Je nach Auslegung der Vorrichtung nach der Erfindung insbesondere im Hinblick auf deren Regeleinrichtung und/oder je nach Bedürfnis des Nutzers derselben ist auch hier schrittweise oder kontinuierliche Umschaltung von einer Betriebsart auf eine andere möglich.

Allen beschriebenen Varianten der Erfindung ist somit unabhängig davon, ob sie Heizungs- bzw. Kühlanlagen mit Veränderung der dem Heizungs- bzw. Kühlmittelvorlauf zugeführten Wärme- bzw. Kälteleistung über diskontinuierliche oder kontinuierliche Beeinflussung der Zufuhr von Betriebsenergie zu ihrem Wärme- bzw. Kälteerzeuger oder über kontinuierliche Betätigung einer Mehrwege-Mischeinrichtung betreffen, gemeinsam, daß durch die Erfindung einerseits die Möglichkeit einer optimierenden Selbstnachführung der Regelungsgrößen geboten wird, andererseits aber auch eine für eine bestimmte Heizungs- bzw. Kühlanlage aufgrund der Gesamtheit der Einflußgrößen, denen sie unterliegt, optimale Führungsgröße für die Regelung derselben ermittelt wird. Diese wird dabei mit Vorzug bei der als "Jungfernfahrt" zu bezeichnenden erstmaligen Inbetriebnahme einer mit der Erfindung ausgerüsteten Heizungs- bzw. Kühlanlage bei voller Öffnung aller Drosseleinrichtungen derselben ermittelt und erbringt dann die tatsächlich minimal mögliche Differenz von Vorlauf- und Rücklauftemperatur des Wärmeträgermediums als die einzige relevante Größe, in der alle auf die Heizungs- bzw. Kühlanlage wirkenden Einflußgrößen enthalten sind, ohne daß diese im einzelnen bestimmt oder gemessen zu werden bräuchten, die aber im wesentlichen abhängig ist von der Anzahl und der Art der Heizkörper bzw. Kühleinrichtungen, von deren Verschaltung, dem Druckabfall im gesamten Heizungs- bzw. Kühlmittelkreislauf, der Umwälzpumpe nebst deren Druck-Fördermengen-Charakteristik und der Leistung des jeweiligen Wärme- bzw. Kälteerzeugers. Dabei gehen alle diese Größen automatisch in den Meßwert der Inbetriebnahmetemperaturdifferenz ein, und zwar unabhängig von der Art der jeweiligen Heizungs- bzw. Kühlanlage, so daß dieser Meßwert als für den Wärme- bzw. Kälteverbraucher charakteristische Größe sich mit Vorteil für die Zwecke der Erfindung nutzen läßt.

Weiterhin ist allen beschriebenen Varianten der Erfindung gemeinsam, daß sie Indikatoren dafür bieten, daß eine Leckage im Wärmeträgermedium führenden Leitungssystem einschließlich der Umwälzpumpe vorliegt oder daß entweder eine oder mehrere der automatisch wirkenden Drosseleinrichtung(en) defekt ist bzw. sind, indem diese sich aus der Drosselung nicht mehr herausbewegt bzw. -bewegen und somit die minimal mögliche Temperaturdifferenz von Vorlauf- und Rücklauftemperatur des Wärmeträgermediums (Inbetriebnahmetemperaturdifferenz) nicht mehr erreicht wird, oder daß die Umwälzpumpe z. B. über ein bestimmtes Lagerspiel oder einen Defekt ihres Antriebes nicht mehr ihre Nennleistung oder Soll-Leistung bringt oder aber diese Umwälzpumpe oder das das Wärmeträgermedium führende Leitungsnetz verkalkt ist. Dabei wird in allen Fällen gleichermaßen erstmalig die Möglichkeit für eine bequeme und kostengünstige Selektierung der einzelnen Fehlerquellen eröffnet.

Hervorzuheben ist in diesem Zusammenhang, daß man dann, wenn man nach den vorstehend erläuterten Kriterien festgestellt hat, daß es sich im Zuge einer ermittelten Erhöhung der Differenz von Vorlauf- und Rücklauftemperatur von ihrem ursprünglichen Inbetriebnahmewert auf einen höheren Wert in Form der sogenannten Anfahrtemperaturdifferenz nur um eine Verkalkung der Anlage handelt, diese durchaus in bisheriger Weise weiterfahren kann, wobei die festgestellte höhere Anfahrtemperaturdifferenz die Bestimmungsfunktion der ursprünglichen Inbetriebnahmetemperaturdifferenz für die Festlegung der Führungsgröße der Regelung in Form des erfindungsgemäßen Sollwert-Bandes übernehmen kann, was den Vorteil erbringt, daß in einem solchen Fall auf einen Service-Techniker verzichtet werden kann.

Hierfür kann gemäß einem weiteren für alle beschriebenen Varianten der Erfindung geltenden untergeordneten Erfindungsgedanken bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) und bei Heizbetrieb für Aufheizen nach einer Abkühlung bzw. bei Kühlbetrieb für Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimal mögliche oder minimale Temperaturdifferenz (Anfahrtemperaturdifferenz) ermittelt und bei Auftreten einer Abweichung der minimalen Temperaturdifferenz (Anfahrtemperaturdifferenz) von der minimal möglichen Temperaturdifferenz (Inbetriebnahmetemperaturdifferenz) das vorgegebene Sollwert-Band der Differenz von Vorlauf- und Rücklauftemperatur des Wärmeträgermediums in Abhängigkeit vom Verhältnis von minimaler zu minimal möglicher Differenz von Vorlauf- und Rücklauftemperatur des Wärmeträgermediums verändert werden. Entsprechend kann zweckmäßig die Regeleinrichtung eine Sollwert-Wahleinrichtung mit einer oder je einer vorzugsweise jeweils über eine Messwertleitung mit den Messeinrichtungen für die Vorlauf- und die Rücklauftemperatur des Wärmeträgermediums oder über jeweils eine Impulsleitung mit der Einrichtung zur Ermittlung der Differenz zeitgleicher Meßwerte von Vorlauf- und Rücklauftemperatur verbundenen Detektoreinrichtung zur Ermittlung der Differenz von Vorlauf- und Rücklauftemperatur bei Auftreten der ersten Veränderung derselben im Verlauf der Inbetriebnahme der Vorrichtung für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und jeweils voller Öffnung aller Drosseleinrichtungen als minimal möglicher Differenz von Vorlauf- und Rücklauftemperatur des Wärmeträgermediums (Inbetriebnahmetemperaturdifferenz) und im Verlauf des Heizbetriebes bei Aufheizen nach einer Abkühlung bzw. im Verlauf des Kühlbetriebes bei Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und jeweils voller Öffnung aller Drossel-

einrichtungen als minimale Differenz von Vorlauf- und Rücklauftemperatur des Wärmeträgermediums (Anfahrtemperaturdifferenz) und eine Meßwertspeichereinrichtung für die minimal mögliche Differenz von Vorlauf- und Rücklauftemperatur (Inbetriebnahmetemperaturdifferenz) sowie eine einerseits über eine Impulsleitung mit dieser und andererseits über jeweils eine Meßwertleitung mit den Meßeinrichtungen für die Vorlauf- und die Rücklauftemperatur des Wärmeträgermediums oder über eine Impulsleitung mit der Einrichtung zur Ermittlung der Differenz zeitgleicher Meßwerte von Vorlauf- und Rücklauftemperatur oder über eine Impulsleitung mit der Detektoreinrichtung verbundene Vergleichseinrichtung zur Ermittlung von Abweichungen der minimalen Differenz von Vorlauf- und Rücklauftemperatur (Anfahrtemperaturdifferenz) von der minimal möglichen Differenz von Vorlauf- und Rücklauftemperatur (Inbetriebnahmetemperaturdifferenz) und eine über eine Impulsleitung mit dieser verbundene Verhältnisbildungseinrichtung aufweisen, die über jeweils eine Impulsleitung mit zumindest einer der Sollwert-Bildungseinrichtungen für die obere bzw. untere Grenze des Sollwert-Bandes der Differenz von Vorlauf- und Rücklauftemperatur oder mit der oder zumindest einer der Programmspeichereinrichtung(en) für die Beeinflussung des Sollwert-Bandes der Differenz von Vorlauf- und Rücklauftemperatur oder mit zumindest einer Verstelleinrichtung für diese oder mit zumindest einem Sollwertgeber verbunden und mittels derer die betreffende Sollwert-Bildungseinrichtung bzw. Programmspeichereinrichtung bzw. Verstelleinrichtung bzw. der betreffende Sollwertgeber im Sinne einer Änderung des vorgegebenen Sollwert-Bandes der Differenz von Vorlauf- und Rücklauftemperatur des Wärmeträgermediums in Abhängigkeit vom Verhältnis von minimaler Differenz von Vorlauf- und Rücklauftemperatur (Anfahrtemperaturdifferenz) zu minimal möglicher Differenz von Vorlauf- und Rücklauftemperatur (Inbetriebnahmetemperaturdifferenz) verstellbar ist. Ersichtlich wird hierdurch ermöglicht, daß eine in erfindungsgemäßer Weise ausgestattete Heizungs- bzw. Kühlanlage auch dann noch mit gleich guter Funktion weiterbetrieben werden kann, wenn sie in der beschriebenen Weise bezüglich ihrer Differenz von Vorlauf- und Rücklauftemperatur des Wärmeträgermediums eine Drift zu bezüglich ihrer ursprünglichen Inbetriebnahmetemperaturdifferenz höheren oder geringeren Werten aufweist. Hierbei ist hervorzuheben, daß zwar die Weiterbetreibung der Anlage bei Drift der Differenz von Vorlauf- und Rücklauftemperatur zu bezüglich der Inbetriebnahmetemperaturdifferenz geringeren Werten durchaus möglich ist, daß sich ein solcher Betrieb aber allenfalls unter extremen Voraussetzungen empfehlen kann, da er immer bedeutet, daß ein wie auch immer gearteter Defekt im Bereich des Wärme- bzw. Kälteerzeugers vorliegt, wie vorstehend ausführlich erläutert, der daher einer unverzüglichen Inspektion unterworfen werden sollte. Diese Art von Betrieb wird sich daher überwiegend als Notbetrieb rechtfertigen.

Im übrigen kann eine solche Drift zweckmäßig auch noch anderweitig ausgenützt werden, indem in weiterer Fortbildung der Erfindung gemäß einem anderen untergeordneten Gedanken derselben bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) und bei Heizbetrieb für Aufheizen nach einer Abkühlung bzw. bei Kühlbetrieb für Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimale Temperaturdifferenz (Anfahrtemperaturdifferenz) ermittelt und bei Auftreten einer vorbestimmten Abweichung der minimalen Temperaturdifferenz (Anfahrtemperaturdifferenz) von der minimal möglichen Temperaturdifferenz (Inbetriebnahmetemperaturdiffe-

0192225

renz) diese Unregelmäßigkeit optisch und/oder akustisch wahrnehmbar gemacht wird. Hierfür kann zweckmäßig mindestens eine Meldeeinrichtung zur Abgabe einer optisch und/oder akustisch wahrnehmbaren Information vorgesehen sein, wobei die Regeleinrichtung eine Sollwert-Wahleinrichtung mit einer oder je einer vorzugsweise jeweils über eine Meßwertleitung mit den Meßeinrichtungen für die Vorlauf- und die Rücklauftemperatur des Wärmeträgermediums oder über jeweils eine Impulsleitung mit der Einrichtung zur Ermittlung der Differenz zeitgleicher Meßwerte von Vorlauf- und Rücklauftemperatur verbundenen Detektoreinrichtung zur Ermittlung der Differenz von Vorlauf- und Rücklauftemperatur bei Auftreten der ersten Veränderung derselben im Verlauf der Inbetriebnahme der Vorrichtung für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und jeweils voller Öffnung aller Drosseleinrichtungen als minimal möglicher Differenz von Vorlauf- und Rücklauftemperatur des Wärmeträgermediums (Inbetriebnahmetemperaturdifferenz) und im Verlauf des Heizbetriebs bei Aufheizen nach einer Abkühlung bzw. im Verlauf des Kühlbetriebs bei Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und jeweils voller Öffnung aller Drosseleinrichtungen als minimale Differenz von Vorlauf- und Rücklauftemperatur (Anfahrtemperaturdifferenz) und eine Meßwertspeichereinrichtung für die minimal mögliche Differenz von Vorlauf- und Rücklauftemperatur (Inbetriebnahmetemperaturdifferenz) sowie eine einerseits über eine Impulsleitung mit dieser und andererseits über jeweils eine Meßwertleitung mit den Meßeinrichtungen für die Vorlauf- und die Rücklauftemperatur des Wärmeträgermediums oder über eine Impulsleitung mit der Einrichtung zur Ermittlung der Differenz zeitgleicher Meßwerte von Vorlauf- und Rücklauftemperatur oder über eine Impulsleitung mit der Detektoreinrichtung verbundene Vergleichseinrichtung zur Ermittlung von Abweichungen der minimalen Differenz von Vorlauf- und Rücklauftemperatur (Anfahrtemperaturdifferenz) von der minimal möglichen Differenz von Vorlauf- und Rücklauftemperatur (Inbetriebnahmetemperaturdifferenz) mit einer Grenzdetektoreinrichtung aufweist, die über jeweils eine Impulsleitung mit der bzw. den Meldeeinrichtung(en) verbunden ist und mittels derer diese zur Wahrnehmbarmachung einer einem dem Über- oder Unterschreiten eines vorbestimmten Wertes einer solchen Abweichung entsprechenden Unregelmäßigkeit aktivierbar ist bzw. sind. Der Vorteil dieses untergeordneten Erfindungsgedankens ist, daß dieser eine entsprechend erfindungsgemäß ausgerüstete Heizungs- bzw. Kühlanlage besonders servicefreundlich macht. Denn es kann auf diese Weise dem Betreiber derselben die Vorhersage gegeben werden, daß er nicht mehr wirtschaftlich fährt, sondern etwas getan werden muß, weil entweder die Umwälzpumpe defekt ist oder eine oder mehrere der lokalen Drosseleinrichtung(en) hängt bzw. hängen, weil bei voller Öffnung aller Drosseleinrichtungen nicht mehr die benötigte geringe Differenz von Vorlauf- und Rücklauftemperatur erreicht wird und dieser Zustand gemeldet wird, was mit herkömmlichen Mitteln weder bei bekannter außentemperatur- bzw. witterungsgeführter Steuerung noch bei bekannter "Regelung" mit gemäß einem vorgegebenen Algorithmus nachgeführtem Sollwert der Vorlauftemperatur des Wärmeträgermediums erreichbar ist. Dabei kommt diesem untergeordneten Erfindungsgedanken für Kühlbetrieb eine erhöhte Bedeutung zu, weil Energieeinsatz für Kühlung vergleichsweise sehr kostbar ist. Deshalb sollte man dafür sorgen, daß die Meldung bereits bei einem geringen Abstand der minimalen Differenz von Vorlauf- und Rücklauftemperatur des Wärmeträgermediums (Anfahrtemperaturdifferenz) von der minimal möglichen Differenz von Vorlauf- und Rücklauftemperatur des Wärmeträgermediums (Inbetriebnahmetemperaturdifferenz), jedenfalls aber bei einem geringeren Abstand dieser Art als bei Heizen veranlaßt wird.

Während bei den vorstehend geschilderten Defekten die Differenz von Vorlauf- und Rücklauftemperatur gegenüber ihrem minimal möglichen oder minimalen Wert (Inbetriebnahme- bzw. Anfahrtemperaturdifferenz) steigt, kann es auch vorkommen, daß die minimale Differenz von Vorlauf- und Rücklauftemperatur (Anfahrtemperaturdifferenz) nicht mehr ihren früheren Wert erreicht, sondern nur noch mit einem vergleichsweise geringeren Wert zu beobachten ist. Das kann dann nur bedeuten, daß die Leistung des Wärme- bzw. Kälteerzeugers nachgelassen hat, was aus den verschiedenen vorstehend bereits ausführlich erläuterten Gründen der Fall sein kann.

Die Erfindung bietet aber gemäß einer weiteren sie zweckmäßig fortbildenden Ausgestaltung auch noch die bisher in der Fachwelt nicht für realisierbar gehaltene Möglichkeit für die Abgabe einer für den Benutzer einer Heizungs- bzw. Kühlanlage beschriebener Art höchst wertvollen weiteren Information, indem nämlich bei Fehlen einer Abweichung der Differenz von Vorlauf- und Rücklauftemperatur des Wärmeträgermediums über die obere Grenze ihres Sollwert-Bandes überhaupt hinaus und/oder bei Fehlen einer Abweichung der Differenz von Vorlauf- und Rücklauftemperatur des Wärmeträgermediums über die obere Grenze ihres Sollwert-Bandes hinaus innerhalb einer vorgegebenen Zeitspanne diese Unregelmäßigkeit optisch und/oder akustisch wahrnehmbar gemacht wird. Hierfür kann zweckmäßig vorrichtungsseitig mindestens eine Meldeeinrichtung zur Abgabe einer optisch und/oder akustisch wahrnehmbaren Information vorgesehen sein, die über eine Impulsleitung an eine Auslöseeinrichtung angeschlossen ist, die ihrerseits über eine Impulsleitung mit der Vergleichseinrichtung der Regeleinrichtung zur Bestimmung der Abweichung der Differenz von Vorlauf- und Rücklauftemperatur des Wärmeträgermediums über die obere und/oder unter die untere Grenze ihres Sollwert-Bandes und/oder mit einer Meßwertspeichereinrichtung verbunden ist, die über eine Impulsleitung mit dieser und/oder mit einer über jeweils eine Meßwertleitung mit den Meßeinrichtungen für die Vorlauf- und die Rücklauftemperatur des Wärmeträgermediums und/oder über jeweils eine Impulsleitung mit der Einrichtung zur Ermittlung der Differenz zeitgleicher Meßwerte von Vorlauf- und Rücklauftemperatur verbundenen Zeitsteuereinrichtung zur Aufnahme und/oder zum Abruf eines oder mehrerer Werte(s) der ermittelten Differenz von Vorlauf- und Rücklauftemperatur oder einer jeweils über Impulsleitungen mit den Meßeinrichtungen für die Vorlauf- und die Rücklauftemperatur des Wärmeträgermediums und/oder mit der Einrichtung zur Ermittlung der Differenz zeitgleicher Meßwerte von Vorlauf- und Rücklauftemperatur verbundenen Zeitsteuereinrichtung zur Aufnahme und/oder Abgabe eines Meßwertes oder einer Mehrzahl von von den Meßeinrichtungen für Vorlauf- und Rücklauftemperatur des Wärmeträgermediums gelieferten zeitgleichen Meßwerten dieser beiden Temperaturen während einer vorgegebenen Zeitspanne verbunden ist, angeschlossen und von dieser bei Fehlen einer Abweichung der Differenz zeitgleicher Meßwerte von Vorlauf- und Rücklauftemperatur über die obere Grenze ihres Sollwert-Bandes überhaupt hinaus und/oder bei Fehlen einer Abweichung der Differenz zeitgleicher Meßwerte von Vorlauf- und Rücklauftemperatur über die obere Grenze ihres Sollwert-Bandes hinaus innerhalb einer vorgegebenen Zeitspanne zur Wahrnehmbarmachung dieser Unregelmäßigkeit aktivierbar ist bzw. sind.

Hierdurch kann mit einfachen und kostengünstigen und dennoch höchst zuverlässigen Mitteln dem Benutzer einer Heizungs- bzw. Kühlanlage mitgeteilt werden, daß diese mit einem beträchtlichen Verlust an Wärme- bzw. Kälteenergie arbeitet, wie das etwa bei Heizungsbetrieb z. B. dann der Fall sein kann, wenn er sein zu beheizendes Haus oder dergleichen nicht geschlossen hält, sondern beispielsweise durch ein ständig offenes Fenster eines mit einem hohen Raumtemperatur-Sollwert bedienten Raumes Energie vergeudet, damit er entsprechende Maßnahmen treffen kann. Dies ist im übrigen für Kühlbetrieb noch wesentlich wichtiger, weil bei diesem durch Beseitigung einer solchen Kälteenergie-Leckage vergleichsweise wesentlich mehr an Kosten gespart werden kann als im Heizbetrieb. Die gleiche Information tritt aber auch bei einem gegenüber diesem nur mit Energievergeudung verbundenen Fall viel gravierenderen Fall eines echten Defektes in der Heizungs- bzw. Kühlanlage auf, nämlich immer dann, wenn eine oder mehrere der lokalen automatisch wirkenden Drosseleinrichtungen derart defekt sind, daß sie trotz anstehenden Rückführimpulses aus ihrer Offenstellung sich nicht mehr in eine Schließstellung zurückbewegen können. Und des weiteren könnte das bedeuten, daß die Leistung des Wärme- bzw. Kälteerzeugers nicht mehr ausreicht. Auch diese wichtigen Störfaktoren lassen sich mit diesem untergeordneten Erfindungsgedanken zuverlässig unverzüglich wahrnehmbar machen.

Die Erfindung bietet gemäß einem weiteren untergeordneten Erfindungsgedanken aber auch noch eine andere bisher in der Fachwelt nicht für realisierbar gehaltene Möglichkeit der Verbesserung der Betriebsweise der Regelung im Sinne einer Vereinfachung und Verbilligung bei gleichzeitiger Einsparung technisch hochqualifizierten Inbetriebnahmepersonals mit langjähriger Erfahrung oder der Notwendigkeit zeit- und kostenaufwendiger Einweisungen des Benutzers. In dieser nicht naheliegenden Ausgestaltung schafft die Erfindung gemäß der dieser zugrundeliegenden untergeordneten Teilaufgabe erstmalig die Möglichkeit, der Regelung eine Art von systemimmanenter Intelligenz integrieren zu können. Hierfür sieht dieser untergeordnete Erfindungsgedanke vor, daß über eine vorbestimmte Zeitspanne die Anzahl der im Betrieb auftretenden Abweichungen der Differenz von Vorlauf- und Rücklauftemperatur des Wärmeträgermediums über die obere und/oder unter die untere Grenze ihres Sollwert-Bandes und/oder die Anzahl der im Betrieb auftretenden Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums gemessen und entsprechend der Abweichung dieser Anzahl von einer vorgegebenen Zahl solcher Abweichungen der Differenz von Vorlauf- und Rücklauftemperatur bzw. der im Betrieb auftretenden Veränderungen des Sollwertes der Vorlauftemperatur des Wärmeträgermediums bzw. Veränderungen dieser Wärme- bzw. Kälteleistungszufuhr das Sollwert-Band der Differenz von Vorlauf- und Rücklauftemperatur des Wärmeträgermediums verändert wird.

Hierbei handelt es sich um eine Art Selbstlernvorgang, bei dem die Vorrichtung nach der Erfindung selbst die eigene ihr vorgegebene Bandbreite für das Sollwert-Band der Differenz von Vorlauf- und Rücklauftemperatur des Wärmeträgermediums erfaßt, und zwar dies in Erfüllung einer weiteren zugrundeliegenden untergeordneten Teilaufgabe so, daß immer ein Optimum für Energieeinsparung bei Maximierung des Wartungsintervalls bzw. der Lebensdauer eingestellt wird. Der wichtige Vorteil hiervon ist, daß es für das Erreichen eines optimalen Betriebes bei der Ausgestaltung der Erfindung gemäß diesem untergeordneten Gedanken derselben praktisch nicht darauf ankommt, ob die eine oder beide Grenze(n) des Sollwert-Bandes der Differenz von Vorlauf- und Rücklauftemperatur des Wärmeträgermediums von vornherein in der Nähe des optimalen Arbeitswertes eingestellt ist bzw. sind, vielmehr auch dann, wenn seitens des Installateurs oder des Betreibers einer mit der Erfindung in dieser Ausgestaltung ausgerüsteten Heizungs- bzw. Kühlanlage ungünstigere Werte für die Führungsgröße in Form des erfindungsgemäßen Sollwert-Bandes der Differenz von Vorlauf- und Rücklauftemperatur des Wärmeträgermediums eingestellt worden sein sollten, sich die Vorrichtung nach der Erfindung selbst durch Selbstbeobachtung, d. h. in zeitlicher Folge gewonnene Meßwertnahme und Verarbeitung dieser Meßwerte, in geeigneter Weise ihr eigenes Sollwert-Band so verändert, daß es sowohl der eingestellten gewünschten Betriebsweise als auch den herrschenden systemimmanenten und/oder von der Außenumgebung aufgeprägten Einflüssen gerecht wird, wobei bei ungünstiger erstmaliger Wahl der einen oder beider Grenze(n) des Sollwert-Bandes lediglich eine verhältnismäßig geringfügig längere Zeit die Folge ist, bis die Vorrichtung nach der Erfindung in das jeweils optimale Sollwert-Band selbsttätig eingelaufen ist.

In weiterer Verbesserung der Vorrichtung nach der Erfindung in Richtung der Möglichkeit des Selbstlernens über die Vorlauf-Rücklauf-Temperaturdifferenz kann zweckmäßig die Regeleinrichtung eine vorzugsweise über jeweils eine Meßwertleitung mit den Meßeinrichtungen für die Vorlauf- und die Rücklauftemperatur des Wärmeträgermediums und/oder über eine Impulsleitung mit der Einrichtung zur Ermittlung der Differenz zeitgleicher Meßwerte von Vorlauf- und Rücklauftemperatur verbundene Zeitsteuereinrichtung zur Aufnahme und/oder zum Abruf eines oder mehrerer Werte(s) der ermittelten Differenz von Vorlauf- und Rücklauftemperatur oder eine jeweils über Impulsleitungen mit den Meßeinrichtungen für die Vorlauf- und die Rücklauftemperatur des Wärmeträgermediums und/oder mit der Einrichtung zur Ermittlung der Differenz zeitgleicher Meßwerte von Vorlauf- und Rücklauftemperatur verbundene Zeitsteuereinrichtung zur Aufnahme und/oder Abgabe eines Meßwertes oder einer Mehrzahl von von den Meßeinrichtungen für Vorlauf- und Rücklauftemperatur des Wärmeträgermediums gelieferten zeitgleichen Meßwerten dieser beiden Temperaturen während einer vorgegebenen Zeitspanne, eine Vergleichseinrichtung zur Ermittlung der Größe und/oder Richtung einer etwaigen Abweichung der Differenz zeitgleicher Meßwerte von Vorlauf- und Rücklauftemperatur über die obere und/oder unter die untere Grenze des vorgegebenen Sollwert-Bandes der Differenz von Vorlauf- und Rücklauftemperatur, eine Zähleinrichtung für die während dieser vorgegebenen Zeitspanne etwa aufgetretenen Abweichungen dieser Differenz zeitgleicher Meßwerte, eine Programmspeichereinrichtung für eine vorgegebene während dieser vorgegebenen Zeitspanne zulässige Zahl von im Betrieb auftretenden Abweichungen der Differenz zeitgleicher Meßwerte von Vorlauf- und Rücklauftemperatur über die obere und/oder unter die untere Grenze ihres Sollwert-Bandes und eine Detektoreinrichtung zur Ermittlung einer etwaigen Abweichung der von der Zähleinrichtung ermittelten Anzahl während dieser vorgegebenen Zeitspanne etwa aufgetretener Abweichungen dieser Differenz zeitgleicher Meßwerte von der durch die Programmspeichereinrichtung vorgegebenen für diese vorgegebene Zeitspanne zulässigen Zahl von Abweichungen dieser Differenz zeitgleicher Meßwerte sowie eine über eine Impulsleitung mit zumindest einem der Sollwertgeber verbundene Einrichtung zur automatischen Veränderung des Sollwert-Bandes bzw. zumindest einer seiner Grenzen in Abhängigkeit von dieser durch die Detektoreinrichtung ermittelten Abweichung der Anzahl aufgetretener Abweichungen der Differenz zeitgleicher Meßwerte von Vorlauf- und Rücklauftemperatur des Wärmeträgermediums von der zulässigen Zahl derselben aufweisen.

Soll hingegen bei entsprechender Ausgestaltung der Vorrichtung nach der Erfindung das Selbstlernen über die Schaltspiele derselben erfolgen, so kann gemäß einer erfinderischen Variante dieses letztgenannten untergeordneten Erfindungsgedankens mit Vorzug die Regeleinrichtung eine Zähleinrichtung zur Ermittlung der Zahl der während einer vorgegebenen Zeitspanne im Betrieb auftretenden Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärmeträgermedium bzw. Veränderungen des Sollwertes der Vorlauftemperatur des Wärmeträgermediums mit Zählwerk für diese Veränderungen, eine Programmspeichereinrichtung für eine vorgegebene während dieser vorgegebenen Zeitspanne zulässige Zahl solcher Veränderungen und eine Detektoreinrichtung zur Ermittlung einer etwaigen Abweichung der vom Zählwerk der Zähleinrichtung ermittelten Anzahl solcher während dieser vorgegebenen Zeitspanne etwa aufgetretener Veränderungen von der durch die Programmspeichereinrichtung vorgegebenen für diese vorgegebene Zeitspanne zulässigen Zahl solcher Veränderungen sowie eine über eine Impulsleitung mit dem Sollwertgeber verbundene Einrichtung zur automatischen Veränderung des Sollwert-Bandes bzw. zumindest einer seiner Grenzen in Abhängigkeit von dieser durch die Detektoreinrichtung ermittelten Abweichung der Anzahl aufgetretener Veränderungen von der zulässigen Zahl derselben aufweisen.

Dabei kann in allen diesen Fällen das erwünschte Selbstlernen gemäß einer erfinderischen Weiterbildung dieses untergeordneten Erfindungsgedankens dadurch erfolgen, daß bei Messung einer gegenüber der vorgegebenen Zahl von Abweichungen der Differenz von Vorlauf- und Rücklauftemperatur des Wärmeträgermediums über die obere und/oder unter die untere Grenze ihres Sollwert-Bandes und/oder der Anzahl der Veränderungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums größeren Anzahl solcher Abweichungen der Differenz von Vorlauf- und Rücklauftemperatur bzw.

Veränderungen dieser Wärme- bzw. Kälteleistungszufuhr bzw. der im Betrieb auftretenden Veränderungen des Sollwertes der Vorlauftemperatur des Wärmeträgermediums die obere und/oder die untere Grenze des Sollwert-Bandes der Differenz von Vorlauf- und Rücklauftemperatur des Wärmeträgermediums in Richtung einer Vergrößerung der Differenz dieser beiden Grenzen verändert und bei Messung einer gegenüber der vorgegebenen Zahl von Abweichungen der Differenz von Vorlauf- und Rücklauftemperatur des Wärmeträgermediums über die obere und/oder unter die untere Grenze ihres Sollwert-Bandes und/oder der Anzahl der Veränderungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums geringeren Anzahl solcher Abweichungen der Differenz von Vorlauf- und Rücklauftemperatur des Wärmeträgermediums bzw. Veränderungen dieser Wärme- bzw. Kälteleistungszufuhr bzw. der im Betrieb auftretenden Veränderungen des Sollwertes der Vorlauftemperatur des Wärmeträgermediums die obere und/oder die untere Grenze des Sollwert-Bandes der Differenz von Vorlauf- und Rücklauftemperatur des Wärmeträgermediums in Richtung einer Verringerung der Differenz dieser beiden Grenzen verändert wird.

Die hierfür zweckmäßige Fortbildung der Vorrichtung nach der Erfindung kennzeichnet sich durch einen durch die Einrichtung zur automatischen Veränderung des Sollwert-Bandes bei Ermittlung einer gegenüber einer vorgegebenen Zahl von Abweichungen der Differenz von Vorlauf- und Rücklauftemperatur des Wärmeträgermediums über die obere und/oder unter die untere Grenze ihres Sollwert-Bandes bzw. einer gegenüber einer vorgegebenen Zahl von Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärmeträgermedium bzw. Veränderungen des Sollwertes der Vorlauftemperatur des Wärmeträgermediums größeren Anzahl solcher Abweichungen der Differenz von Vorlauf- und Rücklauftemperatur des Wärmeträgermediums bzw. solcher Veränderungen dieser Wärme- bzw. Kälteleistungszufuhr bzw. Veränderungen des Sollwertes der Vorlauftemperatur des Wärmeträgermediums im Sinne einer Vergrößerung der Differenz der beiden Grenzen dieses Sollwert-Bandes und bei Ermittlung einer gegenüber einer vorgegebenen Zahl solcher Abweichungen der Differenz von Vorlauf- und Rücklauftemperatur des Wärmeträgermediums bzw. einer gegenüber einer vorgegebenen Zahl solcher Veränderungen dieser Wärme- bzw. Kälteleistungszufuhr bzw. einer gegenüber einer vorgegebenen Zahl solcher Veränderungen des Sollwertes der Vorlauftemperatur des Wärmeträgermediums geringeren Anzahl solcher Abweichungen der Differenz von Vorlauf- und Rücklauftemperatur des Wärmeträgermediums bzw. solcher Veränderungen dieser Wärme- bzw. Kälteleistungszufuhr bzw. solcher Veränderungen des Sollwertes der Vorlauftemperatur des Wärmeträgermediums im Sinne einer Verringerung der Differenz der beiden Grenzen dieses Sollwert-Bandes verstellbaren Sollwertgeber.

Hervorzuheben ist in diesem Zusammenhang, daß sich dieses Selbstlernen der Vorrichtung nach der Erfindung besonders bei Einsatz derselben in Verbindung mit mit elektrischer Energie betriebenen Wärmepumpen oder Kältemaschinen vorteilhaft auswirkt, indem nämlich sich für diese ein besonders schonender Betrieb erreichen läßt und ferner ohne aufwendige Implementierungen den Vorschriften der öffentlichen Energieversorgungsunternehmen bezüglich beispielsweise der zulässigen Zahl von Einschaltvorgängen pro Zeiteinheit, z. B. 3 mal pro Stunde durch einfaches Einprogrammieren eines entsprechenden Regelalgorithmus genüge getan werden kann.

Zusammenfassend ist festzustellen, daß die Erfindung der Verwendung von sowohl P- als auch PI- oder PD- und auch PID-Reglern Einsatzmöglichkeiten mit nicht zu erwartenden vorteilhaften Auswirkungen eröffnet. Solche Reglertypen sind an sich bekannt, und die durch den Einsatz solcher an sich bekannter Regler in Verbindung mit der mit einer bandmäßigen Sollwertvorgabe für die Differenz von Vorlauf- und Rücklauftemperatur des Wärmeträgermediums arbeitenden Erfindung erzielbaren Vorteile sind vorstehend bereits im einzelnen erläutert.

Dabei ist allerdings die erstmalig durch die Erfindung mit ihrer Sollwert-Band-Vorgabe erbrachte Möglichkeit hervorzuheben, daß die Regelungsvorrichtung im Sinne eines Selbstlernens eine Anpassung ihrer eigenen Regelungskonstanten in Form der Verstärkung und/oder der Vorhaltzeit und/oder der Nachstellzeit an die individuellen raumspezifischen und/oder lage- und/oder klimaeinflußbedingten und/oder nutzerbezogenen und/oder betriebstechnischen Eigentümlichkeiten der jeweiligen Heizungs- bzw. Kühlanlage selbst vornehmen kann.

Insgesamt gesehen erbringt die Erfindung ersichtlich aus vielfältigen zu einem zweckmäßigen Zusammenspiel kombinierbaren Gründen eine bisher in der Fachwelt für ungangbar gehaltene Möglichkeit der Energieeinsparung und entsprechend wirtschaftlich zu führender Betreibung von Heizungs- bzw. Kühlanlagen. Dabei kommt ferner hinzu, daß eine hersteller- bzw. werkseitige Einstellung der Regelungskonstanten der Regelungsvorrichtung nach der Erfindung als erste sinnvolle Einstellung getätigt werden kann, wobei eine solche Einstellung nicht einmal besonders genau zu sein braucht, weil die Erfindung so ausgestaltet werden kann, daß sie im Wege des Selbstlernens ihre Regelungskonstanten optimierend selbst nachstellt. Weiterhin ist von Vorteil, daß eine hersteller- bzw. werkseitige Einstellung der einen oder beider Grenze(n) des die Führungsgröße für die Regelung nach der Erfindung abgebenden Sollwert-Bandes der Differenz von Vorlauf- bzw. Rücklauftemperatur des Wärmeträgermediums im Sinne etwa einer durchschnittlichen optimalen Vorgabe der Führungsgröße als erste sinnvolle Einstellung getätigt werden kann, ohne daß der Betreiber der mit der Regelungsvorrichtung nach der Erfindung ausgestatteten Heizungs- bzw Kühlanlage daran gehindert wäre, je nach eigenem Bedürfnis sein eigenes Sollwert-Band als Führungsgröße zu wählen, wodurch er nicht nur auf lediglich Sparen verwiesen ist, sondern auch ungewöhnlichen Belastungsfällen, wie beispielsweise bei Heizbetrieb einer warmen Nordwand und einer kalten Südwand seines Hauses, wirkungsvoll begegnen kann, da ihm erstmalig eine völlige Unabhängigkeit der Regelung bzw. der mit einer Regelungsvorrichtung nach der Erfindung ausgerüsteten Heizungs- bzw. Kühlanlage von irgendwelchen Randbedingungen zur Verfügung gestellt wird.

Ungeachtet der durch die Erfindung gebotenen vorstehend erläuterten Möglichkeit einer optimierenden Selbstnachführung der Regelungsgrößen bietet die Erfindung weiterhin die Möglichkeit für die Selbstermittlung der für eine bestimmte Heizungs- bzw. Kühlanlage aufgrund der Gesamtheit der Einflußgrößen, denen sie unterliegt, optimalen Führungsgröße. Dabei kann die Erfindung auch so ausgelegt werden, daß sich eine mit dieser ausgerüstete Heizungs- bzw. Kühlanlage selbst daraufhin kontrolliert, ob bei ihr irgendwelche Defekte anlagenmäßiger und/oder betriebstechnischer Art aufgetreten sind.

Ferner wird erstmalig durch die Erfindung eine Möglichkeit aufgezeigt, den Benutzer einer Heizungs- bzw. Kühlanlage einerseits auf Energievergeudungen und andererseits auf lokalen Defekt einer oder mehrerer der den Heizkörpern bzw. Kühleinrichtungen zugeordneten automatisch wirkenden Drosseleinrichtung(en) hinzuweisen.

Für alle diese vorteilhaften Ausführungsformen der Erfindung sind die Einzelheiten derselben vorstehend bereits detailliert erläutert worden.

Weiterhin zeichnet sich die Erfindung gegenüber dem Stand der Technik dadurch aus, daß dem Nutzer derselben durch diese erstmalig die Möglichkeit an die Hand gegeben ist, mit ein und derselben Regelungsvorrichtung nach der Erfindung nach seiner eigenen Wahl und Bestimmung unterschiedliche Betriebsarten, wie beispielsweise Komfort-, Normal-, Nachtabsenkungs- bzw. Nachterwärmungs- oder Sparbetrieb oder dergleichen, zu ihm genehmen Zeiten einstellen zu können. Durch diese Möglichkeit der Wahl der Bänder wird dem Nutzer der Erfindung bzw. dem Betreiber der mit dieser ausgerüsteten Heizungs- bzw. Kühlanlage die Möglichkeit gegeben, diese einerseits mit lokal unterschiedlich verteilten Wärme- bzw. Kältelasten zu fahren, beispielsweise im Heizbetrieb bei Nutzung des Komfort-Bandes, das er im übrigen nicht über das gesamte Jahr zu benutzen braucht, sondern nur nach Wunsch bzw. Bedürfnis, dabei aber eine besondere Wirtschaftlichkeit trotz Offenhaltung aller Möglichkeiten für die Aufrechterhaltung praktisch beliebig hoher Raumtemperaturen in einem Teil der zu beheizenden Räume dadurch erreichen zu können, daß er zu Zeiten geringen Wärmebedarfs ein ökonomischerem Betrieb entsprechendes Sollwert-Band, beispielsweise ein Normal- oder Spar-Band, den Regelungsbetrieb bestimmen läßt, bei dem alle anderen Räume mit vergleichsweise viel niedrigeren Wärmelasten bzw. Raumtemperaturen bedient werden. Entsprechendes gilt natürlich auch für Kühlbetrieb. Dabei liegt die besondere Wirtschaftlichkeit darin, daß nicht immer mit der größten Lastspitze gefahren werden muß, sondern man sich für die Zeiten geringerer Wärme- bzw. Kältelast, wie etwa bei Heizbetrieb beispielsweise jahreszeitlich bedingt in der Übergangszeit und/oder nutzerbezogen bei Nachtabsenkung, mit einem günstigeren Sollwert-Band des Gesamtmassenstroms des Wärmeträgermediums zufrieden geben kann. Dies ist bei herkömmlichen Regelungs- bzw. Steuerungsarten nicht möglich. Hier muß für einen bestimmten zeitlich nur begrenzt auftretenden Bedarfsfall für das ganze Jahr oder auch über die gesamte Tageszeit ausreichend Wärme- bzw. Kälteleistung vorgehalten werden, d. h., daß in den Zeiten ohne diesen Bedarfsfall sehr unwirtschaftlich gefahren wird, oder der Betreiber einer solchen Heizungs- bzw. Kühlanlage muß für jeden Bedarfsfall ständig seine Heizkurve umstellen.

Bei allen mit diskontinuierlicher Zufuhr der Wärme- bzw. Kälteleistung zum Heizungs- bzw. Kühlmittelvorlauf arbeitenden Anlagen, bei denen üblicherweise, jedoch keinesfalls notwendig, mit geringer Wärmeträgermediums-Vorlage gearbeitet wird, beispielsweise indem Kessel mit geringer Wasservorlage oder beispielsweise als Therme oder Geyser bezeichnete Durchlauferhitzer oder aber Wärmepumpen bzw. Kältemaschinen ohne Pufferspeicher als Wärme- bzw. Kälteerzeuger eingesetzt werden, ist eine Regelung bzw. Steuerung mit konstantem Sollwert als Führungsgröße ebensowenig funktionsfähig wie eine solche, bei der gemäß dem Stande der Technik der Sollwert vorzugsweise der Vorlauftemperatur des Wärmeträgermediums in Abhängigkeit vom Ist-Verhalten der Anlage nachgeführt wird. Herkömmliche Regelungen mit Führung über die Außentemperatur sind bei allen Systemen dieser Art, die eine verhältnismäßig große Spreizung zwischen Vorlauf- und Rücklauftemperatur des Wärmeträgermediums haben, nur schwer zu verwirklichen, weil nach Abschalten der Wert der Vorlauftemperatur sich nicht mehr von dem der Rücklauftemperatur unterscheidet und damit während der Aus-Zeit eine große Differenz zur eingestellten witterungsgeführten Vorlauftemperaturvorgabe auftritt. Hier müßte der Wärme- bzw. Kälteerzeuger ständig takten, um diese Temperatur zu halten, es sei denn, man würde künstliche Verzögerungsglieder etc. einsetzen oder eine so große Hysterese vorgeben, daß der Einfluß der Führung durch Außentemperatur bzw. Witterung praktisch ausgeschaltet wäre. Hier könnten weder auf Implementierung in der Regeleinrichtung beruhende Maßnahmen noch ein Referenzraum wirksam Abhilfe schaffen, der gleichfalls eine Zeitdehnung erbringen würde, weil sich der Raum nicht sofort erwärmt oder abkühlt, also selbst eine Zeitspreizeinrichtung darstellt, die einen Zeitpuffer erbringt. Nicht zu übersehen ist ferner auch der sich hier einstellende Nachteil, daß stets ein gewisses Maß an Überversorgung an Energie vorzusehen ist, d. h. der Referenzraum temperaturmäßig um ein gewisses Maß zu hoch eingestellt werden muß, um zu vermeiden, daß die anderen Räume an Energieunterversorgung leiden.

Während bei herkömmlichen Regelungen mit kontinuierlicher Einspeisung der Wärme- bzw. Kälteleistung in den Heizungs- bzw. Kühlmittelvorlauf der Vorteil der Kontinuität nur so ausgenutzt wird, daß bei diesen Regelungen die Kontinuität lediglich auf äußere Systemgrößen gerichtet ist, wie beispielsweise das Halten einer Vorlauftemperatur als Funktion der Außentemperatur oder einer Referenzraumtemperatur, und damit nicht der wahre Verbrauch des Benutzers, sondern eine an sich systemwidrige physikalische Größe nachgefahren wird, was dazu führt, daß sich praktisch alle automatisch wirkenden Drosseleinrichtungen in einer bei Heizbetrieb zu großen Schließstellung bzw. in einer bei Kühlbetrieb zu geringen Öffnungstellung befinden, weil Fremdeinflüsse hier praktisch nicht erfassbar sind, bietet eine Ausführung der Erfindung mit Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger eine echte innere Bezugsgröße in Form der sich im Betrieb automatisch einstellenden Änderungen der Differenz von Vorlauf- und Rücklauftemperatur des Wärmeträgermediums, die es erlaubt, die Leistung des Wärme- bzw. Kälteerzeugers exakt auf den im jeweiligen Zeitpunkt bzw. im Verlauf der Betriebszeit jeweils auftretenden Wärme- bzw. Kälteenergiebedarf abzustimmen und die Regelung zudem auch noch besonders feinstufig kontinuierlich diesem tatsächlichen Verbrauch nachfahren zu können.

Abgesehen davon, daß sich bei Nutzung der Erfindung in Verbindung mit Mehrwege-Mischern welcher Ausführung auch immer die gleichen Vorteile ergeben, wie diese bereits im Zusammenhang mit kontinuierlich arbeitenden Systemen beschrieben sind, stellt sich bei einer mit Regelung mittels Veränderung der dem im Heizungs- bzw. Kühlmittelvorlauf befindlichen Wärmeträgermedium zugeführten Wärme- bzw. Kälteleistung über eine solche Mehrwege-Mischeinrichtung arbeitenden Ausführung der Erfindung zusätzlich noch eine weitere Zahl gern genutzter Vorteile ein. Zwar ist grundsätzlich eine im Ein-Aus-Betrieb arbeitende Heizungs- bzw. Kühlanlage bzw. -Vorrichtung im allgemeinen billiger als eine kontinuierlich arbeitende entsprechende Anlage bzw. Vorrichtung, es hat sich jedoch herausgestellt, daß im ersteren Fall auch bei Nutzung der Erfindung sich ein breiteres Sollwert-Band für die Differenz von Vorlauf- und Rücklauftemperatur des Wärmeträgermediums einzustellen pflegt als bei einer kontinuierlich arbeitenden Anlage bzw. Vorrichtung, weil der Ein-Aus-Betrieb prinzipiell immer um ein bestimmtes Maß zu viel Energie abgibt, man also dann, wenn man ein zu enges Band gewählt hat, ein unerwünschtes

Zeit-Verhalten erhält. Um das zu mindern und zu einem energiesparenderen engeren Sollwert-Band für die Differenz von Vorlauf- und Rücklauftemperatur des Wärmeträgermediums zu kommen, nutzt die Erfindung in ihrer mit Mehrwege-Mischern arbeitenden Ausführungsform die Glättungsfunktion eines solchen Mischers aus, indem dessen Sollwert-Band, d. h. das Sollwert-Band für die Verstellung seines Ventilgliedes, seinerseits vergleichsweise schmal gehalten werden kann. Die sich hierdurch überraschend einstellende günstige Folge ist, daß hierdurch mit geringem Mehraufwand für den Mehrwege-Mischer das diskontinuierlich arbeitende System zu einem quasi-kontinuierlich arbeitenden System mit allen Vorteilen eines kontinuierlich arbeitenden System gemacht werden kann. Hierdurch werden ferner auch die Nachteile eines in herkömmlicher Weise mit außentemperaturgeführtem Mischer arbeitenden Systems, bei dem dem Mischer in Abhängigkeit von der Außentemperatur ein Vorlaufsollwert aufgeprägt wird, so daß er zwar diesem kontinuierlich, aber schon kontinuierlich systemwidrig und nicht auf den tatsächlichen Bedarf abgestellt nachfährt, ausgeschaltet, die im übrigen die gleichen sind wie für eine herkömmliche Anlage mit beispielsweise kontinuierlich witterungsgeführtem Brenner.

Der der Erfindung zugrundeliegenden Teilaufgabe der möglichst weitgehenden Einsparung von Energieverbrauch widmet sich eine andere erstmalig durch die Erfindung mögliche erfinderische Fortbildung, gemäß der für den Beginn einer Abkühlung und/oder für den Beginn einer Erwärmung ein Sollwert-Band der Differenz von Vorlauf- und Rücklauftemperatur des Wärmeträgermediums mit einem bei einer nur einen Bruchteil der für Tagesbetrieb zur Wirkung kommenden Differenz von Vorlauf- und Rücklauftemperatur minimal möglichen Unterschied zwischen der oberen und unteren Grenze dieses Sollwert-Bandes mit einer zeitlichen Toleranzschwelle vorgegeben wird. Vorrichtungsmäßig kann hierfür zweckmäßig vorgesehen sein, daß die Regeleinrichtung für den Beginn einer Abkühlung und/oder für den Beginn einer Erwärmung auf den minimal möglichen Unterschied zwischen oberer und unterer Grenze des Sollwert-Bandes der Differenz von Vorlauf- und Rücklauftemperatur des Wärmeträgermediums eingestellte Sollwertgeber und eine Zeitgabeeinrichtung aufweist, mittels derer bei Heizbetrieb eine Abkühlung um eine vorbestimmte Zeitspanne beschleunigt und/oder eine Aufheizung um eine vorbestimmte Zeitspanne verzögert bzw. bei Kühlbetrieb eine Erwärmung um eine vorbestimmte Zeitspanne beschleunigt und/oder eine Abkühlung um eine vorbestimmte Zeitspanne verzögert einleitbar ist.

Es ist ersichtlich, daß bei einer Heizungsanlage dann, wenn gemäß der Erfindung von Tagbetrieb, wie immer dieser als Komfort- oder Normal- oder auch Sparbetrieb gewählt sein mag, auf Nachtbetrieb von einem Sollwert-Band größerer Breite auf ein solches sehr geringer Breite als Führungsgröße für den Nachtabsenkbetrieb umgeschaltet wird, sich aufgabengemäß eine Energieeinsparung im Nachtabsenkungsbetrieb ergibt. Dieser wird über eine Zeitgabeeinrichtung mit Zeitschaltwerk eingeleitet und beendet. Im Zuge der Einleitung muß der Ist-Wert der Differenz von Vorlauf- und Rücklauftemperatur des Wärmeträgermediums, der sich ordnungsgemäß innerhalb beider Grenzen ihres Sollwert-Bandes oder aber oberhalb der oberen oder auch unterhalb der unteren Grenze desselben befinden mag, auf einen dem Sollwert-Band für Nachtabsenkbetrieb entsprechenden Wert gebracht werden. Wird jetzt durch die Meßeinrichtung für den Ist-Wert der Differenz von Vorlauf- und Rücklauftemperatur des Wärmeträgermediums festgestellt, daß dieser beispielsweise bereits eine Zeitspanne vor dem programmierten Umschaltzeitpunkt im Sinken begriffen ist, so ist es als erwünscht anzusehen, wenn dieses Sinken auf den dem Nachtabsenkbetrieb entsprechenden geringeren Wert bereits jetzt freigegeben und vermieden werden könnte, daß der Wärmeerzeuger noch einmal Wärmeleistung in das das Wärmeträgermedium führende Leitungssystem einschiebt, obgleich auf Grund der individuellen Betriebsverhältnisse zu diesem Zeitpunkt die Regelung eigentlich hierfür zu sorgen hätte. Hier wird gemäß diesem untergeordneten Erfindungsgedanken derart eingegriffen, daß dem vorprogrammierten oder vom Betreiber der Heizungsanlage individuell gewählten Umschaltzeitpunkt eine zeitliche Toleranzschwelle vorgeschaltet wird, so daß solche unnötigen Energiezuführungsmaßnahmen bereits zu Beginn dieser zeitlichen Toleranzschwelle vermieden werden. Gleiches gilt natürlich auch dann, wenn zu dem programmierten oder vom Betreiber der Anlage individuell eingestellten Zeitpunkt, beispielsweise zum Morgen des kommenden Tages, die Differenz von Vorlauf- und Rücklauftemperatur des Wärmeträgermediums aus ihrem Sollwert-Band für Nachtabsenkbetrieb wieder in einen vorprogrammierten oder auch seitens des Betreibers der Anlage individuell eingestellten Tagesbetrieb mit entsprechendem Sollwert-Band als Führungsgröße zu überführen ist. Hier kann es nämlich von Vorteil sein, wenn der Aufheizzeitpunkt auf Grund einer gemäß diesem untergeordneten Erfindungsgedanken eingesetzten zeitlichen Toleranzschwelle gegenüber dem programmierten bzw. der Vorrichtung nach der Erfindung betreiberseitig vorgegebenen Zeitpunkt nachverlegt wird. Auch in solchen Fällen ergeben sich wertvolle Energieeinsparungen, denn es wird zufolge der Ist-Wert-Überwachung der Differenz von Vorlauf- und Rücklauftemperatur des Wärmeträgermediums durch die Erfindung der im Nachtabsenkbetrieb arbeitenden Heizungsanlage auch nach dem vorprogrammierten bzw. betreiberseitig eingestellten Zeitpunkt des Rückkehrens auf Tagesbetrieb dann noch die Möglichkeit gelassen, für die diesem Zeitpunkt nachgeschaltete zeitliche Toleranzschwelle unter Einfluß der Regelung für Nachtabsenkbetrieb zu verbleiben, wenn sich der Ist-Wert der Differenz von Vorlauf- und Rücklauftemperatur des Wärmeträgermediums innerhalb des Sollwert-Bandes für Nachtabsenkbetrieb in Richtung der unteren Grenze, d. h. in Richtung auf Zufuhr höherer Wärmeleistung, bewegt, um dann innerhalb der für diesen Umschaltvorgang vorgesehenen zeitlichen Toleranzschwelle oder nach Ablauf derselben zwangsweise auf Tagesbetrieb umgeschaltet zu werden, was nunmehr die Zufuhr einer entsprechend größeren Wärmeleistung zum das Wärmeträgermedium führenden Leitungssystem bedeutet. Ähnlich, nur mit erheblich größerem Energiespareffekt kann dieser untergeordnete Erfindungsgedanke für Kühlbetrieb nutzbar gemacht werden. Während aber bei Heizbetrieb eine Abkühlung um eine vorbestimmte Zeitspanne beschleunigt (Umschaltung auf Nachtabsenkbetrieb) und/oder eine Aufheizung um eine vorbestimmte Zeitspanne verzögert (Rückumschaltung

auf Tagesbetrieb) erfolgt, wird bei Kühlbetrieb eine Erwärmung um eine vorbestimmte Zeitspanne beschleunigt (Umschaltung auf Nachtbetrieb) und/oder eine Abkühlung um eine vorbestimmte Zeitspanne verzögert eingeleitet (Rückumschaltung auf Tagesbetrieb). In sämtlichen Fällen jedoch wird gemäß diesem untergeordneten Erfindungsgedanken in Abhängigkeit vom jeweiligen Regelungsverhalten der betreffenden Heizungs- bzw. Kühlanlage so Einfluß auf den vorprogrammierten bzw. voreingestellten Umschaltzeitpunkt von Tagesbetrieb auf Nachtabsenkbetrieb und/oder umgekehrt genommen, daß Energieverluste an Wärme- bzw. Kälteenergie in jedem Falle auf ein Minimum gebracht werden. Auch insoweit liegt bei einer Ausführung der Erfindung gemäß diesem untergeordneten Gedanken derselben eine Art Selbstlernfunktion vor.

Und schließlich befaßt sich ein wiederum anderer untergeordneter Erfindungsgedanke gleichfalls mit einer untergeordneten Teilaufgabe zur der Erfindung zugrundeliegenden Gesamtaufgabe, indem nämlich ohne besondere Zusatzinvestitionen und ferner auch ohne arbeits- und schmutzintensiven Montageaufwand dem Betreiber einer Heizungs- bzw. Kühlanlage als Verbraucher eine Betriebskostenanzeige an die Hand gegeben werden können soll. Hierfür sieht die Erfindung vor, daß kontinuierlich oder in vorbestimmten Zeitabständen der im Heizungs- bzw. Kühlmittel-Vorlauf bzw. -Rücklauf fließende Gesamtmassenstrom des Wärmeträgermediums gemessen und gewünschtenfalls optisch und/oder akustisch wahrnehmbar gemacht wird. In weiterer zweckmäßiger Fortbildung dieses untergeordneten Erfindungsgedankens kann kontinuierlich oder in vorbestimmten Zeitabständen aus dem aus den Meßwerten von Vorlauf- und Rücklauftemperatur ermittelten Differenzwert dieser beiden Temperaturen des Wärmeträgermediums und dem Meßwert des im Heizungs- bzw. Kühlmittel-Vorlauf bzw. -Rücklauf fließenden Gesamtmassenstroms desselben ein Meßwert der in den Heizungs- bzw. Kühlmittelvorlauf eingespeisten Wärme- bzw. Kälteleistung gebildet und dieser gewünschtenfalls optisch und/oder akustisch wahrnehmbar gemacht werden.

Hierfür kann vorrichtungsseitig eine über zumindest eine Meßwertleitung mit der Regeleinrichtung verbundene Einrichtung zur kontinuierlichen oder in vorbestimmten Zeitabständen erfolgenden Messung des Gesamtmassenstroms des Wärmeträgermediums vorgesehen sein, wobei die Regeleinrichtung eine einerseits mit dieser und andererseits über jeweils eine Meßwertleitung mit den Meßeinrichtungen für die Vorlauf- und die Rücklauftemperatur des Wärmeträgermediums und/oder über eine Impulsleitung mit der Einrichtung zur Ermittlung der Differenz zeitgleicher Meßwerte von Vorlauf- und Rücklauftemperatur des Wärmeträgermediums verbundene Multipliziereinrichtung zur kontinuierlichen oder in vorbestimmten Zeitabständen erfolgenden Bildung der Produkte aus kontinuierlich oder in vorbestimmten Zeitabständen gewonnenen Meßwerten des Gesamtmassenstroms und der Differenz der zeitgleich ermittelten Meßwerte von Vorlauf- und Rücklauftemperatur des Wärmeträgermediums und vorzugsweise auch eine über eine Impulsleitung mit dieser Multipliziereinrichtung verbundene Einrichtung zur optischen und/oder akustischen Anzeige des einem Meßwert der in den Heizungs- bzw. Kühlmittelvorlauf eingespeisten Wärme- bzw. Kälteleistung entsprechenden Ergebnisses der Multipliziereinrichtung aufweist.

Es ist ersichtlich, daß hierdurch mit höchst einfachen und kostengünstigen Mitteln der Verbraucher automatisch über seinen Wärme- bzw. Kälteverbrauch informiert werden kann. Dies führt dazu, daß der Verbraucher jederzeit sein Energiebewußtsein kontrollieren und ändern kann, weil ihm ständig vor Augen geführt wird, wieviel Energie insbesondere aufgrund seiner eigenen selbstgewählten Einstellung einer Betriebsart verbraucht wird. Die Wahrnehmbarmachung kann dabei so vorgenommen werden, daß durch geeignete Wahl entsprechender Anzeigeeinrichtungen der Verbrauch in kW/h und/oder in Währungs- /Zeiteinheit, beispielsweise DM pro Stunde, Tag, Monat oder Jahr, angezeigt wird. Dem Betreiber der Anlage wird insbesondere über die Möglichkeit, Komfort- , Normal- und Sparbetrieb wählen zu können, vermittelt, daß Komfort "eben seinen Preis hat".

Im übrigen hat es sich als höchst nützlich herausgestellt, wenn in weiterer zweckmäßiger Fortbildung der Erfindung die Regeleinrichtung in zwei miteinander verbundene Funktionsgruppen gegliedert ist, deren eine die Einrichtungen für diejenigen Funktionen umfaßt, die während der Heiz- bzw. Kühlperiode in der Regel nicht oder nur selten verändert werden, und vorzugsweise in der Nähe des Wärme- bzw. Kälteerzeugers und/oder eines etwaigen Drei- oder Vier-Wege-Mischers angeordnet ist, während die andere die Einrichtungen für die vom Benutzer einstellbaren Funktionen umfaßt und als Raumschaltstation in bequemer Nähe des Benutzers angeordnet ist. Die sich hieraus ergebenden Vorteile insbesondere bezüglich der speziellen Benutzerfreundlichkeit durch äußerste Bequemlichkeit der Handhabung der Erfindung bzw. der mit dieser ausgerüsteten Heizungs- bzw. Kühlanlage liegen auf der Hand.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des Wärme- bzw. Kälteerzeugers mit gerätemäßig gleichen Mitteln mit den entsprechenden Vorteilen bezüglich Lagerhaltung, Gestehungspreis, Montageaufwand etc. erstellen und/oder betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetreiber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs- bzw. -durchgangswerten durchzuführen, Himmelsrichtungsbetrachtungen anzustellen, Klimazonen zu berücksichtigen und dergleichen.

Im übrigen ist darauf zu verweisen, daß, wenn vorstehend oder nachfolgend von Kesseln als Wärmeerzeugern gesprochen wird, dieser Begriff auch als gas- oder ölbefeuerte Durchlauferhitzer, sogenannte Thermen oder Geyser, arbeitende Geräte mitumfaßt, indem diese sich von den gemeinhin als Kessel bezeichneten Geräten grundsätzlich nur dadurch unterscheiden, daß sie mit praktisch keiner oder allenfalls äußerst geringer Vorlage an Wärmeträgermedium arbeiten und entsprechend praktisch keine bzw. keine nennenswerte Wärmespeicherkapazität aufweisen.

Weiterhin umfaßt hier und im folgenden der Begriff "Heizkörper" ganz allgemein jede beliebige Art von Heizungseinrichtung, die mit Wärmeträgermedium gespeist wird, und zwar dies ungeachtet ihrer speziellen Ausführung beispielsweise als Radiator oder Konvektor oder als Mischform beider jeweils mit oder ohne Gebläse für Verbesserung der Wärmeabgabe. Generell gesagt ist der benutzte Begriff "Heizkörper" vom Heizungssystem her gesehen als dessen bzw. einer von dessen Wärmeenergieverbraucher(n) zu verstehen, wobei es auf die spezielle Ausgestaltung der Wärmeabgabe ebensowenig ankommt, wie auf den Einsatz einer solchen als "Heizkörper" bezeichneten Heizeinrichtung im Wohn- oder Gewerbe- oder Industriebereich beispielsweise auch als Industriehallen-Luftheizgerät.

In allen vorstehenden Betrachtungen wurde keine Bedeutung auf die Bestimmung einer maximal möglichen Differenz von Vorlauf- und Rücklauftemperatur des Wärme- bzw. Kälteerzeugers gelegt, weil man theoretisch davon ausgegangen ist, daß diese Temperaturdifferenz sogar unendliche, jedenfalls so große Werte annehmen kann, daß es sich nicht lohnt, diese überhaupt zu ermitteln. An dieser Stelle ist zu vermerken, daß es für praktisch ausgeführte Anlagen durchaus möglich und auch sinnvoll sein kann, eine solche Anlage so zu fahren, daß sich eine maximale Temperaturdifferenz von Vorlauf- und Rücklauftemperatur des Wärmeträgermediums ermitteln läßt, ohne daß hierdurch die Anlage gefährdet würde. Ein solcher maximaler Wert der Vorlauf-Rücklauf-Temperaturdifferenz kann nämlich dazu benutzt werden, von vornherein eine Korrektur des für die wertmäßige Wahl des Sollwert-Bandes nutzbaren Raumes im Sinne einer Stauchung dieses Sollwert-Bandes vorzugeben oder aber ein etwa vorgegebenes Programm eines solchen Sollwert-Bandes bzw. mehrerer solcher Sollwert-Bänder, wie beispielsweise im Fall vorprogrammierter Möglichkeiten für Einstellung unterschiedlicher Betriebsarten, nachträglich auf spezielle Eigenheiten der Heizungs- bzw. Kühlanlage optimierend abstimmen zu können.

Insgesamt gesehen liegt der Vorteil eines solchen Vorgehens nach der Erfindung darin, daß man sich mit höchst einfachen und wirtschaftlichen Mitteln auf jede Heizungs- bzw. Kühlanlage optimal adaptieren und damit sogar solche Heizungs- bzw. Kühlanlagen bedienen kann, bei denen sich Regeleingriffe in die Heizungs- bzw. Kühlanlage nicht so signifikant in Änderungen der Vorlauf- und/oder Rücklauftemperatur bemerkbar machen. Hierdurch lassen sich auch solche Systeme im Sinne der Erfindung fahren, bei denen Betriebsgrößen einzuhalten sind, die nicht auf eine minimal mögliche oder eine minimale Differenz von Vorlauf- und Rücklauftemperatur des Wärmeträgermediums zurückzuziehen sind.

Im folgenden wird die Erfindung anhand einiger bevorzugter Ausführungsbeispiele, die in den Zeichnungen lediglich schematisch dargestellt sind, rein beispielsweise näher erläutert. Dabei zeigen:

Fig. 1 eine schematische Darstellung einer die Erfindung verkörpernden Heizungsanlage in Einstrang-Bauweise mit in zwei Funktionsgruppen gegliederter Regeleinrichtung,

Fig. 2 in der Darstellung gemäß Fig. 1 entsprechender Darstellung
eine andere Ausführungsform der Erfindung in Form einer Heizungsanlage in Zweistrang-Bauweise mit einem Vier-Wege-
Mischer als Mehrwege-Mischeinrichtung und einer nicht aufgegliederten Regeleinrichtung, und

Fig.3 einen Ausschnitt aus der der Ausführungsform gemäß Fig. 2
entsprechenden Ausführung der Erfindung, bei der jedoch ein
Drei-Wege-Mischer als Mehrwege-Mischeinrichtung eingesetzt
ist.

Gleiche Bezugszeichen bezeichnen dabei jeweils gleiche Einzelheiten
der Ausführungsbeispiele.

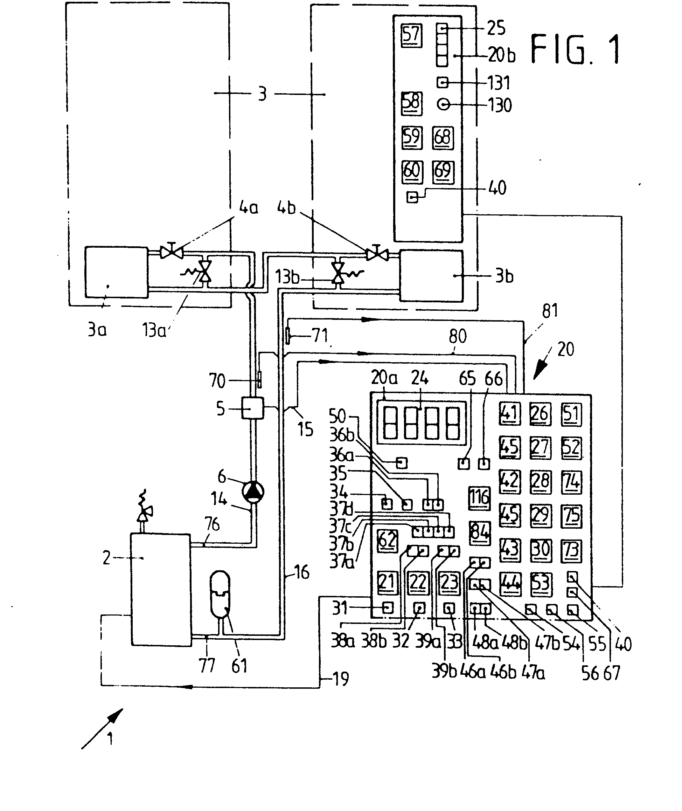

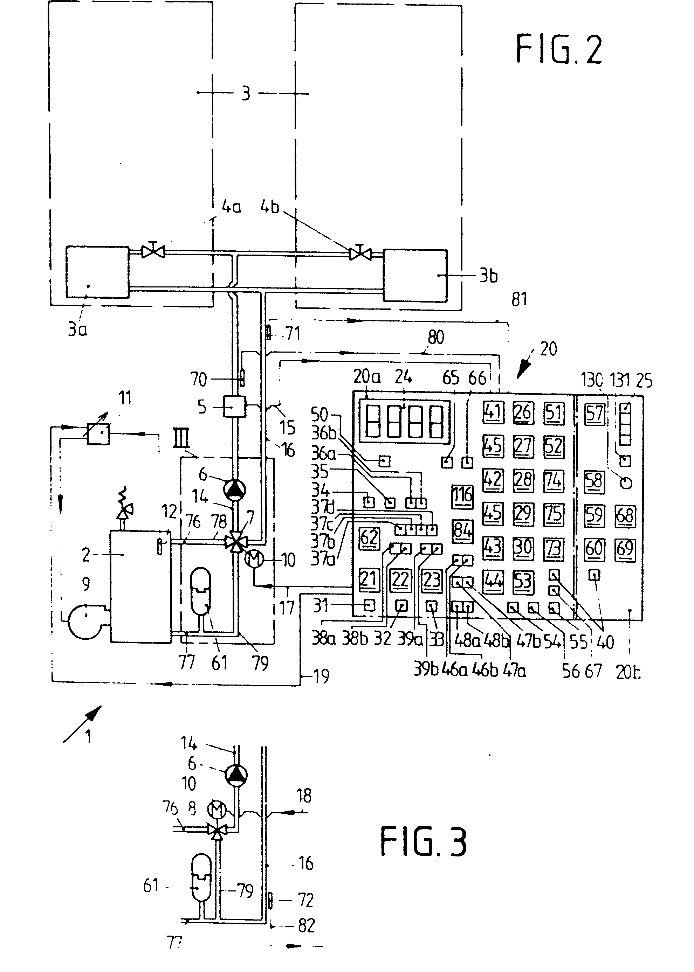

Die als Ganzes mit 1 bezeichnete Heizungsvorrichtung nach der Erfindung weist beim Ausführungsbeispiel gemäß Fig. 1 einen Wärmeerzeuger 2 auf, der als Wärmepumpe in Kompressions- oder Sorptionsbauweise mit einem sekundärseitig in das das Wärmeträgermedium führende
Rohrleitungssystem eingeschalteten Wärmetauscher oder als vom Wärmeträgermedium durch- oder umspülter Wärmetauscher eines Rauchgaskühlers oder aber als sekundärseitig das Wärmeträgermedium führender
und primärseitig mit Primärwärmeträgermedium beaufschlagter Wärmetauscher einer Fernwärme-Übergabestation ausgebildet sein kann.
Statt der dargestellten Ausführung könnte auch ein elektrisch beheizter oder aber ein brennstoffbefeuerter Heizkessel eingesetzt
sein, wie letzterer in Fig. 2 rein beispielsweise dargestellt ist.
Die Darstellung des Wärmeerzeugers in Fig. 1 soll demgemäß nur beispielhaft eine von vielen möglichen Ausführungsformen eines Wärmeerzeugers symbolisieren.

Der Wärmeerzeuger 2 ist mit seinem Wärmeträgermediumsausgang 76 an
die Vorlaufleitung 14 des das Wärmeträgermedium führenden Leitungssystems angeschlossen, das seinerseits - wie aus Fig. 1 ersichtlich
- als Einstrang-System ausgebildet ist, indem nämlich der Heizungsvorlauf 14, in den eine Umwälzpumpe 6 beliebiger Ausführung bzw.

Bauweise eingeschaltet ist, über eine automatische Drosseleinrichtung 4a zu einem Heizkörper 3a eines von mehreren, im dargestellten Ausführungsbeispiel zwei Räumen, führt, von dem dann eine
Weiterführungsleitung zu einer weiteren automatischen Drosseleinrichtung 4b eines einem anderen Raum des als Ganzes mit 3 bezeichneten, mehrere Räume aufweisenden Wärmeverbrauchers zugeordneten
weiteren Heizkörpers 3b führt. Dieser letzte Heizkörper der in Einstrang-Bauweise ausgeführten Heizungsvorrichtung 1 ist über eine
Heizungsrücklaufleitung 16 an den Wärmeträgermediumseingang 77 des
Wärmeerzeugers 2 angeschlossen. Die Zuläufe und Abläufe zu bzw. von
den einzelnen Heizkörpern 3a bzw. 3b sind jeweils durch eine Überströmleitung kurzgeschlossen, in welche jeweils ein druckeinstellbares Überströmventil 13a bzw. 13b eingeschaltet ist. Am Wärmeträgermediumsrücklauf 16 ist im Bereich des Wärmeträgermediumseinganges 77 des Wärmeerzeugers 2 ein Ausdehnungsgefäß 61 für das
Wärmeträgermedium angeschlossen.

Mittels einer der Vorlaufleitung 14 für das Wärmeträgermedium, beispielsweise Heißwasser, zugeordneten Messeinrichtung 70 für dessen
Vorlauftemperatur, die beispielsweise als Temperaturfühlermanschette
ausgebildet sein kann, wird kontinuierlich oder in vorgegebenen
Zeitabständen nacheinander ein Messwert bzw. eine Folge von Messwerten der Vorlauftemperatur und mittels einer der Rücklaufleitung
16 für das Wärmeträgermedium zugeordneten Messeinrichtung 71 gemäß
Fig. 1 bzw. einer der die einzelnen Heizkörper 3a, 3b durchströmenden Einzelmassenströme zusammenfassenden Rücklaufleitung 16
gemäß Fig. 3, wie dargestellt, oder statt dessen der Rücklaufleitung
16 gemäß Fig. 2, wie dargestellt, oder der das Wärmeträgermedium von
der Mehrwege-Mischeinrichtung 8 zum Wärmeträgermediumseingang 77 des
Wärmeerzeugers 2 rückführenden Rückführleitung 79 gemäß Fig. 2
(nicht dargestellt) zugeordneten Messeinrichtung 72, die jeweils gleichfalls als Temperaturfühlermanschette ausgeführt und über eine Messwertleitung 82 mit der Regeleinrichtung 20 verbunden sein können, wird gleichfalls kontinuierlich oder in vorgegebenen Zeitabständen, jedoch zeitgleich mit der Messung der Vorlauftemperatur die Rücklauftemperatur des Wärmeträgermediums gemessen.

Die zugehörige Regeleinrichtung 20, die beim Ausführungsbeispiel gemäß Fig. 1 aus zwei Funktionsgruppen 20a und 20b besteht, wird im folgenden im Zusammenhang mit dem Ausführungsbeispiel gemäß Fig. 2 näher erläutert.

Der Aufbau der wiederum als Ganzes mit 1 bezeichneten Heizungsvorrichtung nach der Erfindung gemäß Fig. 2 ist im wesentlichen der gleiche wie der gemäß Fig. 1. Auch hier ist der Wärmeerzeuger mit 2 bezeichnet, jedoch als brennerbetriebener Kessel dargestellt, dessen Brenner 9 als Einrichtung zur Beeinflussung der Betriebsenergie für den Wärmeerzeuger 2 über eine herkömmliche Regeleinrichtung mit einer Messeinrichtung 12 für die Temperatur des Wärmeträgermediums im Wärmeerzeuger 2 (Kesselthermometer) und einer Einrichtung 11 zur Beeinflussung der Zufuhr von Betriebsenergie zum Wärmeerzeuger 2 derart gefahren werden kann, daß die Temperatur des Wärmeträgermediums, beipielsweise des Kesselwassers, im Wärmeerzeuger einen vorgegebenen Wert nicht übersteigt. Dargestellt ist ferner, daß der Wärmeträgermediumsausgang 76 des Wärmeerzeugers 2 über eine Beimischleitung 78 an den einen Eingangsstutzen eines Vier-Wege-Mischers 7 und der Wärmeträgermediumseingang 77 des Wärmeerzeugers 2, an den im übrigen in der gleichen Weise, wie im Zusammenhang mit dem Ausführungsbeispiel gemäß Fig. 1 bereits erläutert, ein Ausdehnungsgefäß 61 für Wärmeträgermedium angeschlossen ist, an den einen Ausgangsstutzen des Vier-Wege-Mischers 7 über eine Rückführleitung 79 angeschlossen ist. Der andere Ausgangsstutzen des Vier-Wege-Mischers 7 ist über die Wärmeträgermediums-Vorlauf-Leitung 14 mit einer Leitungsverzweigung verbunden, die so viele Wärmeträgermediums-Abgänge aufweist, wie zu bedienende Heizkörper der Heizungsvorrichtung 1 vorhanden sind, es sei denn, es würden mehrere Leitungsverzweigungen hintereinandergeschaltet angeordnet werden, was in Einzelfällen zu bevorzugen sein kann, beispielsweise wenn die Zahl der Heizkörper besonders groß ist.

An die genannte Leitungsverzweigung, die vom Heizungsvorlauf 14 angespeist wird, sind im in Fig. 2 dargestellten Ausführungsbeispiel zwei Heizkörper 3a bzw. 3b jeweils über eine vorgeschaltete automatisch wirkende Drosseleinrichtung 4a bzw. 4b angeschlossen, wobei auch hier der hier allerdings nur aus zwei Heizkörpern 3a, 3b bestehende Wärmeverbraucher als Ganzes mit 3 bezeichnet ist. Die beiden Heizkörper 3a, 3b (und bei mehr vorhandenen Heizkörpern auch diese) sind mit ihren Wärmeträgermediums-Ausgängen jeweils mit einer weiteren zwar dargestellten, jedoch nicht näher bezeichneten Leitungsverzweigung verbunden, von der das Wärmeträgermedium über die mit dieser in Verbindung stehende Rücklaufleitung 16 zum Vier-Wege-Mischer 7 zurückströmt, indem der Heizungsrücklauf 16 an den anderen Eingangsstutzen des Vier-Wege-Mischers 7 angeschlossen ist.

Es ist ersichtlich, daß auf diese Weise eine Heizungsanlage in Zweistrang-Bauweise gebildet ist, wobei diese außerdem auch noch eine Mehrwege-Mischeinrichtung in Form eines Vier-Wege-Mischers 7 aufweist. Diesem ist im Heizungsvorlauf 14 eine Umwälzpumpe 6 nachgeschaltet. Auch beim Ausführungsbeispiel gemäß Fig. 2 ist dem Heizungsvorlauf 14 zugeordnet eine Messeinrichtung 70 für die Vorlauftemperatur und dem Heizungsrücklauf 16 eine Messeinrichtung 71 für die Rücklauftemperatur des Wärmeträgermediums angeordnet, wobei die Messeinrichtung 70 über eine Messwertleitung 80 und die Messeinrichtung 71 über eine Messwertleitung 81 an eine als Ganzes mit 20 bezeichnete Regeleinrichtung angeschlossen ist. Diese weist einen Stellbefehlgeber 62 auf, der über eine Steuerleitung 17 mit dem Antrieb 10 der Mehrwege-Mischeinrichtung 7 verbunden ist.

In Fig. 3 ist dargestellt, daß die beim Ausführungsbeispiel gemäß Fig. 2 in Form eines Vier-Wege-Mischers 7 ausgebildete Mehrwege-Mischeinrichtung auch als Drei-Wege-Mischer 8 ausgeführt sein kann, wenn die Rohrleitungsführung für das Wärmeträgermedium entsprechend getroffen ist. Ohne daß in Fig. 3 der Wärmeerzeuger dargestellt wäre, was nichts anderes besagen soll, als daß dieser in beliebiger Weise ausgebildet sein kann, beispielsweise nach Art des Wärmeerzeugers gemäß Fig. 1 oder nach Art des Wärmeerzeugers gemäß Fig. 2, die vorstehend bereits beschrieben sind, ist der Wärmeträgermediums-Ausgang 76 desselben an den einen Strömungseingang des Drei-Wege-Mischers 8 angeschlossen, während an seinen Strömungsausgang der Heizungsvorlauf 14 angeschlossen ist, dessen weitere Leitungsführung die gleiche ist, wie im Zusammenhang mit dem Ausführungsbeispiel gemäß Fig. 2 bereits beschrieben. Der Heizungsrücklauf 16 ist an den Wärmeträgermediums-Eingang 77 des nicht dargestellten Wärmeerzeugers 2 angeschlossen, der seinerseits in bereits beschriebener Weise mit einem Ausdehnungsgefäß 61 für das Wärmeträgermedium in Verbindung steht. Strömungsaufwärts vom Ausdehnungsgefäß 61 ist der Heizungsrücklauf 16 über eine hier als Beimischleitung dienende Leitung 79 an den zweiten Eingang des Drei-Wege-Mischers 8 angeschlossen. In den Heizungsvorlauf 14 ist in bereits im Zusammenhang mit den Ausführungsbeispielen gemäß Fig. 1 und 2 beschriebener Weise eine Umwälzpumpe 6 eingeschaltet. Der Antrieb 10 der hier als Drei-Wege-Mischer 8 ausgebildeten Mehrwege-Mischeinrichtung ist über eine hier mit 18 bezeichnete Steuerleitung mit dem Stellbefehlgeber 62 der Regeleinrichtung 20 verbunden.

Die erfindungsgemäße Regelungseinrichtung 20 weist einzelne Aggregate bzw. Einrichtungen auf, deren impulsleitungsmäßige Verknüpfung vorstehend bereits erläutert worden ist und sich im übrigen aus den Ansprüchen und deren Erläuterung ergibt. Aus diesem Grunde werden die einzelnen Einrichtungen im folgenden lediglich hinsichtlich ihres Aufgabengebietes bzw. Einsatzzweckes beschrieben, da ihre Ausgestaltung dem Fachmann im einzelnen geläufig ist.

Kontinuierlich oder in vorgegebenen Zeitabständen nacheinander, stets jedoch zeitgleich gewonnene Messwerte von Vorlauf- und Rücklauftemperatur des Wärmeträgermediums werden von den Messeinrichtungen 70 und 71 oder 70 und 72 über die Messwertleitungen 80 und 81 bzw. 80 und 82 einer Einrichtung 73 zur Ermittlung der Differenz von Vorlauf- und Rücklauftemperatur und von dieser je nach der vorgesehenen Konzeption ihrer Weiterverarbeitung entweder einer Vergleichseinrichtung 27 zur Bestimmung der Größe und/oder Richtung der Abweichung der Differenz von Vorlauf- und Rücklauftemperatur des Wärmeträgermediums von einer Grenze ihres Sollwert-Bandes oder aber einer Messwertspeichereinrichtung 26 zugeführt. Das Vergleichsnormal für die Vergleichseinrichtung 27 wird in Form eines der oberen Grenze eines Sollwert-Bandes dieser Differenz von Vorlauf- und Rücklauftemperatur entsprechenden Impulses von einem einstellbaren Sollwertgeber 41 und in Form eines der unteren Grenze dieses Sollwert-Bandes entsprechenden Impulses von einem weiteren einstellbaren Sollwertgeber 42 geliefert.

Dargestellt ist ferner, daß die Regeleinrichtung 20 einen Proportionalregler 21 mit einer Einrichtung 31 zur Veränderung seiner Verstärkung, einen Integralregler 22 mit einer Einrichtung 32 zur Veränderung seiner Nachstellzeit und einen Differentialregler 23 mit einer Einrichtung 33 zur Veränderung der Vorhaltzeit desselben aufweisen kann. Dem Integralregler 22 ist dabei ein zeitabhängiges Integrierwerk 36a für die Abweichung der Differenz von Vorlauf- und Rücklauftemperatur über die obere Grenze ihres Sollwert-Bandes hinaus und ein zeitabhängiges Integrierwerk 36b für die Abweichung der Differenz von Vorlauf- und Rücklauftemperatur unter die untere Grenze ihres Sollwert-Bandes zugeordnet. Um die Verstärkung und/oder die Nachstellzeit und/oder die Vorhaltzeit der Regeleinrichtung 20 optimieren zu können, je nachdem wie diese mit Proportional- und/oder Integral- und/oder Differentialregler ausgestattet ist, kann ferner ein zeitabhängiges Integrierwerk 37a bzw. 37b für die Differenz von Vorlauf- und Rücklauftemperatur und jeweils ein weiteres zeitabhängiges Integrierwerk 37c für die der als Bezugsgröße für die jeweilige Abweichung der Differenz von Vorlauf- und Rücklauftemperatur dienenden oberen oder unteren Grenze des Sollwert-Bandes derselben entsprechende Differenz von Vorlauf- und Rücklauftemperatur und eine mit beiden Integrierwerken verbundene Einrichtung 34 zur Bildung des Verhältnisses zeitgleicher Ergebnisse beider Integrierwerke oder dessen Reziprokwertes vorgesehen sein. Soll die Verstärkung und/oder die Nachstellzeit und/oder die Vorhaltzeit der Eliminierung der Abweichung der Differenz von Vorlauf- und Rücklauftemperatur über die obere bzw. unter die untere Grenze ihres Sollwert-Bandes verändert werden, wenn das Verhältnis der beiden Gesamtmaße bzw. zeitlichen Integralwerte einen vorbestimmten Wert überschreitet, so weist für diesen Zweck die Regeleinrichtung 20 ferner ein weiteres zeitabhängiges Integrierwerk 37d für die der Differenz von oberer und unterer Grenze des Sollwert-Bandes der Differenz von Vorlauf- und Rücklauftemperatur entsprechende Vorlauf-Rücklauf-Temperaturdifferenz sowie eine über Impulsleitungen mit beiden Integrierwerken 36a bzw. 36b, 37d verbundene Summiereinrichtung 84 zur Bildung der Summe zeitgleicher Ergebnisse beider Integrierwerke auf, wobei weiterhin eine Einrichtung 35 zur Bildung des Verhältnisses zeitgleicher Ergebnisse des Integrierwerkes 37d und der Summiereinrichtung 84 oder des Reziprokwertes dieses Verhältnisses vorgesehen ist. Für den Fall, daß die Verstärkung und/oder die Nachstellzeit und/oder die Vorhaltzeit der Eliminierung der Abweichung der Differenz von Vorlauf- und Rücklauftemperatur über die obere bzw. unter die untere Grenze ihres Sollwert-Bandes so verändert werden können soll, daß das Verhältnis der beiden Gesamtmaße bzw. Integralwerte einen vorbestimmten Wert nicht überschreitet, weist die Einrichtung 35 zur Bildung des Verhältnisses zeitgleicher Ergebnisse beider Integrierwerke 37a bzw. 37b und 37c oder 36a bzw. 36b und 37d eine einstellbare Impulssperreinrichtung 65 auf, mittels derer die Impulsleitung bzw. Impulsleitungen zu der

0192225

bzw. den Einrichtung(en) 31 bzw. 32 bzw. 33 zur Veränderung der Verstärkung des Proportionalreglers 21 bzw. der Nachstellzeit des Integralreglers 22 bzw. der Vorhaltzeit des Differentialreglers 23 erst bei Vorhandensein eines vorbestimmten Wertes des Verhältnisses zeitgleicher Ergebnisse beider Integrierwerke 37a bzw. 37b und 37c oder 36a bzw. 36b und 37d für Impulsdurchgang freigebbar ist bzw. sind.

Dem Differentialregler 23 zugeordnet weist die Regeleinrichtung 20 ferner eine Einrichtung 38a zur Bestimmung des Maßes der zeitlichen Änderung einer Abweichung der Differenz von Vorlauf- und Rücklauftemperatur über die obere Grenze ihres vorgegebenen Sollwert-Bandes hinaus und eine Einrichtung 38b zur Bestimmung des Maßes der zeitlichen Änderung einer Abweichung der Differenz von Vorlauf- und Rücklauftemperatur unter die untere Grenze ihres vorgegebenen Sollwert-Bandes sowie bevorzugt auch eine Einrichtung 39a zur Bestimmung der zeitlichen Änderung des Maßes der zeitlichen Änderung einer Abweichung der Differenz von Vorlauf- und Rücklauftemperatur über die obere Grenze dieses Sollwert-Bandes hinaus sowie eine Einrichtung 39b zur Bestimmung der zeitlichen Änderung des Maßes der zeitlichen Änderung einer Abweichung der Differenz von Vorlauf- und Rücklauftemperatur unter die untere Grenze dieses Sollwert-Bandes auf. Die Einrichtungen 39a und 39b sind somit Einrichtungen zur Ermittlung der Änderungsbeschleunigung der betreffenden Abweichung des Gesamtmassenstroms von der einen bzw. anderen Grenze seines Sollwert-Bandes, während die Einrichtungen 38a und 38b jeweils Einrichtungen zur Bestimmung der Änderungsgeschwindigkeit dieser Abweichungen sind.

Wie dargestellt, kann ferner zweckmäßig eine Einstelleinrichtung 66 für die Einrichtung 31 zur Veränderung der Verstärkung des Proportionalreglers 21 und die Einrichtung 32 zur Veränderung der Nachstellzeit des Integralreglers 22 und die Einrichtung 33 zur Veränderung der Vorhaltzeit des Differentialreglers 23 oder jeweils eine Einstelleinrichtung 66 für jede der genannten Veränderungseinrichtungen, soweit vorhanden, vorgesehen sein, durch welche die jeweils zugeordnete(n) Veränderungseinrichtung(en) 31 bzw. 32 bzw. 33 im Sinne einer Vermeidung des Überschreitens eines vorbestimmten Wertes des Verhältnisses zeitgleicher Ergebnisse beider Integrierwerke 37a bzw. 37b und 37c oder 36a bzw. 36b und 37d nachstellbar ist bzw. sind.

Weiterhin kann die Regeleinrichtung 20 eine Sollwert-Wahleinrichtung 43 mit einer Detektoreinrichtung 29 zur Ermittlung der zu dem Zeitpunkt, zu dem nach einer Zeitspanne mit praktisch konstantem Wert der Differenz von Vorlauf- und Rücklauftemperatur erstmalig eine Vergrößerung derselben auftritt, im Verlauf der Inbetriebnahme der Vorrichtung 1 bei voller Öffnung aller Drosseleinrichtungen 4a bzw. 4b als minimal mögliche Differenz von Vorlauf- und Rücklauftemperatur auftretenden Differenz von Vorlauf- und Rücklauftemperatur des Wärmeträgermediums, die als Inbetriebnahmetemperaturdifferenz bezeichnet wird, und/oder im Verlauf des Heizbetriebes bei Aufheizen nach einer Abkühlung bei voller Öffnung aller Drosseleinrichtungen 4a bzw. 4b als minimale Differenz von Vorlauf- und Rücklauftemperatur, die als Anfahrtemperaturdifferenz bezeichnet wird, und einer oder je einer einstellbaren Verhältnisgabeeinrichtung 46a, 46b bzw. 46a bzw. 46b als Sollwert-Bildungseinrichtung für die obere bzw. untere Grenze des Sollwert-Bandes der Differenz von Vorlauf- und Rücklauftemperatur sowie jeweils eine mit der zugeordneten Sollwert-Bildungseinrichtung bzw. Verhältnisgabeeinrichtung 46a, 46b bzw. 46a bzw. 46b und andererseits mit dem zugeordneten Sollwertgeber 41 bzw. 42 verbundene Einrichtung 45 zur automatischen Verstellung desselben im Sinne einer Ersteinstellung bzw. einer Veränderung eines eingestellten Wertes der zugeordneten oberen bzw. unteren Grenze des Sollwert-Bandes der Differenz von Vorlauf- und Rücklauftemperatur aufweisen. Dargestellt ist, daß dem Sollwertgeber 41 ebenso wie dem Sollwertgeber 42 jeweils eine eigene automatische Verstelleinrichtung 45 zugeordnet ist.

Ferner kann die Sollwert-Wahleinrichtung 43, wie dargestellt, eine Programmspeichereinrichtung 47a, 47b aufweisen, die eine Verstelleinrichtung 48a für die Sollwert-Bildungseinrichtung 46a für die obere Grenze des Sollwert-Bandes der Differenz von Vorlauf- und Rücklauftemperatur und/oder eine Verstelleinrichtung 48b zur Verstellung der Sollwert-Bildungseinrichtung 46b für die untere Grenze dieses Sollwert-Bandes aufweist. Andererseits kann aber auch eine Programmspeichereinrichtung 47a für die obere Grenze des Sollwert-Bandes und eine eigene Programmspeichereinrichtung 47b für die untere Grenze dieses Sollwert-Bandes vorgesehen sein. In beiden Ausführungsfällen ist durch zumindest eine der Verstelleinrichtungen 48a bzw. 48b entsprechend einer in der bzw. den Programmspeichereinrichtung(en) 47a, 47b bzw. 47a bzw. 47b gespeicherten Abhängigkeit das in der zugeordneten Sollwert-Bildungseinrichtung 46a, 46b bzw. 46a bzw. 46b gebildete Verhältnis in dem Sinne veränderbar, daß einem zunehmenden Wert der oberen oder unteren Grenze des Sollwert-Bandes der Differenz von Vorlauf- und Rücklauftemperatur eine zunehmend größere Differenz zwischen diesen beiden Grenzwerten und/oder ein zunehmend größeres Verhältnis derselben entspricht, die bzw. das im übrigen mit Vorzug eine Proportionalität der Änderung aufweisen kann.

Die Regeleinrichtung 20 kann auch eine Messwertspeichereinrichtung für die als Inbetriebnahmetemperaturdifferenz bezeichnete minimal mögliche Differenz von Vorlauf- und Rücklauftemperatur, deren Funktion auch von der Messwertspeichereinrichtung 26 mitübernommen werden kann, sowie eine Vergleichseinrichtung 116 zur Ermittlung von Abweichungen der minimalen Differenz von Vorlauf- und Rücklauftemperatur (Anfahrtemperaturdifferenz) von der minimal möglichen Differenz von Vorlauf- und Rücklauftemperatur (Inbetriebnahmetemperaturdifferenz) und eine zugeordnete Verhältnisbildungseinrichtung 28 aufweisen, mittels derer die bzw. eine oder beide der Sollwert-bildungseinrichtung(en) 46a, 46b bzw. 46a bzw. 46b bzw. die bzw. eine oder beide der Programmspeichereinrichtung(en) 47a, 47b bzw. 47a bzw. 47b bzw. die bzw. eine oder beide Verstelleinrichtung(en) 48a bzw. 48b bzw. der eine oder beide Sollwertgeber 41 bzw. 42 im Sinne einer Änderung des vorgegebenen Sollwert-Bandes der Differenz von Vorlauf- und Rücklauftemperatur in Abhängigkeit vom Verhältnis von minimaler Differenz von Vorlauf- und Rücklauftemperatur (Anfahrtemperaturdifferenz) zu minimal möglichen Differenz von Vorlauf- und Rücklauftemperatur (Inbetriebnahmetemperaturdifferenz) verstellbar ist.

Weiterhin ist mindestens eine Meldeeinrichtung 59 zur Abgabe einer optisch und/oder akustisch wahrnehmbaren Information vorgesehen, die über eine Grenzdetektoreinrichtung 30, mit der sie über jeweils eine Impulsleitung in Verbindung steht bzw. stehen, immer dann aktivierbar ist bzw. sind, wenn die Grenzdetektoreinrichtung 30 eine Abweichung der ihr von der Vergleichseinrichtung 116 übermittelten Abweichung der minimalen Differenz von Vorlauf- und Rücklauftemperatur (Anfahrtemperaturdifferenz) von der minimal möglichen Differenz von Vorlauf- und Rücklauftemperatur (Inbetriebnahmetemperaturdifferenz) ermittelt, die einen vorbestimmten Wert einer solchen Abweichung über- oder unterschreitet.

Um auch extreme Wärmeverluste an irgendeiner Stelle des Gesamtwärmeverbrauchers 3 ermitteln und melden zu können, die so extreme Leistungsverluste bedingen, daß Abweichungen der Differenz von Vorlauf- und Rücklauftemperatur über die obere Grenze ihres Sollwert-Bandes entweder überhaupt nicht oder zumindest doch während einer vorgegebenen Zeitspanne nicht auftreten, wie das beispielsweise bei offenstehendem Fenster in einer besonderen Kälteperiode der Fall sein kann, wodurch der betreffende Raum stark auskühlt und das System es nicht mehr schafft, die Vorlauf-Rücklauf-Temperaturdifferenz so zu vergößern, daß die obere Grenze ihres Sollwert-Bandes überschritten wird, kann zweckmäßig weiterhin eine Meldeeinrichtung 60 zur Abgabe einer optisch und/oder akustisch wahrnehmbaren Information, die über eine Impulsleitung an eine Auslöseeinrichtung 40 angeschlossen ist, die ihrerseits mit der Vergleichseinrichtung 27 der Regeleinrichtung 20 zur Bestimmung der Abweichung der Differenz von Vorlauf- und Rücklauftemperatur über die obere und/oder unter die untere Grenze ihres Sollwert-Bandes und/oder mit einer Messwert-

0192225

speichereinrichtung 26 verbunden ist, und eine Zeitsteuereinrichtung 51 zur Durchführung einer Mehrzahl zeitgleicher Messungen der Vorlauf- und der Rücklauftemperatur des Wärmeträgermediums durch die Messeinrichtungen 70 und 71 bzw. 70 und 72 bzw. Ermittlungen der Differenz dieser beiden Temperaturen durch eine hierfür vorgesehene Einrichtung 74 oder eine Zeitsteuereinrichtung 52 zur Aufnahme und/oder zum Abruf eines Messwertes oder einer Mehrzahl von von den Messeinrichtungen 70 und 71 bzw. 70 und 72 gelieferten zeitgleichen Messwerten der Vorlauf- und/oder der Rücklauftemperatur bzw. der Differenz zeitgleich gewonnener Messwerte beider durch die Messwertspeichereinrichtung 26 bzw. von dieser jeweils innerhalb einer vorgegebenen Zeitspanne vorgesehen sein, wobei diese Meldeeinrichtung(en) 60 durch die Auslöseeinrichtung 40 immer dann aktivierbar ist bzw. sind, wenn zumindest nach einer vorgegebenen Zeitspanne keine Abweichung der Vorlauf-Rücklauf-Temperaturdifferenz über die obere Grenze ihres Sollwert-Bandes hinaus zu verzeichnen ist.

Um erfindungsgemäß die unterschiedlichen Betriebsarten im Sinne von Komfort- , Normal- , Spar- , Nachtabsenkungs- oder Frostschutzbetrieb fahren zu können, weist die Regeleinrichtung 20 ferner eine Speichereinrichtung 24 auf, in der beim dargestellten Ausführungsbeispiel vier bevorzugte Paarungen von Ober- und Untergrenzen des Sollwert-Bandes der Differenz von Vorlauf- und Rücklauftemperatur gespeichert sind, nämlich für Komfort- , Normal- , Spar- bzw. Nachtabsenkungsbetrieb und letztlich auch für Frostschutzbetrieb. Dieser Speichereinrichtung 24, die im übrigen hinsichtlich ihrer den Ober- und Untergrenzen des Sollwert-Bandes der Differenz von Vorlauf- und Rücklauftemperatur für die einzelnen Betriebsarten entsprechenden gespeicherten Wertepaarungen mit Vorzug einstellbar ausgeführt ist, so daß diese Wertepaarungen entweder vom Herstellerwerk oder aber vom installierenden Heizungsbauer oder aber auch vom Benutzer nach Wunsch eingestellt werden können, ist eine Umschalteinrichtung 25 zugeordnet, mittels derer der Benutzer der Heizungsvorrichtung 1 nunmehr je nach Wunsch bzw. Bedarf die Funktion der Regeleinrichtung 20 so umschalten kann, daß sie statt der einen Betriebsart, beispielsweise Komfortbetrieb, einer anderen gewählten Betriebsart, beispielsweise Spar- bzw. Nachtabsenkungsbetrieb, gerecht wird. Diese Umschaltung kann im übrigen auch zeitgesteuert automatisch erfolgen. Hierfür kann ein Zeitschaltwerk 131 vorgesehen sein, das in geeigneter Weise über Impulsleitungen mit der Speichereinrichtung 24 und/oder der Umschalteinrichtung 25 für diese verbunden ist.

Dargestellt ist auch, daß die Regeleinrichtung eine Zähleinrichtung 54 für die während einer vorgegebenen Zeitspanne, während derer von der Zeitsteuereinrichtung 51 gesteuert eine Mehrzahl von zeitgleichen Messungen der Vorlauf- und der Rücklauftemperatur des Wärmeträgermediums durch die Messeinrichtungen 70 bzw. 71 bzw. 72 durchgeführt bzw. die Differenz dieser beiden Temperaturen gebildet und/oder ein Messwert oder eine Mehrzahl von von den Messeinrichtungen 70 bzw. 71 bzw. 72 gelieferten Messwerten der Differenz von Vorlauf- und Rücklauftemperatur bzw. entsprechende Differenzwerte selbst aufgenommen oder abgerufen werden, etwa aufgetretenen Abweichungen dieser Messwerte über die obere und/oder unter die untere Grenze des vorgegebenen Sollwert-Bandes der Differenz von Vorlauf- und Rücklauftemperatur und eine Programmspeichereinrichtung 53 für eine vorgegebene während dieser vorgegebenen Zeitspanne zulässige Zahl von im Betrieb auftretenden Abweichungen der Differenz von Vorlauf- und Rücklauftemperatur über die obere und/oder unter die untere Grenze ihres Sollwert-Bandes sowie weiterhin eine mit zumindest einem der Sollwertgeber 41 bzw. 42 in Wirkverbindung stehende Einrichtung 44 zur automatischen Veränderung des Sollwert-Bandes bzw. zumindest einer seiner Grenzen in Abhängigkeit von dieser durch die Detektoreinrichtung 29 ermittelten Abweichung der Anzahl aufgetretener Messwertabweichungen von der zulässigen Zahl derselben aufweist. Eine weitere Zähleinrichtung 55 dient der Ermittlung der Zahl der während einer vorgegebenen Zeitspanne im Betrieb auftretenden Veränderungen in Form von Aufnahmen und/oder Beendigungen der Zufuhr von Wärme- bzw. Kälteleistung zum im Heizungsvorlauf 14 befindlichen Wärmeträgermedium und weist ein Zählwerk 56 für diese Veränderungen auf. Auf diese Weise kann auch über die Abweichung der gemessenen Anzahl solcher während einer vorgegebenen Zeitspanne im Betrieb aufgetretener Veränderungen von einer vorgegebenen während dieser vorgegebenen Zeitspanne zulässigen Zahl derselben im Sinne eines Selbstlernvorganges automatisch das Sollwert-Band bzw. zumindest eine seiner Grenzen nachführend verändert werden.

Weiterhin kann zweckmäßig die Regeleinrichtung 20 eine vorzugsweise einstellbare Zeitgabeeinrichtung 58 aufweisen, mittels derer im Sinne der Schaffung einer Toleranzschwelle bei Heizbetrieb eine Abkühlung des Wärmeträgermediums um eine vorbestimmte Zeitspanne beschleunigt und/oder eine Aufheizung des Wärmeträgermediums um eine vorbestimmte Zeitspanne verzögert eingeleitet wird.

Es ist ersichtlich, daß bei der Ausführungsform der Erfindung gemäß Fig. 1 aufgrund von durch die Einrichtung 74 erbrachten Differenzwerten zeitgleich durch die Messeinrichtungen 70, 71 bzw. 70, 72 für die Vorlauf- bzw. die Rücklauftemperatur des Wärmeträgermediums ermittelter Messwerte derselben über die Regeleinrichtung 20 überwacht wird, ob diese Temperaturdifferenzwerte die obere Grenze des über die einstellbaren Sollwertgeber 41 und 42 eingestellten Sollwert-Bandes der Differenz von Vorlauf- und Rücklauftemperatur überschreiten oder aber die untere Grenze dieses Sollwert-Bandes unterschreiten. In beiden Fällen wird durch die Regeleinrichtung 20 die betreffende Abweichung der Differenz von Vorlauf- und Rücklauftemperatur von der betreffenden Grenze ihres Sollwert-Bandes ausgeregelt, indem über den Stellbefehlgeber 62 die in den Heizungsvorlauf 14 eingespeiste Wärmeleistung bei Ausscheren der Differenz von Vorlauf- und Rücklauftemperatur aus ihrem Sollwert-Band über die eine oder die andere Grenze desselben heraus so beeinflußt wird, daß die Differenz von Vorlauf- und Rücklauftemperatur wieder in den Bereich zwischen den beiden Grenzen ihres Sollwert-Bandes zurückgeführt wird. Insoweit unterscheidet sich die Erfindung wesentlich vom Stande der Technik, als bei ihr nämlich nicht etwa eine physikalische Größe auf Konstanz geregelt wird, sondern eine Abweichung derselben in Form der Differenz von Vorlauf- und Rücklauftemperatur des Wärmeträgermediums über eine obere vorgegebene Grenze eines Sollwert-Bandes derselben hinweg oder unter eine untere Grenze derselben auf ihren Verschwindwert ausgeregelt wird, während beliebige Abweichungen von beiden Grenzen des Sollwert-Bandes dieser physikalischen Größe, nämlich hier der Vorlauf-Rücklauf-Temperaturdifferenz, von der Regelung toleriert werden, sofern sich diese wertmäßig nur innerhalb dieses vorgegebenen Sollwert-Bandes bewegt, wobei Änderungen der Differenz von Vorlauf- und Rücklauftemperatur von beliebiger Größe erfindungsgemäß ohne Einfluß auf die Regelung bleiben, sofern sie nicht zu einem Überschreiten der oberen Grenze des vorgegebenen Sollwert-Bandes oder einem Unterschreiten der unteren Grenze desselben führen. Die Vorteile dieser Regelung nach der Erfindung sind eingangs bereits detailliert erläutert worden.

Die Art, wie diese Ausregelung solcher durch Überschreiten der oberen Grenze des Sollwert-Bandes oder Unterschreiten der unteren Grenze desselben bedingten Abweichungen bewerkstelligt wird, hängt von der Art der Heizungsvorrichtung 1 im allgemeinen und der Ausgestaltung der Zuspeisung der Wärmeleistung zum Heizungsvorlauf 14 im besonderen ab. Bei der Ausführungsform der Erfindung gemäß Fig. 1 ist, wie vorstehend bereits erläutert, ein Regelungszugriff vom Stellbefehlgeber 62 der Regeleinrichtung 20 her auf eine nicht näher dargestellte und auch nicht bezeichnete Einrichtung zur Beeinflussung der Zufuhr von Betriebsenergie zum Wärmeerzeuger 2 als Stellglied vorgesehen. Dieses kann als kontinuierlich verstellbare oder aber im Ein-Aus-Betrieb arbeitende Einrichtung beliebiger bekannter Art ausgebildet sein. In jedem Fall erfolgt bei der Ausführungsform der Erfindung gemäß Fig. 1 die Beeinflussung der dem Heizungsvorlauf 14 zugeführten Wärmeleistung zugeführten Wärmeleistung über Einwirkung auf die Zufuhr von Betriebsenergie zum Wärmeerzeuger 2. Ist dieser für kontinuierliche Zuführung von Betriebsenergie während der Betriebsdauer ausgelegt, so erfolgt die Einwirkung auf die dem Heizungsvorlauf 14 zugeführte Wärmeleistung durch Vergrößerung der Zufuhr der Betriebsenergie zum Wärmeerzeuger 2 dann, wenn die Regeleinrichtung 20 ein Unterschreiten der unteren Grenze des Sollwert-Bandes der Differenz von Vorlauf- und Rücklauftemperatur des Wärmeträgermediums ermittelt hat, und durch Verringerung der Zufuhr von Betriebsenergie zum Wärmeerzeuger 2 dann, wenn ein Überschreiten der oberen Grenze des Sollwert-Bandes der Differenz von Vorlauf- und Rücklauftemperatur vorliegt. Handelt es sich hingegen um einen Wärmeerzeuger 2 mit diskontinuierlicher Zuführung seiner Betriebsenergie, dann erfolgt erfindungsgemäß die Einflußnahme auf diese so, daß immer dann, wenn ein Unterschreiten der unteren Grenze des Sollwert-Bandes der Differenz von Vorlauf- und Rücklauftemperatur vorliegt, die Zufuhr von Betriebsenergie zum Wärmeerzeuger 2 aufgenommen und dann, wenn die Regeleinrichtung 20 ein Überschreiten der oberen Grenze des Sollwert-Bandes der Differenz von Vorlauf- und Rücklauftemperatur ermittelt, die Zufuhr von Betriebsenergie zum Wärmeerzeuger 2 unterbrochen bzw. abgeschaltet wird.

Eine andere Betriebsart sieht vor, daß für einen Wärmeerzeuger 2 mit diskontinuierlicher Zufuhr seiner Betriebsenergie bei Überschreiten der oberen Grenze des Sollwert-Bandes das Zeitverhältnis der Ein- zur Ausschaltung der Zufuhr von Betriebsenergie zum Wärme- bzw. Kälteerzeuger erhöht wird und bei Unterschreiten der unteren Grenze selbiges Zeitverhältnis verringert wird. Bei dieser Betriebsart wird also nicht bei Überschreiten des Sollwert-Bandes jeweils die Betriebsenergie-Zufuhr veranlaßt oder unterbunden, sondern anstelle dessen das Zeitverhältnis der Ein- zur Ausschaltung der Zufuhr von Betriebsenergie zum Wärme- bzw. Kälteerzeuger bei Bandüber- oder Unterschreitung verändert.

Die Ausführungsform der Erfindung gemäß Fig. 2 und ebenso auch eine dieser dann, wenn in dieser der strich-punktiert umrandete Bereich III durch die Rohrleitungs- , Mehrwege-Mischeinrichtungs- und Umwälzpumpen-Anordnung gemäß Fig. 3 ersetzt wird, entsprechende Ausführungsform unterscheiden sich von der gemäß Fig. 1 abgesehen von der lediglich beispielhaft dargestellten Anwendung in Verbindung mit einer Zweistrang-Anlage nur darin, daß die Einflußnahme auf die Zuführung der Wärmeleistung zum Heizungsvorlauf 14 hier nicht durch irgendwie geartete Änderung der Zufuhr der Betriebsenergie zum Wärmeerzeuger 2 erfolgt, sondern durch Zugriff auf die hier jeweils vorgesehene Mehrwege-Mischeinrichtung in Form des Vier-Wege-Mischers 7 gemäß Fig. 2 oder des Drei-Wege-Mischers 8 gemäß Fig. 3. Die hier dargestellte Ausführung eines über einen gas- oder ölbefeuerten Brenner 9 mit Betriebsenergie versorgten Heizkessels als Wärmeerzeuger 2, der über die Messeinrichtung 12 für die Temperatur des Wärmeträgermediums im Kessel (Kesselthermometer) und die Einrichtung 11 zur Beeinflussung der Zufuhr von Betriebsenergie zum Brenner, die beispielsweise ein Regulierventil für das als Primärenergie dienende Gas oder Öl umfassen kann, auf eine vorbestimmte Temperatur des Wärmeträgermediums im Kessel (dargestellt durch den Einstellpfeil an der Einrichtung 11) geregelt werden kann, kann ihrerseits für kontinuierliche oder diskontinuierliche Zuführung der Betriebsenergie ausgelegt sein, je nach dem, wie der Brenner 9 ausgebildet ist. Dessen ungeachtet ist bei den Ausführungen der Erfindung gemäß Fig. 2 und Fig. 3 jedoch die Beeinflussung der dem Heizungsvorlauf 14 zugespeisten Wärmeleistung über die jeweilige Mehrwege-Mischeinrichtung 7 bzw. 8 derart vorgesehen, daß durch diese das Verhältnis des in den Heizungsvorlauf 14 eingespeisten heißen Massenstroms des Wärmeträgermediums zum Gesamtmassenstrom und/oder die Stellung des dieses Verhältnis bestimmenden Organs der Mehrwege-Mischeinrichtung 7 bzw. 8 verändert wird, indem vom Stellbefehlgeber 62 der Regeleinrichtung 20 über die jeweilige Steuerleitung 17 bzw. 18 der Verstellantrieb 10 für die betreffende Mehrwege-Mischeinrichtung 7 bzw. 8 entsprechend betätigt wird. Diese Betätigung erfolgt dabei erfindungsgemäß so, daß immer dann, wenn die ermittelte Differenz von Vorlauf- und Rücklauftemperatur zu einer Abweichung unter die untere Grenze ihres Sollwert-Bandes führt, das Verhältnis von dem Heizungsvorlauf 14 zugespeistem Massenstrom zum Gesamtmassenstrom vergrößert und dann, wenn ein Überschreiten der oberen Grenze des Sollwert-Bandes der Differenz von Vorlauf- und Rücklauftemperatur vorliegt, dieses Verhältnis von dem Heizungsvorlauf 14 zugespeistem Massenstrom zum Gesamtmassenstrom verringert wird.

Für die Möglichkeiten der größenmäßigen Änderung dieses Verhältnisses bzw. der zugeordneten Stellung des dieses bestimmenden Organs der betreffenden Mehrwege-Mischeinrichtung 7 bzw. 8 sind vorstehend bereits detaillierte Angaben ebenso gemacht wie für das Maß der Beeinflussung der Zuführung der Betriebsenergie zum Wärmeerzeuger 2 ungeachtet dessen, ob diese kontinuierlich oder diskontinuierlich erfolgt.

Für Ausführungsformen der Erfindung mit Mischer kann eine Möglichkeit für die im Selbstlernverfahren ablaufende automatische Adaptierung der optimalen Bandbreite des Sollwert-Bandes der Differenz von Vorlauf- und Rücklauftemperatur des Wärmeträgermediums dadurch vorgesehen sein, daß die Regeleinrichtung eine oder für die obere und die untere Grenze des Sollwert-Bandes der Differenz von Vorlauf- und Rücklauftemperatur je eine Einrichtung 57 zur Vorgabe von Zeitspannen, die jeweils mit der Einrichtung 73 bzw. 74 zur Ermittlung der Differenz von Vorlauf- und Rücklauftemperatur und/oder mit der Detekoreinrichtung 29 in diese ansteuernder Wirkverbindung steht, und eine oder für die obere und die untere Grenze des Sollwert-Bandes der Differenz von Vorlauf- und Rücklauftemperatur jeweils eine Dividiereinrichtung 67 zur Ermittlung des zeitlichen Gradienten der minimal möglichen Differenz von Vorlauf- und Rücklauftemperatur (Inbetriebnahmetemperaturdifferenz) und/oder der minimalen Differenz von Vorlauf- und Rücklauftemperatur (Anfahrtemperaturdifferenz) aufweist, wobei diese Dividiereinrichtung(en) 67 mit einer Einrichtung 45 zur automatischen Verstellung des bzw. der zugeordneten Sollwertgeber(s) 41 bzw. 42 in Wirkverbindung steht, und zwar dies derart, daß jeweils die Grenze des Sollwert-Bandes der Differenz von Vorlauf- und Rücklauftemperatur, deren Über- bzw. Unterschreiten für eine Veränderung dieses Sollwert-Bandes maßgeblich war, so verändert wird, daß die minimal mögliche Differenz von Vorlauf- und Rücklauftemperatur (Inbetriebnahmetemperaturdifferenz) bzw. die minimale Differenz von Vorlauf- und Rücklauftemperatur (Anfahrtemperaturdifferenz) sowohl bei Heizbetrieb als auch bei Kühlbetrieb für einen größeren ermittelten zeitlichen Gradienten derselben mehr und für einen kleineren ermittelten zeitlichen Gradienten derselben weniger verringert wird. Außerdem kann hier ebenso wie bei allen Ausführungsformen der Erfindung, bei denen die Messwertnahme für Vorlauf- und Rücklauftemperatur des Wärmeträgermediums und/oder die datenlogische Weiterverarbeitung dieser Messwerte zu und über ihre(r) Differenz jeweils im Zuge des Ablaufs vorgegebener Zeitspannen erfolgt, eine Zeitprogrammgabeeinrichtung 75 zur Einleitung solcher zeitgleicher Messungen und/oder zur Aufnahme und/oder Abgabe der entsprechenden Messwerte bzw. der jeweiligen Differenz beider vorgesehen sein, von der die Messeinrichtungen 70 und 71 bzw. 70 und 72 für die Vorlauf- und die Rücklauftemperatur und/oder die Einrichtung 74 zur Ermittlung der Differenz zeitgleicher Messwerte derselben einerseits und der bzw. einer der zugeordnete(n) Sollwertgeber 41 bzw. 42 und/oder eine mit diesem bzw. diesen verbundene Einrichtung 45 zur automatischen Verstellung desselben bzw. derselben ansteuerbar ist bzw. sind. Dabei kann die Zeitprogrammgabeeinrichtung 75 zweckmäßig auch dafür genutzt werden, einen Zeitspannenimpuls abzugeben, über den nach einer Veränderung einer Grenze des Sollwert-Bandes der Differenz von Vorlauf- und Rücklauftemperatur das Maß des Über- bzw. Unterschreitens der hierfür maßgeblichen Grenze erst nach einer vorbestimmten - gegebenenfalls entsprechend kurz gewählten - Zeitspanne gemessen und als Bezugsgröße für das Maß der Veränderung dieser maßgeblichen Grenze und/oder der anderen Grenze des Sollwert-Bandes herangezogen wird.

Es ist ersichtlich, daß eine Ausführung eines Wärmeerzeugers 2 als brennerbefeuerter Heizkessel auch in Fig. 1 zur Anwendung kommen kann, ebenso wie gleichermaßen eine Ausführung eines Wärmeerzeugers 2, wie diese in Verbindung mit Fig. 1 beschrieben ist, bei der Vorrichtung 1 gemäß Fig. 2 Verwendung finden kann. Gleichermaßen sind auch die Ausführungen gemäß Fig. 2 und Fig. 3 in Verbindung mit Einstrang-Anlagen gemäß Fig. 1 im Rahmen der Erfindung mit allen Vorteilen derselben verwendbar. Die dargestellten Ausführungen sollen nur beispielhaft Möglichkeiten aufzeigen, die wichtigsten Varianten der Erfindung zu verwirklichen, ohne dabei erschöpfend alle Möglichkeiten von Kombinationen von Wärmeerzeuger-Ausführungen, Arten der Veränderung der dem Heizungsvorlauf 14 zuzuspeisenden Wärmeleistung und/oder Ausführungen der Regeleinrichtung insbesondere bezüglich deren Vervollkommnung im Hinblick auf die Vielzahl der nach der Erfindung möglichen Selbstlernvorgänge bildlich darzustellen. Aus dem gleichen Grunde ist auch auf die Darstellung der impulsleitungsmäßigen Verknüpfung der einzelnen Aggregate bzw. Einrichtungen der Regeleinrichtung 20 verzichtet worden, weil diese bereits einleitend und in den betreffenden Ansprüchen detailliert erläutert sind und im Bedarfsfall der Fachmann andersartige impulsleitungsmäßige Verknüpfungen in Kenntnis der beschriebenen Verknüpfungen ohne erfinderisches Zutun einfach ermitteln kann.

Während in Fig. 2 gleichfalls lediglich beispielhaft eine Regeleinrichtung 20 dargestellt ist, die nicht in Funktionsgruppen aufgeteilt ist, obgleich diese mit 20a und 20b als solche bezeichnet sind, ist in Fig. 1 schematisch dargestellt, was damit gemeint ist, wenn gemäß einem beschriebenen Erfindungsgedanken die Regeleinrichtung 20 in eine in der Nähe des Wärmeerzeugers 2 angeordnete Funktionsgruppe 20a und eine in bequemer Zugriffsnähe des Benutzers angeordnete Funktionsgruppe 20b gegliedert ist. Dabei umfaßt die Funktionsgruppe 20a die Einrichtungen für diejenigen Funktionen, die während der Heizperiode in der Regel nicht oder nur selten verändert werden, während die in bequemer Nähe des Benutzers angeordnete Funktionsgruppe 20b die Einrichtungen für die vom Benutzer einstellbaren Funktionen umfaßt und vorzugsweise als Raumschaltstation ausgebildet ist.

In Fig. 2 ist im übrigen auch noch lediglich beispielsweise gezeigt, daß die über den Temperaturfühler 70 gemessene Vorlauftemperatur mittels entsprechender datenlogischer Be- bzw. Verarbeitung in der Regeleinrichtung 20 beispielsweise als Temperaturbegrenzung für die Vorlauftemperatur der Anlage benutzt werden kann, indem über eine Steuerleitung 19 von der Regeleinrichtung 20 ein entsprechender Informationsimpuls auf die Einrichtung 11 zur Beeinflussung der Zufuhr von Betriebsenergie zum Wärmeerzeuger 2 gegeben wird, so daß unabhängig von dem eingestellten Sollwert für die Wärmeträgermediumstemperatur (z. B. Kesselwassertemperatur) im Wärmeerzeuger 2 für die Regelung derselben der in Fig. 2 dargestellte Brenner 9 bzw. eine beliebige andere Einrichtung zur Zuführung von Betriebsenergie zum Wärmeerzeuger 2 so gefahren wird, daß ein vorgegebener Grenzwert für die Vorlauftemperatur nicht überschritten werden kann. Dabei ist diese in Fig. 2 dargestellte Ausführung weder von der Art der Ausgestaltung bzw. der Funktionsweise des Wärmeerzeugers 2 noch der Beeinflussung der Zufuhr von Wärmeleistung zum Heizungsvorlauf 14 noch der Ausführung der Heizungsvorrichtung als Einstrang- oder Zweistrang-System noch der Regeleinrichtung bezüglich deren mehr oder weniger weitgehender Vervollkommung im Hinblick auf Selbstlernvermögen abhängig.

In Fig. 1 und 2 ist ferner dargestellt, daß in dem Wärmeträgermediumsvorlauf 14 vorzugsweise stromabwärts von der Umwälzpumpe 6 eine Messeinrichtung 5 für den Gesamtmassenstrom angeordnet sein kann, die über eine Messwertleitung 15 mit der Regeleinrichtung 20 in Verbindung steht. Diese Regeleinrichtung wiederum steht über eine Steuerleitung 19 mit dem nicht im einzelnen dargestellten und auch nicht näher bezeichneten Stellglied des Wärmeerzeugers 2 in Verbindung, das je nach Ausbildung desselben das Brennstoffregulierungsventil eines Brenners bei flammenbefeuertem Kessel oder das Gas- bzw. Ölregulierungsventil für die Zuführung von Treibstoff zum Dieselmotor oder Vergaser eines verbrennungsmotorbetriebenen Kompressors einer Kompressionswärmepumpe oder aber das Drosselventil der heißes Primärwärmeträgermedium führenden Primärleitung eines Wärmetauschers einer Fernwärme-Übergabestation oder eine Rauchgas-By-pass-Klappe eines als Rauchgaskühler eingesetzten Wärmetauschers oder dergleichen sein kann. Der Messwert des Gesamtmassenstroms bietet nämlich zusammen mit dem in vorstehend bereits beschriebener Weise ermittelten Wert der Differenz zeitgleich gewonnener Messwerte von Vorlauf- und Rücklauftemperatur dann, wenn - wie in der Regeleinrichtung 20 gemäß Fig. 2 bzw. deren Funktionsgruppe 20a gemäß Fig. 1 dargestellt - eine Vergleichseinrichtung 73 zur Bestimmung der Differenz von Vorlauf- und Rücklauftemperatur des Wärmeträgermediums und eine Multipliziereinrichtung 50 vorgesehen ist, die ihrerseits kontinuierlich oder in vorgegebenen Zeitabständen Multiplikationsergebnisse des Messwertes des Gesamtmassenstroms und der kontinuierlich und damit auch zeitgleich bestimmten Differenz von Vorlauf- und Rücklauftemperatur des Wärmeträgermediums oder aber eine Folge von Multiplikationsergebnissen aus zeitgleich gewonnenen Messwerten des Gesamtmassenstroms und der Differenz auch ihrerseits entsprechend zeitgleich gewonnener Messwerte von Vorlauf- und Rücklauftemperatur des Wärmeträgermediums erbringt, die Möglichkeit für eine weitere Vervollkommnung der Betriebsweise der Erfindung. Diese Ergebnisse der Multiplikationsoperationen der Multipliziereinrichtung 50 stellen nämlich ein Abbild der in den Heizungsvorlauf 14 eingespeisten Wärmeleistung dar, die auch als Verbraucherleistung zu bezeichnen ist. Um dem Benutzer der Anlage nach der Erfindung den tatsächlich getätigten Wärmeenergieverbrauch bzw. die effektive Verbraucherleistung wahrnehmbar zu machen, kann eine Einrichtung 69 zur optischen und/oder akustischen Wahrnehmbarmachung des Wertes dieser Verbraucherleistung oder aber auch nur eines einen vorbestimmten Betrag derselben überschreitenden Wertes derselben vorgesehen sein. In manchen Fällen kann es alternativ oder zusätzlich hierzu zweckmäßig sein, wenn dem Benutzer der Anlage die Differenz zwischen Vorlauf- und Rücklauftemperatur des Wärmeträgermediums betragsmäßig wahrnehmbar gemacht wird. Hierfür kann eine entsprechende Einrichtung 68 zur optischen und/oder akustischen Wahrnehmbarmachung vorgesehen sein.

Im übrigen ist im Verband der Regeleinrichtung 20 sowohl in Fig. 1 als auch in Fig. 2 jeweils eine Einschalteinrichtung 130 dargestellt, mittels derer entweder die gesamte Heizungsvorrichtung 1 oder aber nur deren Regeleinrichtung 20 vom Benutzer derselben funktionsmäßig in Betrieb genommen werden bzw. als ganze wieder ausgeschaltet werden kann.

Im vorstehenden ist die Erfindung zwar an dem Beispiel einer Heizungsvorrichtung beschrieben worden, jedoch gelten die Erläuterungen zu dieser auch für eine Kühlvorrichtung entsprechend. Es kann hierzu auf die detaillierten Darlegungen in Verbindung mit den jeweiligen Ansprüchen verwiesen werden. Die in den Zeichnungen dargestellten Ausführungsbeispiele gelten unverändert auch für eine solche Kühlvorrichtung 1, nur ist dann mit der Bezugsziffer 2 ein Kälteerzeuger gemeint, der in im Zusammenhang mit der beschriebenen Heizungsvorrichtung erläuterter Weise über den Kühlmittelvorlauf 14 an die Kühleinrichtungen 3a, 3b angeschlossen ist, von denen das Wärmeträgermedium über den Kühlmittelrücklauf 16 zurück zum Kälteerzeuger 2 gelangt. Dieser kann beispielsweise als gas- oder dieselmotorisch betriebene Kompressionskältemaschine oder aber als gas- oder ölbefeuerte Sorptionskältemaschine oder aber auch als Übergabewärmetauscher ausgebildet sein, dessen Sekundärseite vom Wärmeträgermedium durchströmt wird, während seine Primärseite mit Kältemittel eines an diese angeschlossenen Kältemittelkreislaufes gespeist wird. Alle übrigen Einzelheiten der in den Zeichnungen dargestellten Ausführungsbeispiele bedürfen keiner zusätzlichen Erläuterungen, sofern man berücksichtigt, daß sich Unterschiede in der Betriebsweise im Vergleich zu Heizbetrieb ergeben können. Lediglich als Beispiel hierfür sei der Betrieb mit Toleranzschwelle genannt, für den bei einer Kühleinrichtung die Zeitgabeeinrichtung 58 der Regeleinrichtung 20 bzw. 20a, 20b so ausgebildet ist, daß mittels ihrer bei Kühlbetrieb eine Erwärmung um eine vorbestimmte Zeitspanne beschleunigt und/oder eine Abkühlung um eine vorbestimmte Zeitspanne verzögert einleitbar ist. Im übrigen sind die Entsprechungen der einzelnen Verfahrensschritte ebenso wie der diese betreffenden vorrichtungsseitigen Ausgestaltungen zwischen Heizbetrieb und Kühlbetrieb den Ansprüchen bzw. deren Erläuterung im vorstehenden zu entnehmen. Insbesondere sind dort auch die überragenden Vorteile der Erfindung im Zusammenhang mit dem Kühlen im Vergleich zum Heizen ausführlich dargelegt.

Obgleich die Erfindung vorstehend lediglich anhand einiger bevorzugter Ausführungsbeispiele nur beispielhaft erläutert worden ist, ist sie nicht auf diese beschränkt, vielmehr stehen dem Fachmann vielfältige Möglichkeiten offen, sie an die konstruktiven, fertigungstechnischen oder materialmäßigen Gegebenheiten im Herstellerwerk und/oder an die jeweiligen Forderungen des einzelnen Einsatzfalls sowohl planungsmäßiger als auch montagetechnischer Art durch andere Kombination ihrer Merkmale oder deren Austausch gegen gleichwirkende Mittel anzupassen, ohne dadurch den Rahmen der Erfindung zu verlassen.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des Wärme- bzw. Kälteerzeugers mit gerätemäßig gleichen Mitteln mit den entsprechenden Vorteilen bezüglich Lagerhaltung, Gestehungspreis, Montageaufwand etc. zu betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetreiber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs- bzw. -durchgangswerten durchzuführen, Himmelsrichtungsbetrachtungen anzu-

0192225

stellen, Klimazonen zu berücksichtigen und dergleichen. Im übrigen ist darauf zu verweisen, daß, wenn vorstehend oder nachfolgend von Kesseln als Wärmeerzeugern gesprochen wird, dieser Begriff auch als gas- oder ölbefeuerte Durchlauferhitzer arbeitende Geräte, sogenannte Thermen oder Geyser, mitumfaßt, indem diese sich von den gemeinhin als Kessel bezeichneten Geräten grundsätzlich nur dadurch unterscheiden, daß sie mit praktisch keiner oder allenfalls äußerst geringer Vorlage an Wärmeträgermedium arbeiten und entsprechend praktisch keine bzw. keine nennenswerte Wärmespeicherkapazität aufweisen.

Einer der gravierendsten Vorteile ist dabei der, daß durch die Erfindung erstmalig eine Möglichkeit gefunden wurde, mit einer einzigen Regelungsvorrichtung sowohl kontinuierlich als auch im Ein-Aus-Betrieb mit Wärme- bzw. Kälteenergie versorgte Heizungs- bzw. Kühlanlagen einwandfrei betreiben zu können und zwar dies auch noch ungeachtet der Art des Wärme- bzw. Kälteerzeugers. Erst durch die erfindungsgemäße Maßnahme eines Sollwert-Bandes für die Differenz von Vorlauf- und Rücklauftemperatur des Wärmeträgermediums kann der Notwendigkeit zweier Schaltpunkte für diskontinuierlich arbeitende Anlagen betriebstechnisch zufriedenstellend genüge getan werden. Gleichzeitig ergeben sich aber nicht nur für solchen diskontinuierlichen Betrieb, sondern auch für kontinuierlich arbeitende Anlagen weitere bisher von der Fachwelt nicht für erreichbar gehaltene Vorteile.

Außer diesen Vorteilen hinsichtlich der Universalität der Einsetzbarkeit der erfindungsgemäßen Regelung sowohl bezüglich ihres verfahrensmäßigen als auch ihres vorrichtungsmäßigen Aspektes für Einrohr- oder Zweirohr-Heizungen bzw. -Kühlungen mit oder ohne Mehrwege-Mischer, der im übrigen seinerseits wieder kontinuierlich oder diskontinuierlich arbeiten kann, bringt die Erfindung ersichtlich auch ökonomische Vorteile insbesondere bezüglich Vereinfachung von Produktion, Lagerhaltung, Distribution, niedrigen Gestehungspreises, Vereinfachung der Montage, Erweiterung des technischen Einsatzfeldes und der Nachrüstbarkeit vorhandener Anlagen mit sich. Es hat sich nämlich überraschend herausgestellt, daß die Erfindung keineswegs nur bezüglich neuerstellter Heizungs- bzw. Kühlanlagen zweckmäßig einsetzbar ist, sondern aufgrund ihrer einfachen vorrichtungsmäßigen Komponenten und deren Verknüpfung miteinander auch bereits bestehende und im Betrieb befindliche Heizungs- bzw. Kühlanlagen höchst einfach, schnell und bequem und dabei doch besonders wirtschaftlich im Sinne der Erfindung nachgerüstet werden können, indem häufig nicht einmal die gesamte etwa vorhandene Regelungs- bzw. Steuerungsvorrichtung bekannter Art gegen eine Regelungsvorrichtung nach der Erfindung ausgetauscht zu werden braucht, sondern individuell nur eine oder nur einzelne Komponente(n) in geeigneter erfindungsgemäßer Weise zugefügt zu werden braucht bzw. brauchen. Hierbei wirkt sich im übrigen zusätzlich besonders vorteilhaft aus, daß die Erfindung auch im Nachrüstungsfalle bestehender Heizungs- bzw. Kühlanlagen keinerlei hydraulischen Eingriff in das das Wärmeträgermedium führende Leitungsnetz erfordert, zumal die Einrichtungen zur Messung der erfindungsgemäß benötigten Temperaturwerte als Temperaturfühler ausgeführt werden können, die einfach, schnell und bequem und dabei besonders kostengünstig über entsprechende Bandagen an der betreffenden Vorlauf- bzw. Rücklaufleitung in Arbeitsstellung gebracht werden können.

Weitere technische Vorteile sind bei Einsatz der Erfindung darin zu sehen, daß bereits bei der Neuplanung und Ersterstellung einer Heizungs- oder Kühlanlage dafür Sorge getragen werden kann, daß etwa beabsichtigte Erweiterungen oder aus irgendwelchen Gründen vorgesehene zukünftige Umrüstungen, wie beispielsweise nachträglicher Einbau einer Wärmepumpe oder Kältemaschine zusätzlich zu einem ursprünglich vorgesehenen Wärme- bzw. Kälteerzeuger anderer Art, oder aber die Nachrüstung einer Klimaanlage zusätzlich zu einer vorhandenen Heizungsanlage oder umgekehrt einer Heizungsanlage zusätzlich zur einer vorhandenen Kühlanlage keine arbeits- und schmutzmäßigen Belastungen durch Umrüstungsarbeiten bezüglich Kabelverlegungen etc. mehr mit sich bringen.

Die sich durch Einsatz der Erfindung ferner ergebenden betriebstechnischen Vorteile gegenüber den bekannten nicht außentemperatur- bzw. witterungsgeführten Steuerungen insbesondere im Hinblick auf Energieeinsparungen sind bereits vorstehend ausführlich erläutert. Diese werden durch das erfindungsgemäße Konzept eines Sollwert-Bandes im Gegensatz zu einem wie auch immer gearteten bzw. gewonnenen Sollwert als Führungsgröße bedingt, da dieses für jede Art von Ausführung einer Heizungs- bzw. Kühlanlage und ungeachtet der Art des Betriebes derselben (kontinuierlich oder diskontinuierlich) erstmals die Möglichkeit mit sich bringt, ohne Beeinträchtigung der Funktionsweise der Regelung insbesondere aus dem Gesichtspunkt ihrer Stabilität Energie einsparen zu können, indem nämlich das gesamte Regelsystem mit Ausnahme der Beobachtung durch Entnahme von Meßwerten der Vorlauf- und der Rücklauftemperatur so lange sich selbst überlassen bleiben kann, wie die aus dem Tätigsein der automatisch wirkenden Drosseleinrichtungen als lokale Regler für die jeweilige Raumtemperatur resultierenden Änderungen der Differenz von Vorlauf- und Rücklauftemperatur des Wärmeträgermediums das erfindungsgemäße Sollwert-Band nicht verlassen und erst dann, wenn ein solcher Fall einmal eintreten sollte, ein Regeleingriff auf nicht etwa Konstanthaltung eines Sollwertes der Differenz von Vorlauf- und Rücklauftemperatur des Wärmeträgermediums, sondern auf Rückführung derselben in den durch ihr erfindungsgemäß vorgegebenes Sollwert-Band bestimmten Bereich herbeigeführt wird.

Noch wesentlich gravierender hinsichtlich mit der Erfindung vergleichsweise erzielbarer Vorteile gestalten sich die Verhältnisse bei im Ein-Aus-Betrieb arbeitenden Regelsystemen. Es ist ersichtlich, daß hier in ganz besonderem Maße durch die Erfindung die Zahl der Ein-Aus-Schaltspiele verringert wird, was vorteilhaft dazu führt, daß die Zahl der Kaltstarts und damit das Maß der Rauchgasverschmutzung bei mit fossilen Brennstoffen betriebenen Wärme- bzw. Kälteerzeugern nicht unwesentlich verringert und damit eine bessere Energieausbeute mit entsprechend höherem Wirkungsgrad erzielt werden kann. Gleiches gilt auch für mit elektrischer Energie betriebene Wärme- bzw. Kälteerzeuger, bei denen jede Einschaltspitze der elektrischen Energie sich energiewirkungsgradmäßig ungünstig bemerkbar macht, wenn auch hier eine Umweltverschmutzung durch erhöhte Rauchgasimmissionen nicht in Betracht kommt. In sämtlichen Fällen jedoch erbringt die Erfindung weiterhin eine Schonung der gesamten Heizungs- bzw. Kühlanlage, da diese nicht durch einen einzigen Sollwert für die Differenz von Vorlauf- und Rücklauftemperatur des Wärmeträgermediums oder eine empirisch bzw. rein heuristisch abgeleitete Formel, die wie auch immer sich im Sinne der Erfindung stets als praktisch sinnlos vorgegeben erweisen muß, belastet und zum ständigen Schalten gebracht wird.

Insgesamt gesehen kann man ungeachtet, ob es sich um eine kontinuierlich gefahrene oder aber eine im Ein-Aus-Betrieb arbeitende Heizungs- bzw. Kühlanlage handelt, mit der Erfindung erstmals eine optimale Anpassung zwischen Energieeinsparung, Umweltschutz und Anlagenschonung verwirklichen. Dabei ist hervorzuheben, daß sich die vorstehend beschriebenen Vorteile in besonderem Maße bei Kühlanlagen einstellen, weil hier ungünstig gewählte Regelungs- bzw. Steuerungsarten beispielsweise herkömmlicher Art oder schlecht eingestellte Regel- bzw. Steuervorrichtungen bereits aus prinzipiellen Gründen gegenüber Heizungsanlagen einen höheren Energieverbrauch und damit einen schlechteren Energiewirtschaftswirkungsgrad zur Folge haben.

Vorteilhaft ist weiterhin, daß die Erfindung mit kostengünstigen und wartungsarmen Umwälzpumpen mit besonders flacher Druck-Fördermengen-Kennlinie, die erfahrungsgemäß eine vergleichsweise extrem hohe Lebensdauererwartung zu haben pflegen, auskommt und diese sogar zu bevorzugen sind, was nicht nur dem Gestehungspreis der gesamten Heizungs- bzw. Kühlanlage, sondern auch den Betriebskosten derselben vorteilhaft zugute kommt. Denn einerseits stellen die Energiekosten für den Betrieb der meist im Dauerlauf arbeitenden Umwälzpumpe einen nicht unwesentlichen Anteil der Gesamtbetriebskosten der Anlage dar und andererseits pflegt der Energieverbrauch einer Umwälzpumpe mit flacher Druck-Fördermengen-Kennlinie erheblich geringer zu sein als der einer Umwälzpumpe vergleichbarer Leistung mit steiler Kennlinie. Überraschend hat sich dabei herausgestellt, daß man solche Umwälzpumpen mit geringer spezifischer Leistung auch bei Heizungs- bzw. Kühlanlagen-Installationen zudem noch mit besonders gutem Erfolg einsetzen kann, bei denen man bei voller Öffnung aller automatisch wirkenden Drosseleinrichtungen eine vergleichsweise geringe Spreizung der Temperatur zwischen Vor- und Rücklauf erreicht und diese bei Drosselung dieser Raumtemperatur-Regelungseinrichtungen vergleichsweise sehr groß wird, was eine hervorragende Regelbandbreite mit entsprechender Verbesserung der gesamten Regelungsgüte der Regelungsvorrichtung bedeutet.

Insgesamt gesehen erbringt die Erfindung ersichtlich aus vielfältigen zu einem zweckmäßigen Zusammenspiel kombinierbaren Gründen eine bisher in der Fachwelt für ungangbar gehaltene Möglichkeit der Energieeinsparung und entsprechend wirtschaftlich zu führender Betreibung von Heizungs- bzw. Kühlanlagen. Dabei wirkt sich besonders vorteilhaft aus, daß eine hersteller- bzw. werkseitige Einstellung der einen oder beider Grenze(n) des die Führungsgröße für die Regelung nach der Erfindung abgebenden Sollwert-Bandes der Differenz von Vorlauf- bzw. Rücklauftemperatur des Wärmeträgermediums im Sinne etwa einer durchschnittlichen optimalen Vorgabe der Führungsgröße als erste sinnvolle Einstellung getätigt werden kann, ohne daß der Betreiber der mit der Regelungsvorrichtung nach der Erfindung ausgestatteten Heizungs- bzw. Kühlanlage daran gehindert wäre, je nach eigenem Bedürfnis sein eigenes Sollwert-Band als Führungsgröße zu

0192225

wählen, wodurch er nicht nur auf lediglich Sparen verwiesen ist, sondern auch ungewöhnlichen Belastungsfällen, wie beispielsweise bei Heizbetrieb einer warmen Nordwand und einer kalten Südwand seines Hauses, wirkungsvoll begegnen kann, da ihm erstmalig eine völlige Unabhängigkeit der Regelung bzw. der mit einer Regelungsvorrichtung nach der Erfindung ausgerüsteten Heizungs- bzw. Kühlanlage von irgendwelchen Randbedingungen zur Verfügung gestellt wird.

# COHAUSZ & FLORACK

**PATENTANWALTSBÜRO**

SCHUMANNSTR. 97 D-4000 DÜSSELDORF 1

Telefon (02 11) 68 33 46          Telex: 08586513 cop d

**0192225**

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER

- 153 -

13.02.1986
45256EP

## A n s p r ü c h e

1. Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und die von den Thermostatventilen beeinflußte Differenz der Vor- und Rücklauftemperatur im Gesamtmassenstrom ermittelt und entsprechend die Wärme- oder Kältequelle gesteuert wird, dadurch gekennzeichnet, daß für die Differenz der Vor- und Rücklauftemperatur ein Sollwert-Band angelegt ist, innerhalb dessen die zulässigen Werte der Temperaturdifferenz liegen, daß das gesamte Sollwert-Band mit der Ober- und Untergrenze entsprechend den Anforderungen verschieblich ist und daß in den Bereichen außerhalb des Sollwert-Bandes der jeweilige Ist-Wert zum Soll-Wert hin regelbar ist.

2. Verfahren nach Anspruch 1, dadurch gekennzeichnet, daß eine Abweichung der Differenz von Vorlauf- und Rücklauftemperatur des Wärmeträgermediums über die obere Grenze des vorgegebenen Sollwert-Bandes hinaus durch Verringerung und eine Abweichung dieser Temperaturdifferenz unter die untere Grenze des vorgegebenen Sollwert-Bandes durch Vergrößerung der in den Heizungs- bzw. Kühlmittelvorlauf eingespeisten Wärme- bzw. Kälteleistung eliminiert wird.

3. Verfahren nach Anspruch 1 oder 2, dadurch gekennzeichnet, daß bei Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger als kleinerer Sollwert des Sollwert-Bandes der Temperaturdifferenz eine Temperaturdifferenz gewählt wird, die für Heizbetrieb einem sich nach einer vorgegebenen Zeitspanne nach Ausschaltung der Zufuhr von Betriebsenergie zum Wärme- bzw. Kälteerzeuger einstellenden Maß unter einem vorgegebenen Referenzwert für die Rücklauftemperatur des Wärmeträgermediums und für Kühlbetrieb einem sich nach einer vorgegebenen Zeitspanne nach Ausschaltung der Zufuhr von Betriebsenergie zum Wärme- bzw. Kälteerzeuger einstellenden Maß über einem vorgegebenen Referenzwert für die Vorlauftemperatur des Wärmeträgermediums (Negativ-Temperaturdifferenz) entspricht.

4. Verfahren nach Anspruch 3, dadurch gekennzeichnet, daß eine Abweichung der Differenz von Vorlauf- und Rücklauftemperatur des Wärmeträgermediums über die obere Grenze des vorgegebenen Sollwert-Bandes hinaus durch Verringerung und eine Abweichung dieser Temperaturdifferenz (Negativ-Temperaturdifferenz) unter die untere Grenze des vorgegebenen Sollwert-Bandes durch Vergrößerung der in den Heizungs- bzw. Kühlmittelvorlauf eingespeisten Wärme- bzw. Kälteleistung eliminiert wird.

5. Verfahren nach Anspruch 3 oder 4, <u>dadurch gekennzeichnet, daß</u> als Referenztemperatur für Heizbetrieb die Rücklauftemperatur und für Kühlbetrieb die Vorlauftemperatur des Wärmeträgermediums zu dem Zeitpunkt gewählt wird, zu dem nach Ausschaltung der Zufuhr von Betriebsenergie zum Wärme- bzw. Kälteerzeuger die Differenz von Vorlauf- und Rücklauftemperatur des Wärmeträgermediums praktisch ihren Verschwindwert erreicht.

6. Verfahren nach einem der vorhergehenden Ansprüche, <u>dadurch gekennzeichnet, daß</u> eine Abweichung der Differenz von Vorlauf- und Rücklauftemperatur des Wärmeträgermediums über die obere Grenze des vorgegebenen Sollwert-Bandes hinaus durch Verringerung der in den Heizungs- bzw. Kühlmittelvorlauf eingespeisten Wärme- bzw. Kälteleistung entsprechend dem Maß der Abweichung und eine Abweichung der Differenz von Vorlauf- und Rücklauftemperatur des Wärmeträgermediums unter die untere Grenze des vorgegebenen Sollwert-Bandes durch Vergrößerung der in den Heizungs- bzw. Kühlmittelvorlauf eingespeisten Wärme- bzw. Kälteleistung entsprechend dem Maß dieser Abweichung eliminiert wird.

7. Verfahren nach Anspruch 6, <u>dadurch gekennzeichnet, daß</u> das Gesamtmaß der Abweichung der Differenz von Vorlauf- und Rücklauftemperatur des Wärmeträgermediums über die obere Grenze des vorgegebenen Sollwert-Bandes hinaus im Verlauf der Zeit ermittelt und eine Abweichung dieser Temperaturdifferenz über die obere Grenze dieses Sollwert-Bandes hinaus durch Verringerung der in den Heizungs- bzw. Kühlmittelvorlauf eingespeisten Wärme- bzw. Kälteleistung entsprechend diesem Gesamtmaß der Abweichung dieser Temperaturdifferenz eliminiert und/oder das Gesamtmaß der Abweichung der Differenz von Vorlauf- und Rücklauftemperatur des Wärmeträgermediums unter die untere Grenze des vorgegebenen Soll- wert-Bandes im Verlauf der Zeit ermittelt und eine Abweichung dieser Temperaturdifferenz unter die untere Grenze dieses Soll-wert-Bandes durch Vergrößerung der in den Heizungs- bzw. Kühlmittelvorlauf eingespeisten Wärme- bzw. Kälteleistung entsprechend diesem Gesamtmaß der Abweichung dieser Temperaturdifferenz eliminiert wird.

8. Verfahren nach Anspruch 6 oder 7, dadurch gekennzeichnet, daß das Maß der zeitlichen Änderung einer Abweichung der Differenz von Vorlauf- und Rücklauftemperatur des Wärmeträgermediums über die obere Grenze des vorgegebenen Sollwert-Bandes hinaus und/oder der zeitlichen Änderung dieses Maßes zeitlicher Änderung der Abweichung dieser Temperaturdifferenz ermittelt und diese Abweichung dieser Temperaturdifferenz durch Verringerung der in den Heizungs- bzw. Kühlmittelvorlauf eingespeisten Wärme- bzw. Kälteleistung entsprechend diesem Maß der zeitlichen Änderung der Abweichung dieser Temperaturdifferenz bzw. diesem Maß der zeitlichen Änderung dieses Maßes zeitlicher Änderung der Abweichung dieser Temperaturdifferenz eliminiert und/oder das Maß der zeitlichen Änderung einer Abweichung der Differenz von Vorlauf- und Rücklauftemperatur des Wärmeträgermediums unter die untere Grenze des vorgegebenen Sollwert-Bandes und/oder der zeitlichen Änderung dieses Maßes zeitlicher Änderung der Abweichung dieser Temperaturdifferenz ermittelt und diese Abweichung dieser Temperaturdifferenz durch Vergrößerung der in den Heizungs- bzw. Kühlmittelvorlauf eingespeisten Wärme- bzw. Kälteleistung entsprechend diesem Maß der zeitlichen Änderung der Abweichung dieser Temperaturdifferenz bzw. diesem Maß der zeitlichen Änderung dieses Maßes zeitlicher Änderung der Abweichung dieser Temperaturdifferenz eliminiert wird.

9. Verfahren nach Anspruch 7 oder 8, <u>dadurch gekennzeichnet, daß</u> das Gesamtmaß der Differenz von Vorlauf- und Rücklauftemperatur des Wärmeträgermediums und das Gesamtmaß der der oberen oder der der unteren Grenze des Sollwert-Bandes derselben entsprechenden Differenz von Vorlauf- und Rücklauftemperatur des Wärmeträgermediums im Verlauf der Zeit ermittelt und als Maß für die Optimierung der Verstärkung und/oder der Nachstellzeit und/oder der Vorhaltzeit der Eliminierung der Abweichung der Differenz von Vorlauf- und Rücklauftemperatur des Wärmeträgermediums über die obere bzw. unter die untere Grenze ihres Sollwert-Bandes das Verhältnis dieser beiden Gesamtmaße oder dessen Reziprokwert gewählt wird.

10. Verfahren nach einem der Ansprüche 7 bis 9, <u>dadurch gekennzeichnet, daß</u> das Gesamtmaß der Abweichung der Differenz von Vorlauf- und Rücklauftemperatur des Wärmeträgermediums über die obere oder unter die untere Grenze ihres vorgegebenen Sollwert-Bandes und das Gesamtmaß der der Differenz von oberer und unterer Grenze des Sollwert-Bandes entsprechenden Differenz von Vorlauf- und Rücklauftemperatur des Wärmeträgermediums im Verlauf der Zeit ermittelt und beide Gesamtmaße miteinander addiert und als Maß für die Optimierung der Verstärkung und/oder der Nachstellzeit und/oder der Vorhaltzeit der Eliminierung der Abweichung dieser Temperaturdifferenz über die obere bzw. unter die untere Grenze ihres Sollwert-Bandes das Verhältnis dieser Summe zum Gesamtmaß der der Differenz von oberer und unterer Grenze des Sollwert-Bandes entsprechenden Differenz von Vorlauf- und Rücklauftemperatur des Wärmeträgermediums oder dessen Reziprokwert gewählt wird.

11. Verfahren nach Anspruch 9 oder 10, dadurch gekennzeichnet, daß die Verstärkung und/oder die Nachstellzeit und/oder die Vorhaltzeit der Eliminierung der Abweichung der Differenz von Vorlauf- und Rücklauftemperatur des Wärmeträgermediums über die obere bzw. unter die untere Grenze ihres Sollwert-Bandes verändert wird, wenn das Verhältnis der beiden Gesamtmaße einen vorbestimmten Wert überschreitet.

12. Verfahren nach Anspruch 9 oder 10, dadurch gekennzeichnet, daß die Verstärkung und/oder die Nachstellzeit und/oder die Vorhaltzeit der Eliminierung der Abweichung der Differenz von Vorlauf- und Rücklauftemperatur des Wärmeträgermediums über die obere bzw. unter die untere Grenze ihres Sollwert-Bandes so verändert wird, daß das Verhältnis der beiden Gesamtmaße einen vorbestimmten Wert nicht überschreitet.

13. Verfahren nach einem der vorhergehenden Ansprüche, dadurch gekennzeichnet, daß die obere und/oder die untere Grenze des Sollwert-Bandes der Differenz von Vorlauf- und Rücklauftemperatur des Wärmeträgermediums herstellerseitig leistungsfähigkeitsbedingt und/oder nutzerbedürfnisbezogen gewählt wird.

14. Verfahren nach einem der vorhergehenden Ansprüche, bei dem die Veränderung der dem im Heizungs- bzw. Kühlmittelvorlauf befindlichen Wärmeträgermedium praktisch ohne Durchgang durch einen Speicher für dieses zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme- bzw. Kälteerzeuger beendet und bei Auftreten einer Abweichung der Differenz von Vorlauf- und Rücklauftemperatur des Wärmeträgermediums unter die einer für Heizbetrieb einem sich nach einer vorgegebenen Zeitspanne nach Ausschaltung der Zufuhr von Betriebsenergie zum Wärme- bzw. Kälteerzeuger einstellenden Maß unter einem vorgegebenen Referenzwert
für die Rücklauftemperatur des Wärmeträgermediums und für Kühlbetrieb einem sich nach einer vorgegebenen Zeitspanne nach Ausschaltung der Zufuhr von Betriebsenergie zum Wärme- bzw. Kälteerzeuger einstellenden Maß über einen vorgegebenen Referenzwert
für die Vorlauftemperatur des Wärmeträgermediums (Negativ-Temperaturdifferenz) entsprechende untere Grenze ihres vorgegebenen
Sollwert-Bandes die Zufuhr von Betriebsenergie zum Wärme- bzw.
Kälteerzeuger aufgenommen wird.

15. Verfahren nach einem der vorhergehenden Ansprüche, bei dem die
Veränderung der dem im Heizungs- bzw. Kühlmittelvorlauf befindlichen Wärmeträgermedium praktisch ohne Durchgang durch einen
Speicher für dieses zugeführten Wärme- bzw. Kälteleistung durch
Ein- und Ausschaltung der Zufuhr der Betriebsenergie zum
Wärme- bzw. Kälteerzeuger erfolgt, dadurch gekennzeichnet, daß
bei Auftreten einer Abweichung der Differenz von Vorlauf- und
Rücklauftemperatur des Wärmeträgermediums über die obere Grenze
ihres vorgegebenen Sollwert-Bandes hinaus das Zeitverhältniss
der Ein- zur Ausschaltung der Zufuhr von Betriebsenergie zum
Wärme- bzw. Kälteerzeuger entsprechend dem Maß der Abweichung
verringert wird und bei Auftreten einer Abweichung der Differenz
von Vorlauf- und Rücklauftemperatur des Wärmeträgermediums unter
die einer für Heizbetrieb einem sich nach einer vorgegebenen
Zeitspanne nach Ausschaltung der Zufuhr von Betriebsenergie zum
Wärme- bzw. Kälteerzeuger einstellenden Maß unter einem vorgegebenen Referenzwert für die Rücklauftemperatur des Wärmeträgermediums und für Kühlbetrieb einem sich nach einer vorgegebenen Zeitspanne nach Ausschaltung der Zufuhr von Betriebsenergie zum Wärme- bzw. Kälteerzeuger einstellenden Maß über einen vorgegebenen Referenzwert für die Vorlauftemperatur des Wärmeträgermediums (Negativ-Temperaturdifferenz) entsprechende untere Grenze ihres vorgegebenen Sollwert-Bandes das Zeitverhältnis der Ein- zur Ausschaltung der Zufuhr von Betriebsenergie zum Wärme- bzw. Kälteerzeuger entsprechend dem Maß der Abweichung erhöht wird.

16. Verfahren nach Anspruch 4, dadurch gekennzeichnet, daß bei Inbetriebnahme des Verfahrens für Heizbetrieb oder für Kühlbetrieb bei voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimal möglichen Temperaturdifferenz und als kleinerer Sollwert eine Temperaturdifferenz willkürlich insbesondere dadurch gewählt wird, daß sie einem um ein willkürlich gewähltes Maß bei Heizbetrieb unter und bei Kühlbetrieb über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen Temperaturdifferenz gewählt wird.

17. Verfahren nach Anspruch 4 oder 16, dadurch gekennzeichnet, daß bei Heizbetrieb für Aufheizen nach einer Abkühlung bzw. bei Kühlbetrieb für Abkühlen nach einer Erwärmung bei voller Öffnung aller Drosseleinrichtungen die Differenz von Vorlauf- und Rücklauftemperatur des Wärmeträgermediums als minimale Temperaturdifferenz (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimalen Temperaturdifferenz und als kleinerer Sollwert eine Temperaturdifferenz willkürlich insbesondere dadurch gewählt wird, daß sie einem um ein willkürlich gewähltes Maß bei Heizbetrieb unter und bei Kühlbetrieb über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimalen Temperaturdifferenz gewählt wird.

18. Verfahren nach einem der Ansprüche 4 bis 17, dadurch gekennzeichnet, daß für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der minimal möglichen oder minimalen Differenz von Vorlauf- und Rücklauftemperatur des Wärmeträgermediums, vorzugsweise zwischen etwa dem 1,5- bis 2-fachen dieser Temperaturdifferenz, und als kleinerer Sollwert eine Temperaturdifferenz gewählt wird, die bei Heizbetrieb einem um ein vorgegebenes Maß unter und bei Kühlbetrieb um ein vorgegebenes Maß über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen bzw. minimalen Temperaturdifferenz gewählt wird.

19. Verfahren nach einem der Ansprüche 4 bis 18, dadurch gekennzeichnet, daß für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der minimal möglichen oder minimalen Differenz von Vorlauf- und Rücklauftemperatur des Wärmeträgermediums, vorzugsweise zwischen etwa dem 1,2- bis 1,5-fachen dieser Temperaturdifferenz, und als kleinerer Sollwert eine Temperaturdifferenz gewählt wird, die bei Heizbetrieb einem um ein vorgegebenes Maß unter und bei Kühlbetrieb um ein vorgegebenes Maß über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen bzw. minimalen Temperaturdifferenz gewählt wird.

20. Verfahren nach einem der Ansprüche 4 bis 19, dadurch gekennzeichnet, daß für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem vergleichsweise kleinen Vielfachen der minimal möglichen oder minimalen Differenz von Vorlauf- und Rücklauftemperatur des Wärmeträgermediums, vorzugsweise zwischen etwa dem 1- bis 1,2-fachen dieser Temperaturdifferenz, und als kleinerer Sollwert eine Temperaturdifferenz gewählt wird, die bei Heizbetrieb einem um ein vorgegebenes Maß unter und bei Kühlbetrieb um ein vorgegebenes Maß über einer vorgegebenen Referenztemperatur liegenden Wert entspricht, wobei dieses Maß vorzugsweise als ein durch den Reziprokwert des Multiplikators des den oberen Sollwert der Differenz von Vorlauf- und Rücklauftemperatur des Wärmeträgermediums bestimmenden Vielfachen gebildetes Vielfaches dieser minimal möglichen bzw. minimalen Temperaturdifferenz gewählt wird.

21. Verfahren nach einem der Ansprüche 4 bis 20 für Beheizung von Räumen, dadurch gekennzeichnet, daß für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend der minimal möglichen oder der minimalen Differenz von Vorlauf- und Rücklauftemperatur des Wärmeträgermediums und als kleinerer Sollwert eine Temperaturdifferenz gewählt wird, die einem um ein vorgegebenes Maß, das mit Vorzug dieser minimal möglichen bzw. minimalen Temperaturdifferenz entspricht, unter einer vorgegebenen Referenztemperatur liegenden Wert entspricht.

22. Verfahren nach einem der Ansprüche 1 bis 13, bei dem die Veränderung der dem im Heizungs- bzw. Kühlmittelvorlauf befindlichen Wärmeträgermedium mit oder ohne Durchgang durch einen Speicher für dieses zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme- bzw. Kälteerzeuger beendet und bei Auftreten einer Abweichung der Differenz von Vorlauf- und Rücklauftemperatur des Wärmeträgermediums unter die untere Grenze ihres vorgegebenen Sollwert-Bandes die Zufuhr von Betriebsenergie zum Wärme- bzw. Kälteerzeuger aufgenommen wird.

23. Verfahren nach einem der Ansprüche 1 bis 15, bei dem die Veränderung der dem im Heizungs- bzw. Kühlmittelvorlauf befindlichen Wärmeträgermedium mit oder ohne Durchgang durch einen Speicher für dieses zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung der Differenz von Vorlauf- und Rücklauftemperatur des Wärmeträgermediums über die obere Grenze ihres vorgegebenen Sollwert-Bandes hinaus das Zeitverhältnis der Ein- zur Ausschaltung der Zufuhr von Betriebsenergie zum Wärme- bzw. Kälteerzeuger entsprechend dem Maß der Abweichung der Differenz von Vorlauf- und Rücklauftemperatur des Wärmeträgermediums verringert wird und bei Auftreten einer Abweichung der Differenz von Vorlauf- und Rücklauftemperatur des Wärmeträgermediums unter die untere Grenze Ihres vorgegebenen Sollwert-Bandes das Zeitverhältnis der Ein- zur Ausschaltung der Zufuhr von Betriebsenergie zum Wärme- bzw. Kälteerzeuger entsprechend dem Maß der Abweichung der Differenz von Vorlauf- und Rücklauftemperatur des Wärmeträgermediums erhöht wird.

24. Verfahren nach Anspruch 23, dadurch gekennzeichnet, daß bei Inbetriebnahme des Verfahrens für Heizbetrieb oder für Kühlbetrieb bei voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend einem Vielfachen dieser minimal möglichen Temperaturdifferenz und der kleinere Sollwert dieser Temperaturdifferenz entsprechend einem Bruchteil dieser minimal möglichen Temperaturdifferenz, vorzugsweise entsprechend der um ein durch den Reziprokwert des Multiplikators des den größeren Sollwert dieser Temperaturdifferenz bestimmenden Vielfachen gebildetes Vielfaches verminderten minimal möglichen Temperaturdifferenz gewählt wird.

25. Verfahren nach Anspruch 23 oder 24, dadurch gekennzeichnet, daß bei Heizbetrieb für Aufheizen nach einer Abkühlung bzw. bei Kühlbetrieb für Abkühlen nach einer Erwärmung bei voller Öffnung aller Drosseleinrichtungen die Differenz von Vorlauf- und Rücklauftemperatur des Wärmeträgermediums als minimale Temperaturdifferenz (Anfahrtemperaturdifferenz) ermittelt und der größere Sollwert der Differenz von Vorlauf- und Rücklauftemperatur des Wärmeträgermediums entsprechend einem Vielfachen dieser minimalen Temperaturdifferenz und der kleinere Sollwert dieser Temperaturdifferenz entsprechend einem Bruchteil dieser minimalen Temperaturdifferenz, vorzugsweise entsprechend der um ein durch den Reziprokwert des Multiplikators des den größeren Sollwert dieser Temperaturdifferenz bestimmenden Vielfachen gebildetes Vielfaches verminderten minimalen Temperaturdifferenz, gewählt wird.

26. Verfahren nach einem der Ansprüche 23 bis 25, dadurch gekennzeichnet, daß für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen
der minimal möglichen oder minimalen Differenz von Vorlauf- und
Rücklauftemperatur des Wärmeträgermediums, vorzugsweise zwischen
etwa dem 1,5- bis 2-fachen dieser Temperaturdifferenz, und der
kleinere Sollwert dieser Temperaturdifferenz entsprechend einem
großen Bruchteil dieser minimal möglichen oder minimalen Temperaturdifferenz, vorzugsweise entsprechend der um ein durch den
Reziprokwert des Multiplikators des den größeren Sollwert dieser
Temperaturdifferenz bestimmenden Vielfachen gebildetes Vielfaches verminderten minimal möglichen bzw. minimalen Temperaturdifferenz, gewählt wird.

27. Verfahren nach einem der Ansprüche 23 bis 26, dadurch gekennzeichnet, daß für Normalbetrieb, bei dem für alle zu temperierenden Räume eine etwa gleiche Raumtemperatur von für gutes
Behaglichkeitsgefühl ausreichender Höhe aufrechtzuerhalten ist,
der größere Sollwert der Differenz von Vorlauf- und Rücklauftemperatur des Wärmeträgermediums entsprechend einem mittleren
Vielfachen der minimal möglichen oder minimalen Differenz von
Vorlauf- und Rücklauftemperatur des Wärmeträgermediums, vorzugsweise zwischen etwa dem 1,2- bis 1,5-fachen dieser Temperaturdifferenz, und der kleinere Sollwert dieser Temperaturdifferenz
entsprechend einem mittleren Bruchteil dieser minimal möglichen
oder minimalen Temperaturdifferenz, vorzugsweise entsprechend
der um ein durch den Reziprokwert des Multiplikators des den
größeren Sollwert dieser Temperaturdifferenz bestimmenden Vielfachen gebildetes Vielfaches verminderten minimal möglichen bzw.
minimalen Temperaturdifferenz, gewählt wird.

28. Verfahren nach einem der Ansprüche 23 bis 27, dadurch gekennzeichnet, daß für Nachtabsenkungs- bzw. Sparbetrieb, bei dem für
alle zu temperierenden Räume eine etwa gleiche Raumtemperatur
von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem vergleichsweise kleinen Vielfachen der minimal möglichen oder minimalen Differenz von Vorlauf- und Rücklauftemperatur des Wärmeträgermediums, vorzugsweise zwischen etwa dem 1- bis 1,2-fachen dieser Temperaturdifferenz, und der kleinere Sollwert dieser Temperaturdifferenz entsprechend einem vergleichsweise kleinen Bruchteil dieser minimal möglichen oder minimalen Temperaturdifferenz, vorzugsweise entsprechend der um ein durch den Reziprokwert des Multiplikators des den größeren Sollwert dieser Temperaturdifferenz bestimmenden Vielfachen gebildetes Vielfaches verminderten minimal möglichen bzw. minimalen Temperaturdifferenz, gewählt wird.

29. Verfahren nach einem der Ansprüche 23 bis 28 für Beheizung von Räumen, dadurch gekennzeichnet, daß für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend der minimal möglichen oder der minimalen Differenz von Vorlauf- und Rücklauftemperatur des Wärmeträgermediums und der kleinere Sollwert dieser Temperaturdifferenz geringfügig größer als deren Verschwindwert gewählt wird.

30. Verfahren nach einem der Ansprüche 1 bis 13, bei dem die Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger erfolgt, dadurch gekennzeichnet, daß bei Auftreten einer Abweichung der Differenz von Vorlauf- und Rücklauftemperatur des Wärmeträgermediums über die obere Grenze ihres vorgegebenen Sollwert-Bandes hinaus die Zufuhr von Betriebsenergie zum Wärme- bzw. Kälteerzeuger verringert und bei Auftreten einer Abweichung der Differenz von Vorlauf- und Rücklauftemperatur des Wärmeträgermediums unter die untere Grenze ihres vorgegebenen Sollwert-Bandes die Zufuhr von Betriebsenergie zum Wärme- bzw. Kälteerzeuger erhöht wird.

31. Verfahren nach Anspruch 30, dadurch gekennzeichnet, daß bei Inbetriebnahme des Verfahrens für Heizbetrieb oder für Kühlbetrieb bei Vollast und voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimal möglichen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimal möglichen Temperaturdifferenz bzw. diesem Vielfachen bzw. Bruchteil derselben kleineren oder höchstens gleichen Vielfachen bzw. Bruchteil dieser minimal möglichen Temperaturdifferenz gewählt wird.

32. Verfahren nach Anspruch 30 oder 31, dadurch gekennzeichnet, daß bei Heizbetrieb für Aufheizen nach einer Abkühlung bzw. bei Kühlbetrieb für Abkühlen nach einer Erwärmung bei Vollast und voller Öffnung aller Drosseleinrichtungen die Differenz von Vorlauf- und Rücklauftemperatur des Wärmeträgermediums als minimale Temperaturdifferenz (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimalen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimalen Temperaturdifferenz bzw. diesem Vielfachen bzw. Bruchteil derselben kleineren oder höchstens gleichen Vielfachen bzw. Bruchteil dieser minimalen Temperaturdifferenz gewählt wird.

33. Verfahren nach einem der Ansprüche 30 bis 32, dadurch gekennzeichnet, daß bei Inbetriebnahme des Verfahrens für Heizbetrieb oder für Kühlbetrieb die zeitliche Änderung der Vorlauf- und/oder der Rücklauftemperatur und/oder der Differenz von Vorlauf- und Rücklauftemperatur des Wärmeträgermediums bei Vollast und voller Öffnung aller Drosseleinrichtungen als minimal mögliche Temperaturdifferenz (Inbetriebnahmetemperaturdifferenz) oder bei Heizbetrieb für Aufheizen nach einer Abkühlung bzw. bei Kühlbetrieb für Abkühlen nach einer Erwärmung die zeitliche Änderung der Vorlauf- und/oder der Rücklauftemperatur und/oder der Differenz von Vorlauf- und Rücklauftemperatur des Wärmeträgermediums bei Vollast und voller Öffnung aller Drosseleinrichtungen als minimale Temperaturdifferenz (Anfahrtemperaturdifferenz) ermittelt und der größere und der kleinere Sollwert der Differenz von Vorlauf- und Rücklauftemperatur des Wärmeträgermediums entsprechend dem Maß dieser zeitlichen Änderung der Vorlauf- und/oder der Rücklauftemperatur und/oder der Differenz von Vorlauf- und Rücklauftemperatur des Wärmeträgermediums verändert wird, indem bei größerer zeitlicher Änderung der Vorlauf- und/oder der Rücklauftemperatur und/oder dieser Temperaturdifferenz beide Sollwerte um einen größeren Betrag und bei kleinerer zeitlicher Änderung der Vorlauf- und/oder der Rücklauftemperatur und/oder dieser Temperaturdifferenz um einen geringeren Betrag gegenüber der minimal möglichen bzw. minimalen Temperaturdifferenz verringert werden.

34. Verfahren nach einem der Ansprüche 30 bis 33, dadurch gekennzeichnet, daß nach einer Veränderung der Zufuhr von Betriebsenergie zum Wärme- bzw. Kälteerzeuger die sich unmittelbar danach oder nach einer vorgegebenen Zeitspanne einstellende Differenz von Vorlauf- und Rücklauftemperatur des Wärmeträgermediums (Betriebstemperaturdifferenz) als der für diese Veränderung bestimmenden Grenze des vorgegebenen Sollwert-Bandes der Differenz von Vorlauf- und Rücklauftemperatur des Wärmeträgermediums entsprechende neue Grenze dieses Sollwert-Bandes gewählt wird.

35. Verfahren nach Anspruch 34, dadurch gekennzeichnet, daß nach einer Veränderung der Zufuhr von Betriebsenergie zum Wärme- bzw. Kälteerzeuger die der sich unmittelbar danach oder nach einer vorgegebenen Zeitspanne als der für diese Veränderung bestimmenden Grenze des vorgegebenen Sollwert-Bandes der Differenz von Vorlauf- und Rücklauftemperatur des Wärmeträgermediums einstellenden Temperaturdifferenz (Betriebstemperaturdifferenz) nicht entsprechende Grenze dieses Sollwert-Bandes im gleichen Sinne wie die für die Veränderung der Zufuhr von Betriebsenergie zum Wärme- bzw. Kälteerzeuger bestimmende Grenze dieses Sollwert-Bandes und vorzugsweise proportional der Veränderung derselben verändert wird.

36. Verfahren nach einem der Ansprüche 30 bis 35, dadurch gekennzeichnet, daß für Komfortbetrieb, bei dem für mindestens einen zu temperierenden Raum eine im Vergleich zu dem bzw. den zu temperierenden Raum bzw. Räumen vergleichsweise besonders hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der sich unmittelbar nach einer Veränderung der Zufuhr von Betriebsenergie zum Wärme- bzw. Kälteerzeuger oder nach einer vorgegebenen Zeitspanne nach dieser einstellenden Temperaturdifferenz von Vorlauf- und Rücklauftemperatur des Wärmeträgermediums (Betriebstemperaturdifferenz), vorzugsweise zwischen etwa dem 1,5- bis 2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem großen Vielfachen und der um ein durch den Reziprokwert des Multiplikators desselben gebildetes Vielfaches der Betriebstemperaturdifferenz verminderten Betriebstemperaturdifferenz, gewählt wird.

37. Verfahren nach einem der Ansprüche 31 bis 37, dadurch gekennzeichnet, daß für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der sich unmittelbar nach einer Veränderung der Zufuhr von Betriebsenergie zum Wärme- bzw. Kälteerzeuger oder nach einer vorgegebenen Zeitspanne nach dieser einstellenden Temperaturdifferenz von Vorlauf- und Rücklauftemperatur des Wärmeträgermediums (Betriebstemperaturdifferenz), vorzugsweise zwischen etwa dem 1,2- bis 1,5-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem mittleren Vielfachen und der um ein durch den Reziprokwert des Multiplikators desselben gebildetes Vielfaches der Betriebstemperaturdifferenz verminderten Betriebstemperaturdifferenz, gewählt wird.

38. Verfahren nach einem der Ansprüche 30 bis 37, dadurch gekennzeichnet, daß für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem kleinen Vielfachen der sich unmittelbar nach einer Veränderung der Zufuhr von Betriebsenergie zum Wärme- bzw. Kälteerzeuger oder nach einer vorgegebenen Zeitspanne nach dieser einstellenden Temperaturdifferenz von Vorlauf- und Rücklauftemperatur des Wärmeträgermediums (Betriebstemperaturdifferenz), vorzugsweise zwischen etwa dem 1- bis 1,2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem kleinen Vielfachen und der um ein durch den Reziprokwert des Multiplikators desselben gebildetes Vielfaches der Betriebstemperaturdifferenz verminderten Betriebstemperaturdifferenz, gewählt wird.

39. Verfahren nach einem der Ansprüche 30 bis 38 für Beheizung von Räumen, dadurch gekennzeichnet, daß für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend einem Bruchteil der minimal möglichen oder minimalen Differenz von Vorlauf- und Rücklauftemperatur des Wärmeträgermediums und der kleinere Sollwert dieser Temperaturdifferenz entsprechend einem im Vergleich zu diesem den größeren Sollwert dieser Temperaturdifferenz bestimmenden Bruchteil geringeren oder höchstens gleichen Bruchteil der minimal möglichen oder minimalen Differenz von Vorlauf- und Rücklauftemperatur des Wärmeträgermediums gewählt wird.

40. Verfahren nach einem der Ansprüche 30 bis 39, dadurch gekennzeichnet, daß die untere Grenze des vorgegebenen Sollwert-Bandes der Differenz von Vorlauf- und Rücklauftemperatur des Wärmeträgermediums entsprechend der oberen Grenze desselben gewählt wird.

41. Verfahren nach einem der Ansprüche 1 bis 13, bei dem die Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, dadurch gekennzeichnet, daß bei Auftreten einer Abweichung der Differenz von Vorlauf- und Rücklauftemperatur des Wärmeträgermediums über die obere oder unter die untere Grenze ihres vorgegebenen Sollwert-. Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert und die sich unmittelbar danach oder nach einer vorgegebenen Zeitspanne einstellende Differenz von Vorlauf- und Rücklauftemperatur ermittelt und mit ihr als der Grenze des Sollwert-Bandes der Differenz von Vorlauf- und Rücklauftemperatur, die für die vorangegangene Abweichung bestimmend · war, entsprechender neuer Grenze dieses Sollwert-Bandes diese Veränderung der Zufuhr von Wärme- bzw. Kälteleistung zum im Heizungs- bzw. Kühlmittelvorlauf befindlichen Wärmeträgermedium wiederholt wird, sobald wiederum eine Abweichung der Differenz von Vorlauf- und Rücklauftemperatur über die obere oder unter die untere Grenze dieses durch diese neue Grenze bestimmten Sollwert-Bandes derselben auftritt.

42. Verfahren nach Anspruch 41, dadurch gekennzeichnet, daß der Anteil des vom Wärme- bzw. Kälteerzeuger her in den Heizungs- bzw. Kühlmittelvorlauf eingespeisten Massenstroms zum Gesamtmassenstrom bei Auftreten einer Abweichung der Differenz von Vorlauf- und Rücklauftemperatur des Wärmeträgermediums über die obere Grenze ihres vorgegebenen Sollwert-Bandes hinaus verringert und bei Auftreten einer Abweichung der Differenz von Vorlauf- und Rücklauftemperatur unter die untere Grenze ihres vorgegebenen Sollwert-Bandes vergrößert wird.

43. Verfahren nach einem der Ansprüche 1 bis 13, bei dem die Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, dadurch gekennzeichnet, daß bei Auftreten einer Abweichung der Differenz von Vorlauf- und Rücklauftemperatur des Wärmeträgermediums über die obere Grenze ihres vorgegebenen Sollwert-Bandes hinaus die dem im Heizungs- bzw. Kühlmittelvorlauf befindlichen Wärmeträgermedium zugeführte Wärme- bzw. Kälteleistung dadurch verringert wird, daß der Sollwert der Vorlauftemperatur des Wärmeträgermediums bei Heizbetrieb verringert und bei Kühlbetrieb erhöht wird, und bei Auftreten einer Abweichung der Differenz von Vorlauf- und Rücklauftemperatur des Wärmeträgermediums unter die untere Grenze ihres vorgegebenen Sollwert-Bandes die dem im Heizungs- bzw. Kühlmittelvorlauf befindlichen Wärmeträgermedium zugeführte Wärme- bzw. Kälteleistung dadurch vergrößert wird, daß der Sollwert der Vorlauftemperatur des Wärmeträgermediums bei Heizbetrieb erhöht und bei Kühlbetrieb verringert wird.

44. Verfahren nach einem der Ansprüche 41 bis 43, dadurch gekennzeichnet, daß bei Inbetriebnahme des Verfahrens für Heizbetrieb oder für Kühlbetrieb bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimal möglichen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimal möglichen Temperaturdifferenz bzw. diesem Vielfachen bzw. Bruchteil derselben kleineren oder höchstens gleichen Vielfachen bzw. Bruchteil dieser minimal möglichen Temperaturdifferenz gewählt wird.

45. Verfahren nach einem der Ansprüche 41 bis 44, <u>dadurch gekennzeichnet, daß</u> bei Heizbetrieb für Aufheizen nach einer Abkühlung bzw. bei Kühlbetrieb für Abkühlen nach einer Erwärmung bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen die Differenz von Vorlauf- und Rücklauftemperatur des Wärmeträgermediums als minimale Temperaturdifferenz (Anfahrtemperaturdifferenz) zu dem Zeitpunkt, zu dem nach einer Zeitspanne mit praktisch konstantem Wert dieser Differenz von Vorlauf- und Rücklauftemperatur erstmalig eine Vergrößerung derselben auftritt, ermittelt und der größere Sollwert der Differenz von Vorlauf- und Rücklauftemperatur des Wärmeträgermediums entsprechend dieser minimalen Temperaturdifferenz oder einem Vielfachen oder einem Bruchteil derselben und der kleinere Sollwert der Differenz von Vorlauf- und Rücklauftemperatur des Wärmeträgermediums entsprechend einem im Vergleich zu dieser minimalen Temperaturdifferenz bzw. diesem Vielfachen bzw. Bruchteil derselben kleineren oder höchstens gleichen Vielfachen bzw. Bruchteil dieser minimal möglichen Temperaturdifferenz gewählt wird.

46. Verfahren nach einem der Ansprüche 41 bis 45, dadurch gekennzeichnet, daß bei Inbetriebnahme des Verfahrens für Heizbetrieb oder für Kühlbetrieb die zeitliche Änderung der Vorlauf- und/oder der Rücklauftemperatur und/oder der Differenz von Vorlauf- und Rücklauftemperatur des Wärmeträgermediums bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als der minimal möglichen Temperaturdifferenz (Inbetriebnahmetemperaturdifferenz) oder bei Heizbetrieb für Aufheizen nach einer Abkühlung bzw. bei Kühlbetrieb für Abkühlen nach einer Erwärmung die zeitliche Änderung der Vorlauf- und/oder der Rücklauftemperatur und/oder der Differenz von Vorlauf- und Rücklauftemperatur des Wärmeträgermediums bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung und voller Öffnung aller Drosseleinrichtungen als minimale Temperaturdifferenz (Anfahrtemperaturdifferenz) ermittelt und der größere und der kleinere Sollwert der Differenz von Vorlauf- und Rücklauftemperatur des Wärmeträgermediums entsprechend dem Maß dieser zeitlichen Änderung der Vorlauf- und/oder der Rücklauftemperatur und/oder der Differenz von Vorlauf- und Rücklauftemperatur des Wärmeträgermediums verändert wird, indem bei größerer zeitlicher Änderung der Vorlauf- und/oder der Rücklauftemperatur und/oder dieser Temperaturdifferenz beide Sollwerte um einen größeren Betrag und bei kleinerer zeitlicher Änderung der Vorlauf- und/oder der Rücklauftemperatur und/oder dieser Temperaturdifferenz um einen geringeren Betrag gegenüber der minimal möglichen bzw. minimalen Temperaturdifferenz verringert werden.

47. Verfahren nach einem der Ansprüche 41 bis 46, dadurch gekennzeichnet, daß nach einer Veränderung einer der Grenzen des Sollwert-Bandes der Differenz von Vorlauf- und Rücklauftemperatur bzw. des Sollwertes der Vorlauftemperatur des Wärmeträgermediums die sich unmittelbar danach oder nach einer vorgegebenen Zeitspanne einstellende Differenz von Vorlauf- und Rücklauftemperatur des Wärmeträgermediums (Betriebstemperaturdifferenz) als der für diese Veränderung bestimmenden Grenze des vorgegebenen Sollwert-Bandes der Differenz von Vorlauf- und Rücklauftemperatur des Wärmeträgermediums entsprechende neue Grenze dieses Sollwert-Bandes gewählt wird.

48. Verfahren nach Anspruch 47, dadurch gekennzeichnet, daß nach einer Veränderung einer der Grenzen des Sollwert-Bandes der Differenz von Vorlauf- und Rücklauftemperatur bzw. des Sollwertes der Vorlauftemperatur des Wärmeträgermediums die der sich unmittelbar danach oder nach einer vorgegebenen Zeitspanne als der für diese Veränderung bestimmenden Grenze des vorgegebenen Sollwert-Bandes der Differenz von Vorlauf- und Rücklauftemperatur des Wärmeträgermediums einstellenden Temperaturdifferenz (Betriebstemperaturdifferenz) nicht entsprechende Grenze dieses Sollwert-Bandes im gleichen Sinne wie die für die Veränderung einer der Grenzen des Sollwert-Bandes der Differenz von Vorlauf- und Rücklauftemperatur bzw. des Sollwertes der Vorlauftemperatur des Wärmeträgermediums bestimmende Grenze und vorzugsweise proportional der Veränderung der- bzw. desselben verändert wird.

49. Verfahren nach einem der Ansprüche 41 bis 48, dadurch gekenn-zeichnet, daß für Komfortbetrieb, bei dem für mindestens einen zu temperierenden Raum eine im Vergleich zu dem bzw. den anderen zu temperierenden-Raum bzw. Räumen vergleichsweise hohe bzw. niedrige Raumtemperatur aufrechtzuerhalten ist, der größere Sollwert der Differenz von Vorlauf- und Rücklauftemperatur des Wärmeträgermediums entsprechend einem großen Vielfachen der sich unmittelbar nach einer Veränderung einer der Grenzen des Soll-wert-Bandes der Differenz von Vorlauf- und Rücklauftemperatur bzw. des Sollwertes der Vorlauftemperatur des Wärmeträgermediums oder nach einer vorgegebenen Zeitspanne nach dieser einstellenden Temperaturdifferenz von Vorlauf- und Rücklauftempera-tur des Wärmeträgermediums (Betriebstemperaturdifferenz), vor-zugsweise zwischen etwa dem 1,5- bis 2-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Be-triebstemperaturdifferenz, vorzugsweise entsprechend der Diffe-renz zwischen diesem großen Vielfachen und der um ein durch den Reziprokwert des Multiplikators desselben gebildetes Vielfaches der Betriebstemperaturdifferenz verminderten Betriebstemperaturdifferenz, gewählt wird.

50. Verfahren nach einem der Ansprüche 41 bis 49, dadurch gekenn-zeichnet, daß für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Differenz von Vorlauf- und Rücklauftemperatur des Wärmeträgermediums entsprechend einem mittleren Vielfachen der sich unmittelbar nach einer Veränderung einer der Grenzen des Sollwert-Bandes der Differenz von Vorlauf- und Rücklauftemperatur bzw. des Sollwertes der Vorlauftemperatur des Wärmeträgermediums oder nach einer vorgegebenen Zeitspanne nach dieser einstellenden Temperaturdifferenz von Vorlauf- und Rück-lauftemperatur des Wärmeträgermediums (Betriebstemperaturdiffe-

renz), vorzugsweise zwischen etwa dem 1,2- bis 1,5-fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem mittleren Vielfachen und der um ein durch den Reziprokwert des Multiplikators desselben gebildetes Vielfaches der Betriebstemperaturdifferenz verminderten Betriebstemperaturdifferenz, gewählt wird.

51. Verfahren nach einem der Ansprüche 41 bis 50, dadurch gekennzeichnet, daß für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Differenz von Vorlauf- und Rücklauftemperatur des Wärmeträgermediums entsprechend einem kleinen Vielfachen der sich unmittelbar nach einer Veränderung einer der Grenzen des Sollwert-Bandes der Differenz von Vorlauf- und Rücklauftemperatur bzw des Sollwertes der Vorlauftemperatur des Wärmeträgermediums oder nach einer vorgegebenen Zeitspanne nach dieser einstellenden Temperaturdifferenz von Vorlauf- und Rücklauftemperatur des Wärmeträgermediums (Betriebstemperaturdifferenz), vorzugsweise zwischen etwa dem 1- bis 1,2- fachen dieser Betriebstemperaturdifferenz, und der kleinere Sollwert der Differenz von Vorlauf- und Rücklauftemperatur des Wärmeträgermediums entsprechend einem vergleichsweise kleineren Vielfachen der Betriebstemperaturdifferenz, vorzugsweise entsprechend der Differenz zwischen diesem kleinen Vielfachen und der um ein durch den Reziprokwert des Multiplikators desselben gebildetes Vielfaches der Betriebstemperaturdifferenz verminderten Betriebstemperaturdifferenz, gewählt wird.

52. Verfahren nach einem der Ansprüche 41 bis 51 für Beheizung von Räumen, dadurch gekennzeichnet, daß für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Differenz von Vorlauf- und Rücklauftemperatur des Wärmeträgermediums entsprechend einem Bruchteil der minimal möglichen oder minimalen Differenz von Vorlauf- und Rücklauftemperatur des Wärmeträgermediums und der kleinere Sollwert dieser Temperaturdifferenz entsprechend einem im Vergleich zu diesem den größeren Sollwert dieser Temperaturdifferenz bestimmenden Bruchteil geringeren oder höchstens gleichen Bruchteil der minimal möglichen oder minimalen Differenz von Vorlauf- und Rücklauftemperatur des Wärmeträgermediums gewählt wird.

53. Verfahren nach einem der Ansprüche 41 bis 52, dadurch gekennzeichnet, daß die untere Grenze des vorgegebenen Sollwert-Bandes der Differenz von Vorlauf- und Rücklauftemperatur des Wärmeträgermediums entsprechend der oberen Grenze desselben gewählt wird.

54. Verfahren nach einem der vorhergehenden Ansprüche, dadurch gekennzeichnet, daß bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) und bei Heizbetrieb für Aufheizen nach einer Abkühlung bzw. bei Kühlbetrieb für Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das
Verhältnis von eingespeistem Massenstrom zum Gesamtmassenstrom
bestimmenden Organs der Mehrwege-Mischeinrichtung sowie jeweils
voller Öffnung aller Drosseleinrichtungen die Differenz von Vorlauf- und Rücklauftemperatur des Wärmeträgermediums als minimal
mögliche oder minimale Temperaturdifferenz (Anfahrtemperaturdifferenz) ermittelt und bei Auftreten einer Abweichung der
minimalen Temperaturdifferenz (Anfahrtemperaturdifferenz) von
der minimal möglichen Temperaturdifferenz (Inbetriebnahmetemperaturdifferenz) das vorgegebene Sollwert-Band der Differenz von
Vorlauf- und Rücklauftemperatur des Wärmeträgermediums in Abhängigkeit vom Verhältnis von minimaler zu minimal möglicher
Differenz von Vorlauf- und Rücklauftemperatur des Wärmeträgermediums verändert wird.

55. Verfahren nach einem der vorhergehenden Ansprüche, dadurch gekennzeichnet, daß bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her
vollen Gesamtmassenstrom des Wärmeträgermediums zuspeisender
Stellung des das Verhältnis von eingespeistem Massenstrom zu
Ge-samtmassenstrom bestimmenden Organs der Mehrwege-Mischein-
richtung sowie jeweils voller Öffnung aller Drosseleinrichtungen
die Differenz von Vorlauf- und Rücklauftemperatur des Wärmeträgermediums als minimal mögliche Temperaturdifferenz (Inbetriebnahmetemperaturdifferenz) und bei Heizbetrieb für Aufheizen
nach einer Abkühlung bzw. bei Kühlbetrieb für Abkühlen nach
einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das
Verhältnis von eingespeistem Massenstrom zu Gesamtmassenstrom
bestimmenden Organs der Mehrwege-Mischeinrichtung sowie jeweils
voller Öffnung aller Drosseleinrichtungen die Differenz von Vorlauf- und Rücklauftemperatur des Wärmeträgermediums als minimale Temperaturdifferenz (Anfahrtemperaturdifferenz) ermittelt und bei Auftreten einer vorbestimmten Abweichung der minimalen Temperaturdifferenz (Anfahrtemperaturdifferenz) von der minimal möglichen Temperaturdifferenz (Inbetriebnahmetemperaturdifferenz) diese Unregelmäßigkeit optisch und/oder akustisch wahrnehmbar gemacht wird.

56. Verfahren nach einem der vorhergehenden Ansprüche, dadurch gekennzeichnet, daß bei Fehlen einer Abweichung der Differenz von Vorlauf- und Rücklauftemperatur des Wärmeträgermediums über die obere Grenze ihres Sollwert-Bandes hinaus und/oder bei Fehlen einer Abweichung der Differenz von Vorlauf- und Rücklauftemperatur des Wärmeträgermediums über die obere Grenze ihres Sollwert-Bandes hinaus innerhalb einer vorgegebenen Zeitspanne diese Unregelmäßigkeit optisch und/oder akustisch wahrnehmbar gemacht wird.

57. Verfahren nach einem der vorhergehenden Ansprüche, dadurch gekennzeichnet, daß über eine vorbestimmte Zeitspanne die Anzahl der im Betrieb auftretenden Abweichungen der Differenz von Vorlauf- und Rücklauftemperatur des Wärmeträgermediums über die obere und/oder unter die untere Grenze ihres Sollwert-Bandes und/oder die Anzahl der im Betrieb auftretenden Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums gemessen und entsprechend der Abweichung dieser Anzahl von einer vorgegebenen Zahl solcher Abweichungen der Differenz von Vorlauf- und Rücklauftemperatur bzw. der im Betrieb auftretenden Veränderungen des Sollwertes der Vorlauftemperatur des Wärmeträgermediums bzw. Veränderungen dieser Wärme- bzw. Kälteleistungszufuhr das Sollwert-Band der Differenz von Vorlauf- und Rücklauftemperatur des Wärmeträgermediums verändert wird.

58. Verfahren nach Anspruch 57, dadurch gekennzeichnet, daß bei Messung einer gegenüber der vorgegebenen Zahl von Abweichungen der Differenz von Vorlauf- und Rücklauftemperatur des Wärmeträgermediums über die obere und/oder unter die untere Grenze ihres Sollwert-Bandes und/oder der Anzahl der Veränderungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums größeren Anzahl solcher Abweichungen der Differenz von Vorlauf- und Rücklauftemperatur bzw. Veränderungen dieser Wärme- bzw. Kälteleistungszufuhr bzw. der im Betrieb auftretenden Veränderungen des Sollwertes der Vorlauftemperatur des Wärmeträgermediums die obere und/oder die untere Grenze des Sollwert-Bandes der Differenz von Vorlauf- und Rücklauftemperatur des Wärmeträgermediums in Richtung einer Vergrößerung der Differenz dieser beiden Grenzen verändert und bei Messung einer gegenüber der vorgegebenen Zahl von Abweichungen der Differenz von Vorlauf- und Rücklauftemperatur des Wärmeträgermediums über die obere und/oder unter die untere Grenze ihres Sollwert-Bandes und/oder der Anzahl der Veränderungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums geringeren Anzahl solcher Abweichungen der Differenz von Vorlauf- und Rücklauftemperatur des Wärmeträgermediums bzw. Veränderungen dieser Wärme- bzw. Kälteleistungszufuhr bzw. Veränderungen des Sollwertes der Vorlauftemperatur des Wärmeträgermediums die obere und/oder die untere Grenze des Sollwert-Bandes der Differenz von Vorlauf- und Rücklauftemperatur des Wärmeträgermediums in Richtung einer Verringerung der Differenz dieser beiden Grenzen verändert wird.

59. Verfahren nach einem der Ansprüche 20, 21, 28, 29, oder 38 bis 40 oder 51 bis 58, dadurch gekennzeichnet, daß für den Beginn einer Abkühlung und/oder für den Beginn einer Erwärmung ein Sollwert-Band der Differenz von Vorlauf- und Rücklauftemperatur des Wärmeträgermediums mit einem bei einer nur einen Bruchteil der für Tagesbetrieb zur Wirkung kommenden Differenz von Vorlauf- und Rücklauftemperatur minimal möglichen Unterschied zwischen der oberen und unteren Grenze dieses Sollwert-Bandes mit einer zeitlichen Toleranzschwelle vorgegeben wird.

60. Verfahren nach einem der vorhergehenden Ansprüche, dadurch gekennzeichnet, daß kontinuierlich oder in vorbestimmten Zeitabständen der im Heizungs- bzw. Kühlmittelvorlauf bzw. -rücklauf fließende Gesamtmassenstrom des Wärmeträgermediums gemessen und gewünschtenfalls optisch und/oder akustisch wahrnehmbar gemacht wird.

61. Verfahren nach Anspruch 60, dadurch gekennzeichnet, daß kontinuierlich oder in vorbestimmten Zeitabständen aus dem aus den Messwerten von Vorlauf- und Rücklauftemperatur ermittelten Differenzwert dieser beiden Temperaturen des Wärmeträgermediums und dem Messwert des im Heizungs- bzw. Kühlmittelvorlauf bzw. -rücklauf fließenden Gesamtmassenstroms desselben ein Messwert der in den Heizungs- bzw. Kühlmittelvorlauf eingespeisten Wärme- bzw. Kälteleistung gebildet und dieser gewünschtenfalls optisch und/oder akustisch wahrnehmbar gemacht wird.

FIG. 1

# FIG.2

# FIG.3